(19) Europäisches Patentamt
European Patent Office
Office européen des brevets

(11) EP 2 617 786 B1

# (12) EUROPEAN PATENT SPECIFICATION

(45) Date of publication and mention of the grant of the patent:
**08.04.2015 Bulletin 2015/15**

(21) Application number: **11825210.5**

(22) Date of filing: **14.09.2011**

(51) Int Cl.:
***C09D 183/04** (2006.01)* ***B05D 5/00** (2006.01)*
***B05D 7/24** (2006.01)* ***C09D 5/00** (2006.01)*
***C09D 5/08** (2006.01)* ***C09D 7/12** (2006.01)*
***C09D 183/06** (2006.01)* ***C09D 183/14** (2006.01)*
***C09D 4/00** (2006.01)*

(86) International application number:
**PCT/JP2011/071015**

(87) International publication number:
**WO 2012/036210 (22.03.2012 Gazette 2012/12)**

## (54) AQUEOUS COATING COMPOSITION AND CORROSION PREVENTION METHOD USING SAID AQUEOUS COATING COMPOSITION

WÄSSRIGE BESCHICHTUNGSZUSAMMENSETZUNG UND KORROSIONSSCHUTZVERFAHREN UNTER VERWENDUNG DER WÄSSRIGEN BESCHICHTUNGSZUSAMMENSETZUNG

COMPOSITION DE REVÊTEMENT AQUEUSE ET PROCÉDÉ DE PRÉVENTION DE LA CORROSION UTILISANT LADITE COMPOSITION DE REVÊTEMENT AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2010 JP 2010205319**

(43) Date of publication of application:
**24.07.2013 Bulletin 2013/30**

(73) Proprietor: **Chugoku Marine Paints, Ltd.**
**Hiroshima 739-0652 (JP)**

(72) Inventors:
- **OKADA, Masamitsu**
  **Otake-shi, Hiroshima 739-0652 (JP)**
- **ENDO, Isao**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(56) References cited:
**JP-A- 5 263 069** **JP-A- 7 209 504**
**JP-A- 10 060 375** **JP-A- 11 071 682**
**JP-A- 2000 095 999** **JP-A- 2007 262 257**
**JP-A- 2009 091 545** **US-B2- 6 767 982**

- **DATABASE WPI Week 199439 Thomson Scientific, London, GB; AN 1994-313926 XP002720108, & JP H06 240207 A (MATSUSHITA ELECTRIC WORKS LTD) 30 August 1994 (1994-08-30)**
- **DATABASE WPI Week 199819 Thomson Scientific, London, GB; AN 1998-213047 XP002720109, & JP H10 60375 A (TOSHIBA SILICONE KK) 3 March 1998 (1998-03-03)**
- **DATABASE WPI Week 201004 Thomson Scientific, London, GB; AN 2009-H16052 XP002720110, & KR 2009 0031292 A (SHOKUBAI KASEI KOGYO KK) 25 March 2009 (2009-03-25) & JP 2009 091545 A (JGC CATALYSTS & CHEMICALS LTD) 30 April 2009 (2009-04-30)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to aqueous coating composition, and more particularly to an aqueous coating composition (aqueousbinder composition), that is a binder composition, or an aqueous coating composition (aqueous rust-preventive coating composition), that is a rust-preventive coating composition.

Further, the present invention relates to a rust prevention coating method for a base such as a steel material, using the aqueous coating composition such as an aqueous rust-preventive coating composition.

### Background Art

Conventional solvent-based coating compositions include various volatile organic solvents (organic solvents) in order to improve dispersibility of a binder such as a polymer or in order to control viscosities of the compositions. In the preparation of a polymer-based component of a binder, an organic solvent is sometimes used as a solvent. On that account, the organic solvent is sometimes included together with the polymer-based component that is a binder in the coating compositions.

Also in coating compositions including a hydrolysis condensate (polyorganosiloxane) of a silane compound or a metal oxide as a binder, solvent-based compositions are the mainstream coating compositions. For example, a solvent-based rust-preventive coating composition including tetraethyl silicate (binder), zinc dust (rust-preventive pigment) and a large amount of an organic solvent is known.

In such a solvent-based coating composition, the organic solvent can dissolve the binder homogeneously, and therefore, excessive thickening or occurrence of a non-dissolved substance (gel) can be reduced. That is to say, it is thought that the organic solvent contributes to inhibiting local deterioration reaction or decomposition reaction of the coating composition, said reaction being liable to take place in the excessively thickened portion or the non-dissolved substance (gel). Thus, the organic solvent can chemically stabilize the coating composition. Moreover, the organic solvent has a function of maintaining the low viscosity of the composition by virtue of dilution effect, and hence, application of the composition can be easily carried out by using publicly known various methods. Further, when the solvent-based coating composition is applied to a base, the organic solvent vaporizes efficiently from the composition applied, and hence, the coating composition is cured in a relatively short time to form a coating film.

The solvent-based coating compositions including a hydrolysis condensate of a silane compound as a binder are favorably used as solvent-based binder compositions or solvent-based rust-preventive coating compositions. Uses of these compositions extend over many divergencies.

Examples of main uses of the solvent-based binder compositions include uses as coating agents used for surfaces of bases, such as mica plate, glass laminated sheet, glass sleeve, rubber, plastic and leather, binders for asbestos, anti-scattering curing agents or surface reinforcing agents for asbestos-containing spray materials, anti-scattering primary curing agents used in removal of asbestos-containing spray materials, metal-based rust-preventive pigments or pollution inhibitors or surface protective agents, stone material-based antifouling treatment agents or water repellants, heat-resistant coating materials, additives therefor, and binders and additives for various coating materials.

Examples of main uses of the solvent-based rust-preventive coating compositions including a binder include uses as coating compositions for primary rust prevention and thick-coating type inorganic zinc coating compositions (dry film thickness: e.g., 50 to 200 $\mu$m).

The primary rust-preventive coating compositions are used for the purpose of temporarily preventing rusting on the surface of steel used for automobiles, domestic electrical appliances, large steel structures (ships, bridges, plants, etc.), containers for transportation, land tanks, etc., during manufacturing or construction. Examples of the primary rust-preventive coating compositions include organic primary rust-preventive coating compositions, such as wash primer, non-zinc epoxy primer and epoxy zinc-rich primer, and inorganic zinc primary rust-preventive coating compositions. Of these, inorganic zinc primary rust-preventive coating compositions having excellent weldability are widely used.

The thick-coating type inorganic zinc coating compositions are used for cargo tanks and ballast tanks of ships such as chemical tankers and ships for exclusive use of methanol. These cargo tanks and ballast tanks are required to have resistance to cargos such as petroleum refining products and chemical products, resistance to corrosion by tank wash water (fresh water, seawater), mechanical properties that can sufficiently cope with strain of a steel plate caused by water pressure during pouring of ballast water or expansion and contraction of a steel material caused by temperature change, etc., and the thick-coating type inorganic zinc coating compositions exert these excellent properties. The thick-coating type inorganic zinc coating compositions are favorably used particularly for ballast tanks that are required to have long-term resistance to corrosion by seawater. The solvent-based thick-coating type inorganic zinc coating compositions including polyorganosiloxane are inferior to epoxy resin-based coating compositions in workability, properties such as coating film strength and flexibility, and characteristics such as long-term corrosion resistance. On that account,

the epoxy resin-based coating compositions are widely used as the thick-coating type inorganic zinc coating compositions at present.

The solvent-based coating compositions including a metal oxide as a binder are also used as various coating agents though they are not used so much as the coating compositions including polyorganosiloxane as a binder

On the other hand, VOC countermeasures (reduction of environmental burden) have been recently required in many countries. On that account, non-solvent or low-solvent coating compositions have been desired.

As a means to obtain the non-solvent or low-solvent coating compositions, for example, technique to obtain high solid coating compositions, such as increase in solids content of a binder such as a polymer or use of a reactive monomer as a diluent, has been proposed.

Further, technique to obtain aqueous coating compositions utilizing a method of using, as a diluent, water or a surface active agent instead of an organic solvent (water dispersion method, such as emulsifying method or suspending method) has been studied. In this method, the surface active agent has functions of facilitating dispersing of a binder in water and favorably maintaining the dispersed state for a certain period of time. The coating composition obtained by dispersing the binder in water by a compulsive method such as a method of using mechanical pressure in the presence of a surface active agent as above has good stability in the points that the degree of sedimentation of components such as a binder in the coating composition is low and the degree of thickening of the coating composition is low, but when a coating film is formed from the composition, a surface active agent remains in the film, and hence, topcoating adhesion properties are sometimes deteriorated. Accordingly, the binder is desired to be water-soluble so that no surface active agent shall need to be used.

On the other hand, such a coating composition is required to have, in addition to the water solubility, properties such as good curability and drying properties when the composition is formed into a film, but compatibility of these properties is extremely difficult. Further, a coating film formed from the composition is also required to have not only good water resistance, corrosion resistance and topcoating adhesion properties but also good weldability and cutting properties, but compatibility of them is also difficult.

In the existing circumstances, the coating compositions having aqueous system (aqueous coating compositions) cannot exhibit properties equal to those of the solvent-based coating compositions. Such aqueous coating compositions have been disclosed in patent literatures 1 to 9.

The coating compositions of the patent literatures enumerated below can be broadly divided into compositions in which the binder is a hydrolysis condensate (polyorganosiloxane) of a silane compound (patent literatures 1 to 6) and compositions in which the binder is a metal oxide sol (patent literatures 7 to 9). In the patent literatures 1 to 5, the binder included in the coating compositions is a hydrolysis condensate prepared from an alkoxysilane, and in the patent literature 6, the binder included in the coating composition is a hydrolysis condensate prepared from an amino group-containing silane coupling agent (amino group-containing silane compound).

In the patent literature 1 (JP-A-2002-121485), an aqueous composition for anticorrosive coating, which comprises organic functional silane including an alkoxy group and capable of being diluted with water and a wetting agent and which is used as a rust preventive for a metal substrate such as a steel fastener, has been disclosed.

In the patent literature 2 (JP-A-2000-144020), a rust-preventive coating agent in which phosphoric acid, phosphorous acid or hypophosphorous acid ion, and a sulfur-containing compound comprising a thiocarbonyl compound, a thiol compound, a sulfide or persulfuric acid ion are included in an aqueous solution including a silane coupling agent (e.g., specifically, various alkoxysilanes) and its hydrolysis condensate has been disclosed.

In the patent literature 3 (JP-A-2002-105401), an aqueous two-component type protective coating agent for steel materials, which includes a first component of water dispersibility including a binder obtained by reacting an amino group-containing alkoxysilane with an epoxy group-containing alkoxysilane in the presence of a relatively strong acid, and a pigment, and a second component comprising finely pulverized zinc dust, has been disclosed.

In the patent literature 4 (JP-A-2008-528741), a siloxane polymer (binder composition) having N-formyl group or the like, which is obtained by the reaction of an amino group-containing alkoxysilane with a formic acid ester, and a rust-preventive coating composition including the binder composition and an anticorrosive pigment such as zinc have been disclosed.

In the patent literature 5 (WO2008/003695), a two-component type coating composition including, in an aqueous solution, (a) an aqueous binder (first component) including a polymer or oligomer compound formed from a tetra-substituted alkoxysilane compound, a functional tri-substituted alkoxysilane compound, and if necessary, a colloidal silica water dispersing agent, and (b) a reactive filler (second component) such as zinc dust has been disclosed.

In the patent literature 6 (JP-A-2008-150537), a coating composition including, as a binder, a hydrolysis condensate prepared by the reaction of an amino group-containing silane coupling agent (amino group-containing silane compound) has been described, and specifically, an aqueous rust-preventive coating material including a water-soluble or hydrolyzable amino group-containing silane coupling agent as a binder and a metal pigment comprising at least one of tin and tin-containing alloys having white rust prevention properties and zinc has been disclosed.

Next, examples using a metal oxide sol as a binder are described. In the patent literature 7 (JP-B-1981-29904),

an inorganic film-forming composition comprising water- dispersible colloidal silica, urea or thiourea, water-soluble lithium polysilicate and zinc dust has been disclosed.

In the patent literature 8 (WO2008/128932), a coating composition including i) zinc dust and/or zinc alloy and ii) colloidal silica having been surface-treated with a silane compound under the specific conditions has been disclosed.

In the patent literature 9 (JP-B-2005-510584), an aqueous shop primer composition including an aqueous silica sol as a binder, and zinc dust or zinc alloy has been disclosed.

JP H06 240207 discloses a coating composition for metals comprising the product of hydrolysis of a halosilane, possibly in the presence of another, Silanol-functional, silane.

## Citation List

### Patent Literature

Patent literature 1: JP-A-2002-121485
Patent literature 2: JP-A-2000-144020
Patent literature 3: JP-A-2002-105401
Patent literature 4: JP-A-2008-528741
Patent literature 5: WO2008/003695
Patent literature 6: JP-A-2008-150537
Patent literature 7: JP-B-1981-29904
Patent literature 8: WO2008/128932
Patent literature 9: JP-A-2005-510584

## Summary of Invention

### Technical Problem

In any of the aqueous coating compositions of these patent literatures, however, there are problems of various properties, for example, a problem of drying properties such that long time curing or heating is necessary, as described below, and the range of use applications is limited.

First, when the binder is a hydrolysis condensate of an alkoxysilane compound, a by-product formed after the hydrolysis is an alcohol, and the by-product has low corrosion properties and irritation properties and has high volatility, so that it can be easily removed by distillation or the like, and the hydrolysis condensate can be easily purified, as described in the patent literatures 1 to 5. Further, there is an advantage that the hydrolysis condensate can be prepared by a reaction container or a reaction device in which storage or hydrolysis reaction is simply carried out, but in obtaining a hydrolysis condensate of a high molecular weight, the degree of freedom in the design of a product is not so high because the reactivity of the silane compound is low. That is to say, in the case of hydrolysis reaction of an alkoxysilane compound only, the number of alkoxysilyl groups undergoing reaction in one molecule is small, and therefore, there are problems in the molecular design such that increase of a molecular weight is difficult (number-average molecular weight: about several hundred) and even if a co-hydrolyzate having a narrow molecular weight distribution is intended to be prepared from several kinds of alkoxysilanes as starting substances, the molecular weight distribution is widened and the ratio of constituent units of the co-hydrolyzate largely differs from the blending ratio of the staring substances. Hence, it is difficult to obtain a co-hydrolyzate having a desired molecular structure. Further, because of such problems, any of the resulting aqueous coating compositions cannot acquire well-balanced excellent properties of drying properties (curing properties), water resistance, corrosion resistance, coating film strength, etc. Furthermore, the aqueous rust-preventive coating compositions (aqueous coating compositions for primary rust prevention, aqueous thick-coating type inorganic zinc coating compositions) including such a binder can exhibit only insufficient properties in not only the above properties but also rust prevention properties, properties of topcoating film (topcoating properties) and weldability.

When the binder is a hydrolysis condensate of an amino group-containing alkoxysilane, the amino group actions as a reaction catalyst to thereby excessively promote hydrolysis condensate-forming reaction in the preparation of the binder (hydrolysis condensate), as disclosed in the patent literature 3. On that account, there is a possibility of occurrence of troubles such as gelation during the reaction or storage. Thus, it is difficult to control a molecular weight of the hydrolysis condensate obtained by the use of the amino group-containing alkoxysilane. Moreover, when the molecular weight is too high, it is difficult to disperse the resulting hydrolysis condensate in water. On the other hand, when the molecular weight is low, or when the concentration of a binder component, which is obtained by promoting the hydrolysis reaction in a low concentration of raw material silane in order to reduce occurrence of the gelation, is low, there occurs a problem

such that the resulting hydrolysis condensate cannot exhibit satisfactory curing properties/drying properties and water resistance of a coating film.

When the binder is not a hydrolysis condensate of an alkoxysilane compoundbut a hydrolysis condensate of amino group-containing silane, the interaction between an amino group, which is derived from the amino group-containing silane and is present in the binder, and a rust-preventive pigment such as zinc becomes strong, as described in the patent literature 6. It is said that when the coating object is a steel material or the like, an iron atom is ionized to form rust, but zinc is ionized by an acid, and the zinc ion formed inhibits ionization of the iron atom to thereby exhibit rust prevention action. The amino group derived from the amino group-containing silane and included in the binder undergoes interaction with zinc (it is thought that zinc that is an amphoteric metal probably forms a complex or a substance analogous to it together with the amino group) to thereby inhibit efficient ionization of zinc, and as a result, the possibility of impairing the rust prevention action of zinc becomes high. That is to say, the hydrolysis condensate that is obtained from the amino group-containing alkoxysilane in order to impart water solubility has an advantage of good water solubility, but because of use of the amino group-containing alkoxysilane, the rust prevention effect that is the original object is lowered, far from being improved. Hence, it cannot be necessarily said that such composition is effective.

It is thought that when the binder is an inorganic oxide sol, there is room for improvement in properties, such as drying properties, curing properties, water resistance, anticorrosion properties and coating film strength, as disclosed in the patent literatures 6 to 9.

Particularly when a surface of a coating film (coating layer) formed from such an aqueous coating composition including an alkali metal silicate (mixture of silicon oxide and alkali metal oxide) as disclosed in the patent literature 7 is further coated with a topcoating material to form a topcoating film, various problems attributable to the action (alkalinity) of an alkali metal remaining on the coating layer surface occur. For example, a blister of the topcoating film occurs, or when zinc is included in the aqueous coating composition, white rust due to corrosion of zinc occurs. Because of such problems, removal work to remove the coating film of the aqueous coating composition from base is separately needed prior to coating with the topcoating material. Presence of this removal work is very disadvantageous because one step surely increases in the topcoating process. Moreover, for customers who generally use a method in which a coating material that is a high-performance coating composition and can inhibit occurrence of white rust is preferentially adopted and the removal work is not adopted, the above composition cannot be said to be a composition sufficiently satisfying the customers' requirements.

Also in the case where the binder is water glass or an aqueous silica sol such as a colloidal silica water dispersing agent (e.g., patent literatures 8 and 9) and pH of the binder is on the alkaline side because an excess ammonium compound or a large amount of an alkali metal oxide is included in the binder, the same problems as above occur.

In order to cope with such conventional problems, the present inventors have earnestly studied, and as a result, they have found that the conventional problems can be solved by using, as a binder in a coating composition, a hydrolysis condensate obtained by subjecting a specific silane compound (as raw material silane), such as acetoxysilane, ketoxime silane or chlorosilane which is rather avoided because it generates irritant and corrosive hydrogen chloride gas during the reaction though its reactivity is extremely high, to hydrolysis reaction and condensation reaction under the specific pH conditions. Thus, the present invention has been accomplished.

That is to say, it is an object of the present invention to provide an aqueous coating composition capable of exerting an effect that the composition, while using water as a diluting solvent, can form a coating film having well-balanced excellent drying properties, curing properties and coating film properties (coating film strength) nearly equal to those of a coating film formed from a conventional solvent-based coating composition using an organic solvent as a diluent, and said effect being unable to be achieved by conventional aqueous coating compositions.

In particular, there can be provided a binder composition and a rust-preventive coating composition each of which can be expected to exhibit interaction between a residual functional group of a hydrolysis condensate and a metal oxide sol when the composition includes the hydrolysis condensate obtained by subjecting a specific silane compound such as chlorosilane to hydrolysis reaction and condensation reaction in the presence of a metal oxide sol, and each of which is capable of forming a coating film having higher strength.

## Solution to Problem

The aqueous coating composition of the present invention comprises a binder (A) and water (B), wherein the binder (A) comprises a hydrolysis condensate obtained by subjecting a silane raw material (a) including a silane compound (a1) represented by the following formula (I) to hydrolysis reaction and condensation reaction under the conditions of pH of 0.4 to 8.0;

$$R^{1a}SiR^{2a}R^{3a}\text{-}\ (Y_m\text{-}SiR^{4a}R^{5a})_p\text{-}R^{6a} \qquad \text{(I)}$$

wherein $R^{1a}$ to $R^{6a}$ are each independently a hydrogen atom, a halogen atom, an alkyl group of 1 to 10 carbon

atoms, an alkenyl group of 2 to 5 carbon atoms, an aryl group of 6 to 12 carbon atoms, Z-$R^{7a}$-(Z is a halogen atom, a hydroxyl group, an epoxy group, an acryloxy group, a methacryloxy group or a polyoxyalkylene group represented by $R^aO$-$(R^bO)_c$- ($R^a$ is a hydrogen atom or an alkyl group of 1 to 10 carbon atoms, $R^b$ is an alkylene group of 2 to 4 carbon atoms, and c is an integer of 1 to 15), and $R^{7a}$ is an alkylene group of 1 to 10 carbon atoms), or -$OR^{8a}$ ($R^{8a}$ is a hydrogen atom, an alkyl group of 1 to 10 carbon atoms or an alkenyl group of 1 to 10 carbon atoms),
at least one of $R^{1a}$ to $R^{6a}$ is a halogen atom,

Y is an oxygen atom or an alkylene group of 1 to 10 carbon atoms,

m is 0 or 1, and p is an integer of not less than 0.

In the aqueous coating composition of the present invention, the silane raw material (a) comprises a silane compound (a2) represented by the following general formula (II) in addition to the silane compound (a1);

$$R^{1b}SiR^{2b}R^{3b}\text{-}\ (Y'_{m'}\text{-}SiR^{4b}R^{5b})_{p'}\text{-}R^{6b} \qquad \text{(II)}$$

wherein $R^{1b}$ to $R^{6b}$ are each independently a hydrogen atom, an alkyl group of 1 to 10 carbon atoms, an alkenyl group of 2 to 5 carbon atoms, an aryl group of 6 to 12 carbon atoms, Z-$R^{7b}$- (Z is a hydroxyl group, an epoxy group, an acryloxy group, a methacryloxy group or a polyoxyalkylene group represented by $R^{a'}O$- $(R^{b'}O)_{c'}$- ($R^{a'}$ is a hydrogen atom or an alkyl group of 1 to 10 carbon atoms, $R^{b'}$ is an alkylene group of 2 to 4 carbon atoms, and c' is an integer of 1 to 15), and $R^{7b}$ is an alkylene group of 1 to 10 carbon atoms), -$OR^{8b}$ ($R^{8b}$ is an alkyl group of 1 to 10 carbon atoms or an alkenyl group of 1 to 10 carbon atoms), a hydroxyl group or an acyl group,
at least one of $R^{1b}$ to $R^{6b}$ is a hydroxyl group, a -$OR^{8b}$ group ($R^{8b}$ is an alkyl group of 1 to 10 carbon atoms), Z-$R^{7b}$- (Z is an epoxy group, and $R^{7b}$ is an alkylene group of 1 to 10 carbon atoms), or an acyl group,

Y' is an oxygen atom or an alkylene group of 1 to 10 carbon atoms,

m' is 0 or 1, and p' is an integer of not less than 0, wherein the water (B) is blended in an amount of 100 to 10 000 parts by weight based on 100 parts by weight of the binder (A).

In the aqueous coating composition of the present invention, the binder (A) preferably comprises a hydrolysis condensate and a metal oxide represented by the following chemical formula (III), wherein the hydrolysis condensate is obtained by subj ecting the silane raw material (a) to hydrolysis reaction and condensation reaction in the presence of a metal oxide sol (C) comprising the metal oxide;

$$M_pO_r \qquad \text{(III)}$$

wherein M is Si, Al or Ti, and p and r are each independently an integer of 1 to 3.

In the aqueous coating composition of the present invention, at least one of $R^{1a}$ to $R^{6a}$ in the formula (I) is preferably a chlorine atom from the viewpoints that it is excellent in hydrolysis reactivity and dehydrocondensation reactivity and an aqueous coating composition having desired effects is finally obtained.

In the aqueous coating composition of the present invention, at least one of $R^{1b}$ to $R^{6b}$ in the general formula (II) is preferably a glycidoxy group from the viewpoints of water solubility and storage stability.

In the aqueous coating composition of the present invention, Y in the formula (I) is preferably an alkylene group of 1 to 10 carbon atoms.

In the aqueous coating composition of the present invention, the metal oxide sol (C) is preferably a silicic anhydride sol.

In the aqueous coating composition of the present invention, the silicic anhydride sol is preferably a fumed silica sol.

In the aqueous coating composition of the present invention, it is preferable that the metal oxide sol (C) is a colloidal silica water dispersing agent, and the colloidal silica water dispersing agent has pH of not more than 7 and a $Na_2O$ content of not more than 400 ppm.

In the aqueous coating composition of the present invention, the metal oxide sol (C) is preferably a sol comprising fumed alumina or fumed titania.

It is preferable that the aqueous coating composition of the present invention further comprises a pigment and a ratio ((PVC)/(CPVC)) of a pigment volume concentration (PVC) to a critical pigment volume concentration (CPVC) in the aqueous coating composition is preferably higher than 1.

The aqueous coating composition of the present invention preferably further comprises a rust-preventive pigment (D).

In the aqueous coating composition of the present invention, the rust-preventive pigment (D) preferably includes zinc powder and/or zinc alloy powder having a mean particle diameter of 2 to 20 $\mu$m.

The aqueous coating composition of the present invention preferably further comprises metallic molybdenum and/or a molybdenum compound as a white rust inhibiter (E).

The aqueous coating composition of the present invention is preferably used as a binder composition.

The aqueous coating composition of the present invention is preferably used as a rust-preventive coating composition.

The aqueous coating composition of the present invention is preferably a coating composition for primary rust prevention.

The aqueous coating composition of the present invention is preferably a thick-coating type inorganic zinc coating composition.

The primary rust prevention coating method for a steel material of the present invention comprises applying the coating composition for primary rust prevention to a surface of a steel material and then curing the applied coating composition to form a primary rust-preventive coating film.

The rust prevention coating method for a steel material of the present invention comprises applying the thick-coating type inorganic zinc coating composition to a surface of a steel material and then curing the applied coating composition to form a thick-coating type inorganic zinc rust-preventive coating film.

The steel structure of the present invention has, on a surface of a steel material, a primary rust-preventive coating film formed from the coating composition for primary rust prevention.

The steel structure of the present invention has, on a surface of a steel material, a thick-coating type inorganic zinc rust-preventive coating film formed from the thick-coating type inorganic zinc coating composition.

## Advantageous Effects of Invention

The aqueous coating composition of the present invention can exhibit an effect that the composition, while using water as a diluting solvent, can form a coating film having well-balanced excellent drying properties, curing properties and coating film properties (coating film strength) nearly equal to those of a coating film formed from a conventional solvent-based coating composition using an organic solvent as a diluent, and said effect being unable to be achieved by conventional aqueous coating compositions.

When the aqueous coating composition of the present invention is used as a rust-preventive coating composition, the rust-preventive coating composition can exhibit an effect that the composition, while using water as a diluting solvent, provides a rust-preventive coating film which has both of excellent weldability and excellent cutting properties nearly equal to those of a coating film formed from a conventional solvent-based rust-preventive coating composition, while maintaining rust prevention properties inherent in a rust-preventive pigment such as zinc, and said effect being unable to be achieved by coating films formed from conventional aqueous coating compositions.

The rust prevention method of the present invention can form, on a surface of a base such as a steel material, a rust-preventive coating film which has both of excellent weldability and excellent cutting properties nearly equal to those of a rust-preventive coating film formed from a solvent-based rust-preventive coating composition, while maintaining rust prevention properties inherent in a rust-preventive pigment such as zinc.

## Brief Description of Drawings

Fig. 1 is a view showing an IR chart (after dehydration) of a binder composition of Example 1.
Fig. 2 is a view showing a GPC chart (after dehydration) of a binder composition of Example 1.
Fig. 3 is a view showing a $Si^{29}$NMR chart of a binder composition of Example 1.
Fig. 4 is a view showing an IR chart (after dehydration) of a binder composition of Example 2.
Fig. 5 is a view showing a GPC chart (after dehydration) of a binder composition of Example 2.
Fig. 6 is a view showing an IR chart (after dehydration) of a binder composition of Example 3.
Fig. 7 is a view showing a GPC chart (after dehydration) of a binder composition of Example 3.
Fig. 8 (a) is a group of views showing sandblasted plates (upper plate and lower plate) (steel plates for welding test and coated portions) used in a weldability test of a topcoating film formed from a primary rust-preventive coating composition of an example or a comparative example, and Fig. 8(b) is a group of views showing an embodiment of welding (outline of welding method) carried out in a weldability test of a topcoating film.

## Description of Embodiments

The aqueous coating composition of the present invention comprises a binder (A) and water (B), wherein the binder (A) comprises a hydrolysis condensate obtained by subjecting a silane raw material (a) comprising the below-described specific silane compound (a1) to hydrolysis reaction and condensation reaction under the conditions of pH of 0.4 to 8.0.

Binder (A)

The binder (A) comprises a hydrolysis condensate obtained by subjecting a silane raw material (a) comprising a silane compound (a1) represented by the following general formula (I) to hydrolysis reaction and condensation reaction under the conditions of pH of 0.4 to 8.0. Here, the binder (A) may comprise, in addition to the hydrolysis condensate, arbitrary components except water, when needed, or may be a binder composed of the hydrolysis condensate only.
The silane raw material (a) may comprise, in addition to the silane compound (a1), such silane compounds other than the silane compound (a1) as described later (silane compound (a2), silane compound (a3), etc.), when needed.

$$R^{1a}SiR^{2a}R^{3a}\text{-}(Y_m\text{-}SiR^{4a}R^{5a})_p\text{-}R^{6a}, \qquad (I)$$

In the formula (I), $R^{1a}$ to $R^{6a}$ are each independently a hydrogen atom, a halogen atom, an alkyl group of 1 to 10 carbon atoms, an alkenyl group of 2 to 5 carbon atoms, an aryl group of 6 to 12 carbon atoms, Z-$R^{7a}$- (Z is a halogen atom, a hydroxyl group, an epoxy group (e.g., glycidoxy group, 3, 4-epoxycyclohexyl group or the like), an acryloxy group, a methacryloxy group or a polyoxyalkylene group represented by $R^aO\text{-}(R^bO)_c\text{-}$ ($R^a$ is a hydrogen atom or an alkyl group of 1 to 10 carbon atoms, $R^b$ is an alkylene group of 2 to 4 carbon atoms, and c is an integer of 1 to 15), and $R^{7a}$ is an alkylene group of 1 to 10 carbon atoms), or -$OR^{8a}$ ($R^{8a}$ is a hydrogen atom, an alkyl group of 1 to 10 carbon atoms or an alkenyl group of 1 to 10 carbon atoms), and at least one of $R^{1a}$ to $R^{6a}$ is a halogen atom.
Y is an oxygen atom or an alkylene group of 1 to 10 carbon atoms.
m is 0 or 1, and p is an integer of not less than 0.
The silane raw material (a) may be one composed of a silane compound (a1) only (that is, in 100 parts by weight of the silane raw material (a), the silane compound (a1) may be included in an amount of 100 parts by weight), as described above. However, in order that (1) rapid progress of hydrolysis condensation reaction caused by excessively high reactivity between the silane compound (a1) and water and formation of water-insoluble products such as a gel-like substance may be prevented, or in order that (2) appropriate reactivity may be obtained and introduction of an appropriate functional group may be achieved, or from the viewpoint that (3) a compound having appropriate molecular weight and structure can be obtained and an aqueous coating composition capable of forming a coating film that can finally exhibit desired effects (e.g., improvement in adhesion to base and coating film strength) is obtained, the silane raw material preferably comprises the later-described silane compound (a2) in addition to the silane compound (a1).
From the viewpoints of improvement in dispersibility of the binder (A) and a pigment in each other, reinforcement of a coating film formed from the coating composition and cost reduction by decreasing the amount of a relatively expensive silane compound used, the binder (A) preferably comprises a hydrolysis condensate and the metal oxide, wherein the hydrolysis condensate obtained by subjecting the silane raw material (a) to hydrolysis reaction and condensation reaction in the presence of the later-described metal oxide sol (C).
When the silane raw material (a) includes the silane compound (a1) only, the resulting hydrolysis condensate is a single hydrolysis condensate having constituent units derived from the silane compound (a1). When the silane raw material (a) includes the silane compound (a2), etc., in addition to the silane compound (a1), the resulting hydrolysis condensate is a co-hydrolysis condensate having constituent units derived from the silane compounds (a1) and (a2), etc. When the hydrolysis condensate is prepared by subjecting the silane raw material (a) to hydrolysis/condensation reaction in the presence of the later-described metal oxide sol (C), the binder (A) is a composite substance comprising the resulting hydrolysis condensate and a metal oxide that is included in the metal oxide sol (C).
The preparation product comprising the hydrolysis condensate prepared is usually a transparent aqueous solution (in the case where the hydrolysis condensate is water-soluble) or a white opaque water dispersion (in the case where the hydrolysis condensate is slightly water-soluble and water-dispersible).
In the hydrolysis reaction and the condensation reaction of the silane raw material (a), pH of the system is 0.4 to 8.0, and from the viewpoint that drying properties and curability of the coating film and coating film properties (coating film strength) of the dry coating film are further improved, pH is preferably 0.7 to 6.0, more preferably 0.9 to 5.0. Here, these pH conditions indicate that the silane raw material (a) undergoes hydrolysis/condensation reaction at pH of the above specific range constantly through the reaction, and mean that the pH does not deviate from the above range from the beginning to the end of the reaction.
In the case where the binder (A) comprises a metal oxide and a hydrolysis condensate obtained by subjecting the silane rawmaterial (a) to hydrolysis reaction and condensation reaction in the presence of the later-described metal oxide sol (C), and in the case where the pH in the hydrolysis reaction and the condensation reaction of the silane raw material (a) deviates from the above range and is lower than the lower limit, aggregation of colloidal particles of the metal oxide tends to take place. Also in the case where the pH deviates from the above range and is higher than the upper limit, aggregation of colloidal particles of the metal oxide tends to take place. If the pH in the hydrolysis reaction and the condensation reaction of the silane raw material (a) deviates from the above range, aggregation of colloidal particles of the metal oxide tends to take place, as described above, and this phenomenon is attributed to lowering of

stability (i.e., storage stability) of colloidal particles of the metal oxide, and as a result, stability (i.e., storage stability) of the binder is sometimes deteriorated.

The present invention is described below by taking, as an example, a process in which the silane raw material (a) comprising methyl trichlorosilane as the silane compound (a1) and comprising γ-glycidoxypropyltrimethoxysilane as the later-described silane compound (a2) is subjected to hydrolysis reaction and condensation reaction to form a binder (A) that is a hydrolysis condensate. The reactions indicated by the following chemical reaction formulas (i) to (iii) correspond to reactions in the later-described Example 2.

As indicated by the following chemical reaction formulas (i) and (ii), methyltrichlorosilane and γ-glycidoxypropyltrimethoxysilane are each hydrolyzed to form a silanol group (Si-OH group). It is thought that these hydrolysis reactions do not proceed at once but proceed stepwise generally.

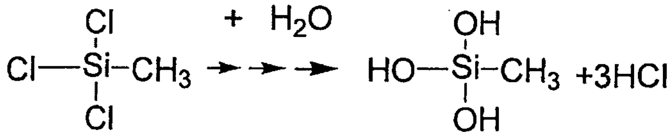

(i)

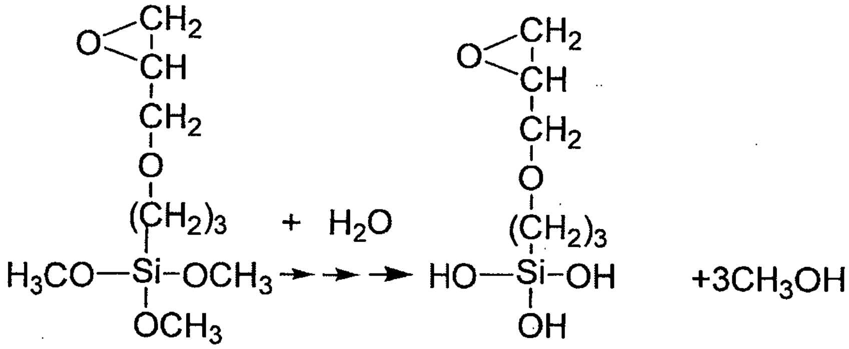

(ii)

Subsequently, as indicated by the following reaction formula (iii), dehydrocondensation reaction between hydroxyl groups of silanol groups (Si-OH groups) formed through the above reaction formulas (i) and/or (ii) is carried out to form a siloxane bond (Si-O-Si). In the following reaction formula (iii), a siloxane bond formed by dehydrocondensation reaction of the silanol group formed through the reaction formula (i) with the silanol group formed through the reaction formula (ii) is shown at only one position, and specific description of other siloxane bonds is omitted for convenience. The silanol groups can undergo dehydrocondensation reaction at random to form siloxane bonds, without distinction between silanol groups derived from the reaction formula (i) and those derived from the reaction formula (ii).

Thus, a large number of siloxane bonds are formed (that is, the molecular weight is increased) to form a hydrolysis condensate.

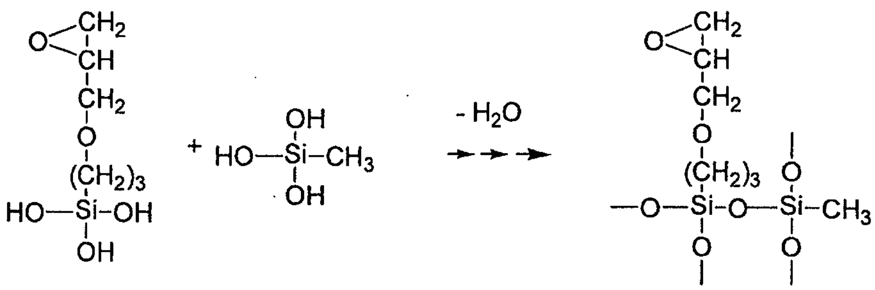

(iii)

The pH may be controlled by a silane compound (as the silane compound (a1)) having an acidic group, such as an acetic acid group ($CH_3COO$-), and a halogen atom directly bonded to a Si atom, such as a chlorine atom. Since such a silane compound undergoes hydrolysis reaction to produce a hydrogen halide such as hydrogen chloride or an acidic substance such as acetic acid, as a by-product, pH can be easily decreased. When the metal oxide sol (C) is used, the above pH may be controlled by pH of the sol, as described later.

In the present invention, the specific silane compound is subjected to hydrolysis/dehydrocondensation reaction under the specific conditions, and therefore, the hydrolysis reaction and the condensation reaction sufficiently proceed

to obtain a hydrolysis condensate even under the non-catalytic conditions. However, as long as the pH does not deviate from the above range, catalysts, e.g., acid catalysts, such as hydrochloric acid, sulfuric acid, phosphoric acid, acetic acid, formic acid, activated clay and zeolite, alkaline catalysts, such as sodium hydroxide, potassium hydroxide, ammonia and tetraammonium hydroxide, organometallic compounds, such as dibutyltin dilaurate, dibutyltin dimaleate, dibutyltin diacetate, stannous octoate, diisopropoxy bisacetylacetone titanate, aluminum butyrate and aluminum isopropylate, and metal oxides, such as iron oxide and zinc oxide, may be added to the reaction system.

When the silane raw material (a) is composed of the silane compound (a1) only, the silane raw material may be subjected to hydrolysis reaction and condensation reaction in an organic solvent such as alcohol, when needed. In this case, the binder (A) comprises an organic solvent together with the hydrolysis condensate, and the aqueous coating composition of the present invention may be prepared by using such a binder (A) comprising an organic solvent. However, in order to maintain the flash point at a high level or in order to cope with VOC (to reduce environmental burden), it is preferable to prepare the aqueous coating composition of the present invention by using a binder (A) from which an organic solvent has been removed by a removal means, such as removal by adsorption on synthetic zeolite or removal by distillation or vacuum distillation.

By appropriately using a commercially available reactor, the hydrolysis reaction and the condensation reaction are carried out safely and efficiently. Such a reactor is selected according to the productivity and the performance. As the reactor, a batch reactor or a continuous reaction type reactor can be mentioned, and a reactor of a combination thereof may be used.

The time for the hydrolysis reaction and the condensation reaction of the silane compound (a1) included as the silane rawmaterial (a) (silane compound (a2), etc. may be included, when needed) is preferably in the range of 1 hour to 18 hours, more preferably 3 hours to 10 hours. The time for the hydrolysis reaction and the condensation reaction is in the above range, the silane compound (a1), the silane compound (a2), etc. can undergo hydrolysis reaction with water under the appropriate conditions, and in the subsequent aging step at, for example, 50°C to 70°C, the hydrolysis reaction and the condensation reaction can be completed. However, when the scale of the reaction (container) is as large as 2 kL to 10 kL, the time for the reaction is sometimes extended because of a difference in heat transfer efficiency of heating or cooling. When the reaction is continuously carried out by a continuous reaction device in which a mixing element such as a static mixer is integrated, the reaction time is not specifically restricted.

If the reaction time is extremely short (e.g., about 1 hour or shorter), a compound having a sufficient molecular weight is not obtained, and particularly when the binder (A) comprises a hydrolysis condensate and a metal oxide, wherein the hydrolysis condensate is obtained by subjecting the silane raw material (a) to hydrolysis reaction and condensation reaction in the presence of the later-described metal oxide sol (C), stability of the metal oxide is lowered (aggregation of the metal oxide occurs) to cause gelation. On the other hand, if the reaction time is excessively long, thermal deterioration reaction accompanies, and as a result, a product having bad storage stability is obtained or gelation is caused.

From the viewpoints of securing an appropriate reaction rate and avoiding thermal deterioration reaction, the reaction temperature of the hydrolysis reaction and the condensation reaction is preferably in the vicinity of 3 to 90°C, more preferably 5 to 80°C, still more preferably about 8 to 70°. As the reaction temperature is raised, the reaction under the above conditions proceeds in a shorter period of time. On the other hand, as the reaction temperature is lowered, a longer period of time is required.

In the preparation of the hydrolysis condensate, a hydrogen halide formed from the silane compound (a1), such as hydrogen chloride, undergoes considerable heat generation when it is dissolved in water, so that the range of the reaction temperature is considered so that such heat generation can be controlled. For example, it is necessary to appropriately control a feed rate (dropping rate in the case of dropwise addition using a funnel) of the silane compound to the reaction vessel. However, in the case of a cooling device having satisfactory cooling ability, e.g., cooling device having a cooling medium of a temperature lower than that of industrial water, such as chiller or brine, the feed rate does not need to be put in question, and the reaction temperature is appropriately determined taking reactivity of the silane compound, etc. into consideration. In any of the case where the reaction is completed in a short period of time and the case where the reaction is sufficiently carried out over a long period of time, a little difference in a molecular weight distribution is observed. In many cases, however, a conspicuous difference is not observed in storage stability of the resulting hydrolysis condensate and properties of a coating film formed by the use of a binder comprising the hydrolysis condensate, such as curing properties and coating film strength.

The number-average molecular weight of the hydrolysis condensate (measurement by GPC (specifically, see "(2) GPCmeasurement conditions" of the later-described "<Evaluation method, evaluation criteria>")) is usually 140 to 500,000, preferably 200 to 100,000, more preferably 300 to 30,000. When the molecular weight is in such a range, the hydrolysis condensate can exhibit, as a binder, satisfactory level of drying properties and curability of a coating film while maintaining solubility in water.

When the reaction product comprising the hydrolysis condensate comprises a metal oxide derived from the metal oxide sol (C), the mean particle diameter of a composite substance comprising the metal oxide and the hydrolysis

condensate (measurement by dynamic light scatteringmethod (specifically, see" (4) Measurementofmean particle diameter" of the later-described "<Evaluation method, evaluation criteria>")) is usually 1 to 500 nm, preferably 4 to 300 nm, more preferably 5 to 200 nm. When the mean particle diameter is in such a range, the composite substance stably exists as colloidal particles, and there is no fear of gelation of the hydrolysis condensate and sedimentation of the components, so that the composite substance exhibits good dispersibility as a binder. Moreover, drying properties and curability of a coating film formed from the coating composition are good. The composite substances comprise not only a substance (mixture) in which the metal oxide and the hydrolysis condensate are simply mixed but also a substance in which the metal oxide and the hydrolysis condensate are chemically bonded or physically bonded.

(Silane compound (a1), silane compound (a2) and metal oxide sol (C) )

The silane compounds (a1) to (a4) and the metal oxide sol (C) are described below.

(Silane compound (a1))

The silane compound (a1) included in the silane raw material (a) is represented by the following general formula (I) (structural formula: the following structural formula (I')).

$$R^{1a}SiR^{2a}R^{3a}\text{-}(Y_m\text{-}SiR^{4a}R^{5a})_p\text{-}R^{6a} \quad (I)$$

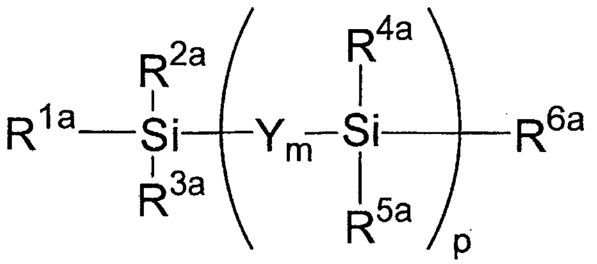

(I')

In the general formula (I) and the structural formula (I'), $R^{1a}$ to $R^{6a}$ are each independently a hydrogen atom, a halogen atom, an alkyl group of 1 to 10 carbon atoms, an alkenyl group of 2 to 5 carbon atoms, an aryl group of 6 to 12 carbon atoms, Z-$R^{7a}$- (Z is a halogen atom, a hydroxyl group, an epoxy group (e.g., glycidoxy group, 3,4-epoxycyclohexyl group or the like), an acryloxy group, a methacryloxy group or a polyoxyalkylene group represented by $R^aO\text{-}(R^bO)_c\text{-}$ ($R^a$ is a hydrogen atom or an alkyl group of 1 to 10 carbon atoms, $R^b$ is an alkylene group of 2 to 4 carbon atoms, and c is an integer of 1 to 15), and $R^{7a}$ is an alkylene group of 1 to 10 carbon atoms), or -$OR^{8a}$ ($R^{8a}$ is a hydrogen atom, an alkyl group of 1 to 10 carbon atoms or an alkenyl group of 1 to 10 carbon atoms), and
at least one of $R^{1a}$ to $R^{6a}$ is a halogen atom.

Y is an oxygen atom or an alkylene group of 1 to 10 carbon atoms.

m is 0 or 1, and p is an integer of not less than 0.

At least one of functional groups ($R^{1a}$ to $R^{6a}$ in the general formula (I) and the structural formula (I')) directly bonded to Si atoms is a halogen atom that is a hydrolyzable group, so that the silane compound (a1) has good reactivity and is easily available.

Y is an oxygen atom or an alkylene group of 1 to 10 carbon atoms, and from the viewpoints of easy availability and good reactivity, Y is preferably an alkylene group of 1 to 10 carbon atoms, more preferably an alkylene group of 2 to 5 carbon atoms.

From the viewpoints of excellent hydrolysis reactivity and dehydrocondensation reactivity, it is preferable that in the silane compound (a1), the functional groups ($R^{1a}$ to $R^{6a}$ in the general formula (I) and the structural formula (I')) directly bonded to Si atoms are each independently a halogen atom (preferably chlorine atom), an alkyl group of 1 to 10 carbon atoms or -$OR^{8a}$ ($R^{8a}$ is an alkyl group of 1 to 10 carbon atoms), at least 3 of the functional groups ($R^{1a}$ to $R^{6a}$ in the general formula (I) and the structural formula (I')) directly bonded to Si atoms are each a halogen atom (preferably chlorine atom), and p is an integer of 0 to 4 (preferably 0 or 1, particularly preferably p=0). When p is an integer of 1 or 2, it is preferable that m is 1 and Y is an alkylene group of 1 to 10 carbon atoms (preferably an alkylene group of 2 to 5 carbon atoms).

Examples of the silane compounds (a1) represented by the following general formula (I) (structural formula: the following structural formula (I')) are given below.

Examples of chlorosilanes include tetrachlorosilane, trichlorosilane, methyltrichlorosilane, ethyltrichlorosilane,

vinyltrichlorosilane, n-propyltrichlorosilane, i-propyltrichlorosilane, n-butyltrichlorosilane, sec-butyltrichlorosilane, t-butyltrichlorosilane, n-pentyltrichlorosilane, n-hexyltrichlorosilane, n-octyltrichlorosilane, methyldichlorosilane, dimethyldichlorosilane, methylethyldichlorosilane, methylvinyldichlorosilane, dimethylchlorosilane, diethylchlorosilane, trimethylchlorosilane, vinyldimethylchlorosilane, vinyldiethylchlorosilane, allyltrichlorosilane, methylallyldichlorosilane, γ-acryloxypropyltrichlorosilane and γ-methacryloxypropyltrichlorosilane.

The silane compounds (a1) may be silane compounds wherein a chlorine atom in the above chlorosilanes is replaced with fluorine, bromine or iodine, that is, fluorosilanes, bromosilanes or iodosilanes, such as trimethylfluorosilane, trimethylbromosilane or trimethyliodosilane. The silane compounds wherein a chlorine atom in the above chlorosilanes is replaced with a fluorine atom, a bromine atom or an iodine atom are on the market.

A silane compound (a1) having an alkoxy group as a functional group directly bonded to a Si atom together with the halogen atom is also useful, and examples of such silane compounds (a1) include methyldichloromethoxysilane, methylchlorodiethoxysilane, methyldimethoxychlorosilane, methyldi-i-propoxychlorosilane, ethyl-n-butoxydibromosilane, dimethoxychlorosilane, γ-chloropropyltrimethoxysilane, γ-chloropropyltriethoxysilane, γ-chloropropyltripropoxysilane, γ-chloropropylmethyldimethoxysilane, γ-chloropropylmethyldiethoxysilane, γ-chloropropyldimethylethoxysilane, γ-chloropropylethyldimethoxysilane and γ-chloropropylethyldiethoxysilane.

As the silane compounds (a1), polysilanes such as disilanes (in the general formula (I) and the structural formula (I'), m is 0 and p is an integer of not less than 1) are also useful. Examples of such polysilanes include alkylene group-containing disilyl compounds, e.g., disilanes, such as trimethyltrichlorodisilane, dimethyltetrachlorodisilane, trimethyltrimethoxydisilane and dimethyltetramethoxydisilane.

Further, disilylethanes and disilylpropanes, which are produced by the addition reaction of disilane compounds with silane compounds such as vinylchlorosilane, allylchlorosilane and hydrogen atom-containing chlorosilane using platinum or a platinum compound as a catalyst, as indicated by the following formulas, are also useful compounds as the silane compounds (a1). In the following chemical formulas, description of functional groups directly bonded to Si atoms other than $-CH=CH_2$, $-CH_2-CH=CH_2$, $-CH_2-CH_2-$ and $-CH_2-CH_2-CH_2-$ is omitted.

$$\equiv Si-CH=CH_2+H-Si\equiv \rightarrow \equiv Si-CH_2-CH_2-Si\equiv$$

(Platinum catalyst)

$$\equiv Si-CH_2-CH=CH_2+H-Si\equiv \rightarrow \equiv Si-CH_2-CH_2-CH_2-Si\equiv$$

(Platinum catalyst)

Examples of the disilane compounds as the silane compounds (a1) include disilylalkyls (e.g., disilylethanes, disilylpropanes and disilylbutanes).

Examples of the disilylethanes include compounds, such as $Cl_3SiCH_2CH_2SiCl_3$, $(CH_3O)_2ClSiCH_2CH_2SiCl_3$, $(CH_3O)_3SiCH_2CH_2SiCl_3$, $Cl(CH_3O)_2SiCH_2CH_2Si(CH_3O)Cl_2$, $Cl(C_2H_5O)_2SiCH_2CH_2Si(C_2H_5O)Cl_2$, $(CH_3O)_3SiCH_2CH_2Si(C_2H_5O)_3$, $Cl_2(CH_3)SiCH_2CH_2SiCl_3$, $(CH_3O)_2ClSiCH_2CH_2Si(CH_3)Cl_2$, $(CH_3O)_2(CH_3)SiCH_2CH_2Si(CH_3)Cl_2$, $Cl_2(C_6H_5)SiCH_2CH_2SiCl_3$, $(CH_3O)_2(C_6H_5)SiCH_2CH_2Si(CH_3O)Cl_2$ and $Cl_2(C_6H_5)SiCH_2CH_2Si(C_2H_5O)_3$.

Examples of the disilylpropanes include compounds, such as $(C_6H_5)(CH_3)ClSiCH_2CH_2CH_2Si(CH_3)Cl_2$, $(C_2H_5O)_2(CH_3)SiCH_2CH_2CH_2Si(CH_3)Cl_2$, $(C_2H_5O)_3SiCH_2CH_2CH_2Si(CH_3)Cl_2$, $(CH_3O)_3SiCH_2CH_2CH_2Si(C_2H_5O)_3$, $(C_2H_5O)_3SiCH_2CH_2CH_2Si(C_2H_5O)Cl_2$, $(C_2H_5O)_3SiCH_2CH_2CH_2SiCl_3$, $Cl_3SiCH_2CH_2CH_2SiCl_3$, $(CH_3O)_3SiCH_2CH_2CH_2SiCl_3$, $Cl(CH_3O)_2SiCH_2CH_2CH_2Si(CH_3O)Cl_2$, $Cl(C_2H_5O)_2SiCH_2CH_2CH_2Si(C_2H_5O)Cl_2$, $(CH_3O)_3SiCH_2CH_2CH_2Si(C_2H_5O)_3$, $Cl_2(CH_3)SiCH_2CH_2CH_2SiCl_3$, $(CH_3O)_2ClSiCH_2CH_2CH_2Si(CH_3)Cl_2$, $(CH_3O)_2(CH_3)SiCH_2CH_2CH_2Si(CH_3)Cl_2$, $Cl_2(C_6H_5)SiCH_2CH_2CH_2SiCl_3$, $(CH_3O)_2(C_6H_5)SiCH_2CH_2CH_2Si(CH_3O)Cl_2$ and $Cl_2(C_6H_5)SiCH_2CH_2CH_2Si(C_2H_5O)_3$.

Examples of the disilylbutanes include compounds, such as $(CH_3O)_2ClSiCH_2CH_2CH_2CH_2SiCl_3$, $(C_2H_5O)_3SiCH_2CH_2CH_2CH_2SiCl_3$, $Cl(CH_3O)_2SiCH_2CH_2CH_2CH_2Si(CH_3O)Cl_2$, $(C_2H_5O)_3SiCH_2CH_2CH_2CH_2Si(C_2H_5O)Cl_2$, $(CH_3O)_3SiCH_2CH_2CH_2CH_2Si(C_2H_5O)_3$, $(C_2H_5O)_3SiCH_2CH_2CH_2CH_2Si(CH_3)Cl_2$, $(C_2H_5O)_2(CH_3)SiCH_2CH_2CH_2CH_2Si(CH_3)Cl_2$ and $(C_6H_5)(CH_3)ClSiCH_2CH_2CH_2CH_2Si(CH_3)Cl_2$.

By the preparation using a silane compound having a longer alkylene group than that of the aforesaid unsaturated group-containing silane, a disilyl compound including an alkylene group of a longer chain is obtained.

Examples of the silane compounds (a1) have been enumerated above, and of these, chlorosilanes (that is, at least one of $R^{1a}$ to $R^{6a}$ in the general formula (I) and the structural formula (I') is a chlorine atom) are preferable when it is taken into consideration that drying properties and curing properties of a coating film of the resulting coating composition and coating film strength and rust prevention properties of a dry coating film formed from the composition are good, that they are easily available and that handling thereof is also relatively easy. Of the chlorosilanes, more preferable

are tetrachlorosilane and methyltrichlorosilane.

(Silane compound (a2))

The silane raw material (a) may comprise a silane compound (a2) represented by the following general formula (II) (structural formula: the following structural formula (II')) in addition to the silane compound (a1).

$$R^{1b}SiR^{2b}R^{3b}\text{-}(Y'_{m'}\text{-}SiR^{4b}R^{5b})_{p'}\text{-}R^{6b} \qquad (II)$$

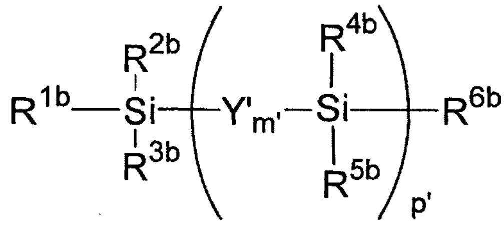
(II')

In the above formulas (the general formula (II) and the structural formula (II')), $R^{1b}$ to $R^{6b}$ are each independently a hydrogen atom, an alkyl group of 1 to 10 carbon atoms, an alkenyl group of 2 to 5 carbon atoms, an aryl group of 6 to 12 carbon atoms, Z-$R^{7b}$-(Z is a hydroxyl group, an epoxy group (e.g., glycidoxy group, 3,4-epoxycyclohexyl group or the like), an acryloxy group, a methacryloxy group or a polyoxyalkylene group represented by $R^{a'}O\text{-}(R^{b'}O)_{c'}$ - ($R^{a'}$ is a hydrogen atom or an alkyl group of 1 to 10 carbon atoms, $R^{b'}$ is an alkylene group of 2 to 4 carbon atoms, and c' is an integer of 1 to 15), and $R^{7b}$ is an alkylene group of 1 to 10 carbon atoms), -$OR^{8b}$ ($R^{8b}$ is an alkyl group of 1 to 10 carbon atoms or an alkenyl group of 1 to 10 carbon atoms), a hydroxyl group or an acyl group,
at least one of $R^{1b}$ to $R^{6b}$ is a hydroxyl group, a -$OR^{8b}$ group ($R^{8b}$ is a alkyl group of 1 to 10 carbon atoms), Z-$R^{7b}$- (Z is an epoxy group, and $R^{7b}$ is an alkylene group of 1 to 10 carbon atoms), or an acyl group.

Y' is an oxygen atom or an alkylene group of 1 to 10 carbon atoms.

m' is 0 or 1, and p' is an integer of not less than 0 (for example, m' is 1, and p' is an integer of 0 to 10 (preferably 0 to 5)).

As examples of such silane compounds (a2), various silane compounds are enumerated below, and of these, silane compounds (a2) having an epoxy group (in the general formula (II) and the structural formula (II'), at least one of $R^{1b}$ to $R^{6b}$ is Z-$R^{7b}$- (Z is an epoxy group, and $R^{7b}$ is an alkylene group of 1 to 10 carbon atoms)) are preferable as the silane compounds (a2) because they have good water solubility and storage stability. The epoxy group is more preferably a glycidoxy group (that is, silane compounds (a2) having a glycidoxy group is more preferable).

When coating film strength of a dry coating film formed from a coating composition comprising the resulting binder (A) and drying properties (curing properties) of a coating film formed from the coating composition are taken into consideration, γ-glycidoxypropyltrimethoxysilane is more preferable.

Examples of the silane compounds (a2) having a hydroxyl group (-OH) include trimethylsilanol, triethylsilanol, triisopropylsilanol and tri-n-butylsilanol.

Examples of the silane compounds (a2) having an alkoxy group (-OR, R: alkyl group of about 1 to 5 carbon atoms) include trimethoxysilane, triethoxysilane, tri-n-propoxysilane, tri-i-propoxysilane, n-butoxysilane, methyltrimethoxysilane, methyltriethoxysilane, methyltriisopropoxysilane, methyltributoxysilane, ethyltrimethoxysilane, ethyltriethoxysilane, ethyltriisopropoxysilane, vinyltrimethoxysilane, vinyltriethoxysilane, vinyltriisopropoxysilane, dimethyldimethoxysilane, dimethyldiethoxysilane, dimethyldiisopropoxysilane, dimethylmethoxyethoxysilane, dimethylmethoxyisopropoxysilane, methylethyldimethoxysilane, methylethyldiethoxysilane, trimethylmethoxysilane, triethyltriethoxysilane, triisopropylmethoxysilane, vinyldimethylmethoxysilane, allyltrimethoxysilane and allylmethyldiethoxysilane.

Examples of the silane compounds (a2) having an epoxy group (e.g., glycidoxygroup, 3,4-epoxycyclohexyl group or the like) include γ-glycidoxypropyltrimethoxysilane, γ-glycidoxypropyltriethoxysilane, γ-glycidoxypropyltri-i-propoxysilane, γ-glycidoxypropylmethyldimethoxysilane,γ -glycidoxypropylmethyldiethoxysilane, γ-glycidoxypropyldimethylethoxysilane, γ-glycidoxypropylethyldimethoxysilane, γ-glycidoxypropylethyldiethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltri-i-propoxysilane, β-(3,4-epoxycyclohexyl)ethylmethyldimethoxysilane, β-(3,4-epoxycyclohexyl)ethylmethyldiethoxysilane and β-(3,4-epoxycyclohexyl)ethylmethyldi-i-propoxysilane.

Examples of the silane compounds (a2) having an acyl group include methyltriacetoxysilane, ethyltriacetoxysilane, vinyltriacetoxysilane, dimethyldiacetoxysilane, triethylmethoxysilane and tetraacetoxysilane.

The silane compound (a2) may be not such a monomer type compound (in the general formula (II) and the

structural formula (II'), p'=0) as above but an oligomer or polymer type compound (in the general formula (II) and the structural formula (II'), p'≥0).

Examples of the silane compounds (a2) of oligomer type include tetramethoxydisiloxane, tetraethoxydisiloxane, dimethyltetramethoxydisiloxane,methylethyltetramethoxydisiloxane, trimethylpentamethoxytrisiloxane and tetramethyltetramethoxycyclotetrasiloxane.

Examples of the silane compounds (a2) of polymer type include hydrolysis condensates (alkyl silicates) of orthoethoxysilane, orthomethoxysilane, orthoisopropoxysilane, methyltrimethoxysilane, methyltriethoxysilane, etc.

Examples of commercial products of the above silane compounds include Ethyl Silicate 40, Ethyl Silicate 45, Methyl Silicate 51 and Methyl Silicate 56 (all manufactured by Tama Chemicals, Ltd.). Of these, a hydrolysis condensate of methyltrimethoxysilane or methyltriethoxysilane is preferable from the viewpoints of ease of obtaining, reactivity, etc.

The content of the silane compound (a2) based on 100 parts by weight of the silane compound (a1) is preferably 10 to 5000 parts by weight, more preferably 30 to 3000 parts by weight, still more preferably 50 to 2000 parts by weight. If the content of the silane compound (a2) is less than the lower limit of the above range, the number of the polymerization reaction sites (OH groups formed by hydrolysis) derived from the silane compound (a2) to the number of the polymerization reaction sites (OH groups formed by hydrolysis) derived from the silane compound (a1) is too small. Therefore, the proportion of constituent units derived from the silane compound (a2) to the constituent units in the resulting hydrolysis condensate is lowered, and it sometimes becomes difficult to obtain appropriate molecular weight and structure. If the content exceeds the upper limit of the above range, the number of the polymerization reaction sites (OH groups formed by hydrolysis) derived from the silane compound (a1) to the number of the polymerization reaction sites (OH groups formed by hydrolysis) derived from the silane compound (a2) is too small. Therefore, the proportion of constituent units derived from the silane compound (a1) to the constituent units in the resulting hydrolysis condensate is lowered, and appropriate molecular designing becomes impossible.

In the silane compounds (a2), the amount of the tetrafunctional silane compound based on 100 parts by weight of the trifunctional silane compound is preferably 0.1 to 200 parts by weight, more preferably 1 to 100 parts by weight, still more preferably 5 to 80 parts by weight. If the content of the tetrafunctinal silane compound is less than the lower limit of the above range, the number of the polymerization reaction sites (OH groups formed by hydrolysis) derived from the tetrafunctional silane compound to the number of the polymerization reaction sites (OH groups formed by hydrolysis) derived from the trifunctional silane compound is too small, and therefore, it is difficult to obtain appropriate molecular weight and structure. If the content is more than the upper limit of the above range, the molecular weight becomes too high, and as a result, solubility is deteriorated to cause sedimentation or gelation.

The trifunctional silane compound and the tetrafunctional silane compound indicate a silane compound having, as $R^{1b}$ to $R^{6b}$ in the general formula (II) and the structural formula (II'), 3 functional groups selected from the group consisting of a hydroxyl group, a -$OR^{8b}$ group ($R^{8b}$ is an alkyl group of 1 to 10 carbon atoms) and an acyl group, and a silane compound having 4 functional groups selected from them, respectively.

By appropriately designing molecular structure (number of crosslinkages, molecular weight distribution, type of end group, presence or absence of end group having hydrolysis reactivity and condensation reactivity, molecular weight) of a hydrolysis condensate prepared, water solubility and storage stability of the hydrolysis condensate can be improved, or curability of a coating film formed from the coating composition can be controlled.

In the present invention, the silane raw material (a) comprises the silane compound (a1), preferably the silane compound (a1) and the silane compound (a2), but if necessary, it may comprise a silane compound which is different from the silane compound (a1) and the silane compound (a2) and is hydrolyzable and condensable (silane compound which undergoes hydrolysis reaction and condensation reaction together with the silane compound (a1) andbecomes constituent units of a hydrolysis condensate (silane compound (a3)). As the silane compound (a3), a silane compound wherein at least one ketoxime group (e.g., the following functional group) is bonded to a Si atom (oxime-based silane compound) can be mentioned, and the oxime-based silane compound is, for example, methyltris(methylethylketoxime)silane.

<u>Metal oxide sol (C)</u>

The metal oxide sol (C) comprises a metal oxide represented by the following chemical formula (III) and may comprise a solid solution of the metal oxide and various doping compounds.

$$M_pO_r \qquad (III)$$

In the formula (III), M is Si, Al or Ti, and p and r are each independently an integer of 1 to 3.

In this section, the particle diameter of the metal oxide indicates a mean particle diameter measured on the basis of "(4) Measurement of mean particle diameter" of the later-described "<Evaluation method, evaluation criteria>").

As the metal oxide sol (C), a colloidal solution (sol) comprising silica ($SiO_2$), alumina ($Al_2O_3$) or titania (titanium

oxide) as the metal oxide canbementioned, and the metal oxide sol is used for the hydrolysis reaction and the condensation reaction of the silane raw material (a).

Examples of commercial products of the metal oxide sols (alumina sols) comprising alumina (aluminum oxide) include "Aerodisp. W630, VP Disp. W630X" (manufactured by Nippon Aerosil Co., Ltd., water dispersion of alumina) and "Alumina Sol-10A" (manufactured by Kawaken Fine Chemicals Co., Ltd., colloidal aqueous solution including 10% by weight of boehmite alumina based on 100% by weight of sol). Examples of commercial products of the metal oxide sols (titania sols) including titania (titanium oxide) include "VP Disp. W740X, VP Disp. W2730X" (manufactured by Nippon Aerosil Co., Ltd.). These products are each obtained by dispersing 10 to 40% by weight of particles of fumed alumina or fumed titania having been once synthesized by a flame hydrolysis method (Evonik industriues AG catalogue), in water by the use of a powerful dispersing machine, and the particle diameters of aggregated particles formed by aggregation of these particles (primary particles) are also uniform. Hence, these products are stable, but their particle diameters are generally larger than those of colloidal silica synthesized by a wet process.

Further, such a sol has a merit that the level of impurities (content of impurities) is lower by 2 or 3 digits than that of a wet process sol prepared through a step of granulation in water, but it is difficult to completely disperse even primary particles. Therefore, the particle diameter is about 5 to 10 times the particle diameter of the wet process sol, and properties of a coating film obtained from a coating composition using the sol is sometimes inferior, but the sol is advantageous for fine control of the rust prevention properties.

The metal oxide sol (C) comprising silicic anhydride is a water dispersion of silicic anhydride (so-called silicon dioxide (silica)) and is called a silicic anhydride sol. The silicic anhydride sol may be a sol prepared by a publicly known process, and above all, a silicic anhydride sol prepared using, as a raw material, a silica slurry, a colloidal silica water dispersing agent or water glass prepared by a wet process has primary particle diameters of about 10 to 20 nm.

From the viewpoints that the particle diameters of silica particles included in such sols are almost common to one another regardless of the preparation conditions of wet or dry (fumed) process and that the chemical properties of the components included in the sols are almost the same as one another though a slight difference in constitution ratio of an alkali metal oxide as an impurity is observed, a silicic anhydride sol prepared by a wet process is preferable. Recently, the kinds of silicic anhydride sols have increased, and not only water dispersions of silica prepared by the wet process but also those of dry-processed silica prepared by a dry process have been also produced and put on the market. Since such high-purity silicic anhydride that is not natural but synthesized as above exhibits chemically and physically stable properties, it is widely used. From this viewpoint, a water dispersion of dry-processed silica is also preferable as a silicic anhydride sol.

Moreover, from the viewpoint of small amounts of impurities such as $Na_2O$, a fumed silicic acid sol is preferable among the silicic anhydride sols. As the fumed silicic acid sol, a fumed silicic acid sol obtained by preparing fumed silica by a conventional method and then homogeneously dispersing the fumed silica in water using a powerful dispersing machine can be mentioned.

Examples of commercial products of the fumed silicic acid sols include "Aerodisp W7215S", "Aerodisp WK7330" and "Aerodisp W7512S" (all manufactured by Nippon Aerosil Co., Ltd.). These fumed silicic acid sols are each a sol in which fumed silica synthesized by a flame hydrolysis method is dispersed in water. The $SiO_2$ content in the fumed silica is, for example, not less than 99.8% by weight. The pH of these fumed silicic acid sols is, for example, 2 to 6, and the content of silicic anhydride in the sols is, for example, about 5 to 50% by weight.

As the metal oxide sols (C), a series of silicic anhydride sols generally called colloidal silica water dispersing agents are also employable, and of these, particularly preferable are those in which the content of $Na_2O$ in sol has been decreased to not more than 400 ppm (mass ppm) by increasing the purity.

From the viewpoints that when a coating film (topcoating film) is further formed on a dry coating film formed from the coating composition, deterioration of adhesion to the topcoating material is inhibited, and curing properties and drying properties of a coating film formed from the coating composition and workability are maintained, and further, rust prevention properties of the dry coating film are improved, it is preferable that the metal oxide sol (C) is a colloidal silica water dispersing agent (silica sol) and the colloidal silica water dispersing agent has pH of not more than 7 and a $Na_2O$ content of not more than 400 ppm. Examples of such colloidal silica water dispersing agents include "Snow Tex O", "Snow Tex OL", "Snow Tex O-33" and "Snow Tex O-40" (all manufactured by Nissan Chemical Industries, Ltd.). In these colloidal silica water dispersing agents, the $SiO_2$ content in the solids content (100% by weight) is not less than 99% by weight, the $Na_2O$ content is not more than 400 ppm by weight, and the pH is 2 to 4 and on the acidic side. The mean particle diameters of the silica particles included in these colloidal silica dispersing agents are 4 to 6 nm (Snow Tex OX), 8 to 11 nm (Snow Tex OS), 10 to 20 nm (Snow Tex O), 20 to 30 nm (Snow Tex O-40) and 40 to 50 nm (Snow Tex OL), and the silica ($SiO_2$) concentration based on 100% by weight of the colloidal silica water dispersing agent is about 10 to 40% by weight.

The metal oxide sol (C) comprising silicic anhydride is preferably a water dispersion of silica particles into which alumina has been incorporated as a doped oxide. Examples of such metal oxide sols (C) include "Aerodisp. W1714" (manufactured by Nippon Aerosil Co., Ltd.) and "Aerodisp. W1824" (manufactured by Nippon Aerosil Co. , Ltd.).

The content of the metal oxide in the metal oxide sol (C) is not specifically restricted, but in the case of commercial products, it is usually about 10 to 40% by weight based on 100% by weight of the metal oxide sol.

The content of the hydrolysis condensate is preferably 0.05 part by weight to 200 parts by weight, more preferably 0.2 part by weight to 50 parts by weight, still more preferably 0. 5 part by weight to 30 parts by weight, based on 100 parts by weight of the metal oxide sol (C). Based on 100 parts by weight of the metal oxide included in the metal oxide sol (C), the content of the hydrolysis condensate is typically 0.1 part by weight to 150 parts by weight. In this case, the content of the hydrolysis condensate is preferably 0.5 part by weight to 80 parts by weight, more preferably 1 part by weight to 50 parts by weight.

The pH of the metal oxide sol (C) varies depending upon the commercial products, but when the sol is acidic, there are many advantages such that storage stability of an anticorrosive coating material is improved and anticorrosion properties of a dry coating film formed from the coating material are good, and it is easy to adjust the pH conditions in the hydrolysis/condensation reaction of the silane compound (a1) to the range of 0.4 to 8.0.

The pH in the hydrolysis/condensation reaction of the silane compound (a1) is preferably not more than 7.0, more preferably not more than 5.0, still more preferably not more than 4.0. In order to prevent aggregation of colloidal particles of the metal oxide, the pH needs to be not less than 0.4. If the pH is less than 0.4, an unfavorable effect that aggregation of colloidal particles of the metal oxide occurs is brought about.

For adjusting the range of pH, an acid may be added. Examples of acids added include hydrochloric acid, acetic acid, phosphoric acid, sulfuric acid, nitric acid, formic acid, propionic acid, acrylic acid, methacrylic acid, chlorous acid, hypochlorous acid and sulfurous acid. For finely adjusting the pH, it is preferable to appropriately use an acid having been diluted with water.

On the other hand, the primary rust-preventive coating composition is required to have good adhesion to a coating film formed on a coating film composed of the coating composition, in addition to the rust prevention effects including a long-term white rust prevention effect. Although a coating composition having a rust prevention effect is known, a coating composition having weldability and good cutting properties that are compatible with each other is unknown. Specifically, when a base with a coating film formed using a coating composition is subjected to welding or melt cutting, the coating film is exposed to high temperatures (at lowest 800°C), and a combustion product occurs on the welded surface or the cut surface of the dry coating film. Therefore, the coating composition is required to have weldability and good cutting properties such that this combustion product should have no influence on the speed of the welding or the melt cutting, the shape of the cut surface in the melt cutting and the strength of the welding. In order to obtain such properties, it is required to reduce the amounts of organic components included in the dry coating film (that is, coating composition) to the smallest.

From the viewpoint that such requirements are satisfied, it is advantageous to use a binder (A) comprising a metal oxide and a hydrolysis condensate obtained by subjecting, as the silane compound (a1), chlorosilane having high reactivity (silane compound (a1) wherein at least one of $R^{1a}$ to $R^{6a}$ in the general formula (I) and the structural formula (I') is a chlorine atom) to hydrolysis reaction and condensation reaction in the presence of the metal oxide sol (C) such as a colloidal silica water dispersing agent. In this case, there is a fear of aggregation of the metal oxide sol (C) because the binder (A) is exposed to the conditions of extremely low pH, and therefore, the amount of the chlorosilane added is appropriately restricted.

(Alkali silicate (C'))

The coating composition of the present invention may comprise an alkali silicate (C'). Examples of the alkali silicates (C') include lithium silicate, sodium silicate and ammonium silicate. Examples of the lithium silicates include Lithium Silicate 35, Lithium Silicate 45, Lithium Silicate 75 and ammonium silicate (all manufactured by Nippon Chemical Industrial Co., Ltd.), and Sodium Silicate Grade 1 and Sodium Silicate Grade 2 (manufactured by Sanko Chemical Colloid Co., Ltd.). The amount of this component added is usually 0 to 1 part by weight, preferably 0 to 0.5 part by weight, more preferably 0 to 0.3 part by weight, based on 1 part by weight of the binder (A). The alkali silicate (C') contributes to increase of a molecular weight of organopolysiloxane formed (hydrolysis condensate obtained by the hydrolysis reaction and the condensation reaction of the silane raw material (a)), and is effective for improving coating film strength and water resistance of a dry coating film formed from a coating composition comprising the binder (A) that comprises this alkali silicate.

Water (B)

The aqueous coating composition of the present invention includes water (B) in order to dissolve or disperse the hydrolysis condensate. Here, the water (B) may be water having been formed by the condensation reaction in the preparation of the binder (A) that is the hydrolysis condensate, or may be water having been used for the hydrolysis reaction of the silane compound (a1), etc., or may be water having been added during mixing of the binder (A) with the

later-described "other components" that are arbitrary components, such as a rust-preventive pigment (D).

The water (B) is included as an essential component in the coating composition, acts as a solvent or a dispersing agent for the binder (A) and has a function of stably keeping the binder (A) in the aqueous coating composition. On that account, an appropriate viscosity of the aqueous coating composition can be maintained, and workability with a spray, a brush, a roller or the like can be favorably maintained. From such viewpoints, in the preparation of the aqueous coating composition of the present invention, the water (B) is blended in an amount of 100 to 10, 000 parts by weight, preferably 200 to 5, 000 parts by weight, more preferably 300 to 2, 000 parts by weight, based on 100 parts by weight of the binder (A). From the same viewpoints, in the aqueous coating composition of the present invention, the water (B) is included usually in an amount of 3 to 5000 parts by weight, preferably 6 to 2500 parts by weight, more preferably 10 to 1000 parts by weight, based on 100 parts by weight of nonvolatile matters in the aqueous coating composition. The nonvolatile matters in the aqueous coating composition are nonvolatile matters obtained by keeping 1. 5 g of the aqueous coating composition under the conditions of 108°C for 3 hours and thereby removing volatile matters.

Other components

The aqueous coating composition of the present invention may comprise such rust-preventive pigment (D), white rust inhibitor (E), hydrophilic organic solvent (F), inorganic compound powder (G), other additives (H) for coating materials, etc. as enumerated below, when needed, in addition to the above components.

Rust-preventive pigment (D)

The aqueous coating composition of the present invention preferably comprises a rust-preventive pigment (D). The aqueous coating composition comprising the rust-preventive pigment (B) is preferably used as an aqueous rust-preventive coating composition.

The rust-preventive pigment (D) is not specifically restricted as long as it has rust prevention properties, and examples thereof include zinc dust and zinc alloy powder. Examples of the zinc alloy powders include powders of zinc magnesium alloy, zinc molybdenum alloy and zinc beryllium alloy. These may be used singly or in combination of two or more kinds.

From the viewpoints of rust prevention properties and white rust inhibition, the rust-preventive pigment (D) is preferably zinc dust and/or zinc alloy powder having a mean particle diameter of 2 μm to 20 μm. The mean particle diameter is a value measured by a laser method (using, for example, LASER MICRON SIZER 7000S).

When the aqueous coating composition is used as an aqueous rust-preventive coating composition, the amount of the zinc dust and/or the zinc alloy powder in the preparation of the aqueous coating composition of the present invention is preferably 30 to 800 parts by weight, more preferably 40 to 600 parts by weight, still more preferably 70 to 400 parts by weight, based on 100 parts by weight of the binder (A). If the amount thereof is less than the lower limit of the above range, satisfactory rust prevention properties cannot be obtained. If the amount thereof is more than the upper limit, not only is an increase in viscosity brought about to cause disadvantages in stirring or coating but also a substantial increase in cost is brought about.

For example, when the aqueous rust-preventive coating composition is used as an aqueous coating composition for primary rust prevention or an aqueous thick-coating type inorganic zinc coating composition, the content of the zinc dust and/or the zinc alloy powder is preferably 10 to 90 parts by weight, more preferably 20 to 80 parts by weight, based on 100 parts by weight of nonvolatile matters in the aqueous rust-preventive coating composition. Here, the nonvolatile matters in the aqueous rust-preventive coating composition are nonvolatile matters obtained by keeping 1.5 g of the aqueous rust-preventive coating composition under the conditions of 108°C for 3 hours and thereby removing volatile matters.

White rust inhibitor (E)

When the aqueous rust-preventive coating composition of the present invention comprises zinc dust or zinc alloy powder as the rust-preventive pigment (D) and is used as a primary rust-preventive coating composition (shop primer), and particularly when this composition is under the alkaline conditions due to presence of an alkali metal oxide, the zinc or the zinc alloy in a rust-preventive coating film formed from the composition undergoes oxidation reaction after formation of the coating film, and thereby zinc oxide is sometimes produced. This zinc oxide forms rust of white color (white rust) on the coating film surface, and when a topcoating film is formed from a topcoating material on the surface of the coating film, adhesion between these coating films is sometimes lowered. To cope with such a problem, removal work to remove the rust-preventive coating film by an appropriate means is needed prior to coating with the topcoating material, but such removal work is never permitted occasionally depending upon the requirements of the customers and the specific purpose. From the viewpoint that occurrence of white rust can be reduced, said reduction having been

strongly desired as above, the aqueous rust-preventive coating composition of the present invention preferably further comprises an antioxidant for zinc (white rust inhibitor (E)). As the white rust inhibitors (E), molybdenum (metallic molybdenum) and/or a molybdenum compound can be mentioned.

Examples of the molybdenum compounds include molybdenum trioxide, molybdenum oxide, molybdenum sulfide, molybdenum halide, molybdic acid, ammonium molybdate, phosphomolybdic acid, silicomolybdic acid, alkali metal salt of molybdic acid, alkali metal salt of phosphomolybdic acid, alkali metal salt of silicomolybdic acid, alkaline earth metal salt of molybdic acid, alkaline earth metal salt of phosphomolybdic acid, alkaline earth metal salt of silicomolybdic acid, manganese salt of molybdic acid, manganese salt of phosphomolybdic acid, manganese salt of silicomolybdic acid, basic nitrogen-containing compound salt of molybdic acid, basic nitrogen-containing compound salt of phosphomolybdic acid and basic nitrogen-containing compound salt of silicomolybdic acid. These may be used singly, or may be used in combination of two or more kinds.

The content of the white rust inhibitor (E) is preferably 0.05 parts by weight to 5 parts by weight, more preferably 0.3 parts by weight to 3 parts by weight, still more preferably 0.5 parts by weight to 2.0 parts by weight, based on 100 parts by weight of the rust-preventive pigment (D).

When the content of the white rust inhibitor (E) is in the above range, sufficient antioxidant action for zinc is obtained, and besides, lowering of rust-preventive ability of the rust-preventive pigment (D) can be prevented to thereby maintain rust prevention properties of the coating film.

<u>Hydrophilic organic solvent (F)</u>

The aqueous coating composition of the present invention may include a hydrophilic organic solvent (E), when needed.

Examples of the hydrophilic organic solvents (F) include acetone, methylalcohol, n-propyl alcohol, isopropyl alcohol, n-butyl alcohol, isobutyl alcohol, 2-butoxyethanol, 2-ethoxyethanol, 1-methoxy-2-propanol, 1-ethoxy-2-propanol, ethyl alcohol, 2-methoxyethanol, diacetone alcohol, dioxane, ethylene glycol, ethylene glycol diethyl ether, ethylene glycol dimethyl ether, ethylene glycol monoethyl ether, ethylene glycol monopropyl ether, ethylene glycol monobutyl ether and ethylene glycol monohexyl ether. These may be used singly, or may be used in combination of two or more kinds.

The aqueous coating composition of the present invention comprising the hydrophilic organic solvent (F) is preferable from the viewpoints of improvement in water solubility and water dispersibility of the rust-preventive pigment (D) and the later-described inorganic powder (G), improvement in wettability of the composition against the coating object (base) and improvement in drying properties and curability of the coating film. The aqueous coating composition of the present invention coprising the hydrophilic organic solvent (F) is also preferable from the viewpoints of water solubility and water dispersibility of the later-described inorganic powder (G), improvement in wettability of the composition against the coating object (base) and improvement in drying properties of the coating film. However, addition of a large amount of the hydrophilic organic solvent (F) is undesirable from the viewpoint of environmental regulation of VOC reduction, though water solubility and water dispersibility are enhanced. Therefore, it is desirable that when the amount of the whole coating composition is 100% by weight, the amount of the hydrophilic organic solvent is usually less than 15% by weight, preferably less than 10% by weight, more preferably less than 5% by weight.

<u>Inorganic powder (G)</u>

The aqueous coating composition of the present invention may comprise at least one inorganic powder (G) selected from the group consisting of metal powder (G1), zinc compound powder (G2), mineral powder (G3), alkali glass powder (G4) and inorganic compound powder (G5) that generates thermal decomposition gas (other than zinc dust and zinc alloy powder in the rust-preventive pigments (D)).

The aqueous coating composition of the present invention comprising the inorganic powder (G) is preferable because even if a steel plate (steel structure) with a coating film formed by applying the composition to a steel plate and curing it is subjected to welding, weld defects (pits, gas grooves and blowholes) rarely occur. When the aqueous coating composition of the present invention comprises the inorganic powder (G), the inorganic powder (G) may be added in advance together with the silane raw material (a) in the preparation of the binder (A), or may be added alone or as a mixture of it with the rust-preventive pigment (D), such as zinc dust or zinc alloypowder, and other additive components, to the binder (A) having been prepared.

In the aqueous coating composition of the present invention, the inorganic powder (G) is included preferably in an amount 70 to 200 parts by weight, more preferably 90 to 150 parts by weight, based on 100 parts by weight of the binder (A).

In the aqueous coating composition of the present invention, the inorganic powder (G) is included preferably in an amount 5 to 70 parts by weight, more preferably 10 to 50 parts by weight, based on 100 parts by weight of nonvolatile matters in the aqueous coating composition. Here, the nonvolatile matters in the aqueous coating composition are

nonvolatile matters obtained by keeping 1.5 g of the aqueous coating composition under the conditions of 108 °C for 3 hours and thereby removing volatile matters.

The metal powder (G1) has electrical conduction properties and has a function of facilitating moving of iron ion or zinc ion and thereby enhancing an anticorrosion effect. Examples of the metal powders (G1) include Fe-Si powder, Fe-Mnpowder, Fe-Crpowder, magnetic iron powder and iron phosphide. Examples of commercial products of the metal powders include "Ferro Silicon (Kinsei Matec Co., Ltd.)", "Ferro Manganese (Kinsei Matec Co., Ltd.)", "Ferro Chromium (Kinsei Matec Co., Ltd.)", "Iron Sand (Kinsei Matec Co., Ltd.)" and "Ferrophos 2132 (Occidental Chemical Corporation)".

Examples of the zinc compound powders (G2) include zinc chloride, zinc oxide, zinc sulfide and zinc sulfate. When the rust-preventive pigment (D) included in the aqueous coating composition of the present invention is metallic zinc and/or zinc alloy, the zinc compound powder (G2) is thought to have a function of controlling activity of oxidation reaction, such as degree of ionization of metallic zinc and/or zinc alloy (production of $Zn^{2+}$). When the aqueous primary rust-preventive coating composition comprises the zinc compound powder (G2), adequate rust prevention properties can be imparted to a dry coating film (rust-preventive coating film) formed from the composition. Examples of commercial products of the zinc compound powders (G2) include "Zinc Oxide Grade 1 (Sakai Chemical Industry Co., Ltd.) ", "Zinc Oxide Grade 3 (Hakusui Tech Co., Ltd., Sakai Chemical Industry Co., Ltd.)", "SachtolichHD (SachlebenChemieGmbH) "as zincsulfide, "ZincChloride (Nagai Chemical Industrial Co., Ltd.)" and "Zinc Sulfide (Fuji Kasei Co., Ltd.)".

Examples of the mineral powders (G3) include titanium mineral powder, calcium fluoride powder, silica powder, soda feldspar, potassium feldspar, zirconium silicate, wollastonite and diatomaceous earth. Examples of commercial products of the mineral powders include "Rutile Flour S (Kinsei Matec Co., Ltd.)", "Ilmenite Powder (Kinsei Matec Co., Ltd.)", "Fluorite 400 mesh (Kinsei Matec Co., Ltd.)", "A-PAX (Kinsei Matec Co., Ltd.)", "Ceramic Powder OF-T (Kinsei Matec Co., Ltd.)", "Aplite (Kinsei Matec Co., Ltd.)", "Silica MC-O (Maruo Calcium Co., Ltd.)", "Barite BA (Sakai Chemical Industry Co., Ltd.)", "Radiolite (Showa Chemical Industry Co., Ltd.)" and "Celite 545 (Johns Manville).

The alkali glass powder (G4) has a function such that alkali metal ion included in the glass powder, such as $Na^+$ or $K^+$, activates zinc (production of $Zn^{2+}$) or stabilizes arc during welding. As the alkali glass powder (G4), alkali glass powder obtained by pulverizing plate glass or bottle glass generally used, to about 5 $\mu$m to prepare glass powder and adjusting pH of the glass powder to not more than 8 by acid washing can be mentioned. A commercial product of such alkali glass powder is, for example, "APS-32JISP3801 Grade 5A (Kinsei Matec Co., Ltd.)".

The inorganic compound powder (G5) that generates thermal decomposition gas is powder of an inorganic compound that undergoes thermal decomposition (e.g., thermal decomposition at 500 to 1500°C) to generate a gas (e.g., $CO_2$, $F_2$), and has a function of removing bubbles of a gas, which is generated from an organic matter included in a binder or the like in a melting pool when a base with a coating film formed from a coating composition including the component G5 is welded, from the melting pool together with a gas derived from the inorganic compound powder (G5). Examples of the inorganic compound powders (G5) include calcium fluoride, calcium carbonate, magnesium carbonate and strontium carbonate. Examples of commercial products of the inorganic compound powders include "Fluorite 400 mesh (manufactured by Kinsei Matec Co., Ltd.)", "NS#400 (manufactured by Nitto Funka Kogyo K.K.)", "Magnesium-Carbonate (manufacturedbyTomita Pharmaceutical Co., Ltd.)" and "Strontium Carbonate A (manufactured by Honjo Chemical Corporation)".

Other additives (H) for coating materials

The aqueous coating composition of the present invention may comprise various additives (H) for coating materials, such as thixotropic agent, defoaming agent, wetting agent and anti-sag agent when needed. Specific examples of the additives (H) for coating materials include clay-based suspending agents, such as hectorite, bentonite and smectite, polycarboxylic acid-based thixotropic agents, fatty acid polyamide-based thixotropic agents, polyethylene oxide-based thixotropic agents, urethane associative thixotropic agents, acrylic polymer-based thixotropic agents, modified urea-based thixotropic agents, modified silicone-based surface conditioners, acrylic polymer-based surface conditioners, fluorine-containing polymer-based surface conditioners, dialkylsulfosuccinate-based surface conditioners, modified silicone-based defoaming agents and polymer-based defoaming agents.

When a silanol group or an alkoxy group is present on the surface of the hydrolysis condensate, reaction accelerators having an effect of accelerating reaction between such a group and an OH group on the base surface or in the pigment, such as acid, basic compound, organotin compound, aluminum chelate, titanium-based compound and amine-based compound, may be included.

Pigment volume ratio (PVC)/critical pigment volume ratio (CPVC)

From the viewpoints that a dry coating film composed of the aqueous coating composition of the present invention has good coating film strength and weldability that are compatible with each other and that favorable rust

prevention properties can be imparted to a rust-preventive coating film composed of the aqueous rust-preventive coating composition, the ratio ((PVC)/(CPVC)) of a pigment volume concentration (PVC) to a critical pigment volume concentration (CPVC) is preferably higher than 1, more preferably 1 to 1.5, still more preferably 1 to 1.35.

The pigment volume concentration (PVC) is a percentage concentration indicating a ratio of a volume of pigments to a volume of whole nonvolatile matters (all the components except water and organic solvents) in the coating composition. The "pigments" in "PVC" and "CPVC" in the present specification are insoluble in water, organic solvents and binders and indicate non-coating film-forming components (solid components obtained by removing the hydrolysis condensate from the whole nonvolatile matters (all the components except water and organic solvents) in the coating composition). Examples of such pigments include "rust-preventive pigment (D) ", "white rust inhibitor (E)", "inorganic compound powder (G)" and "other additives (H) for coating materials". However, other solid components can be also included so long as they are not binders (they do not contribute to formation of a coating film).

The nonvolatile matters are nonvolatile matters obtained by keeping 1. 5 g of the aqueous coating composition under the conditions of 108°C for 3 hours and thereby removing volatile matters.

The critical pigment volume concentration (CPVC) is a concentration showing a state in which voids among the pigments are filled with only a binder. In the vicinity of (around) the critical pigment volume concentration (CPVC), welding properties and coating film strength of the dry coating film and rust prevention properties of the coating film abruptly change, as shown below.

For example, the case of pigment volume ratio (PVC)/critical pigment volume ratio (CPVC)<1 shows a state in which the binder is sufficiently filled among the pigments, e.g., the rust-preventive pigment (D) such as zinc dust or inorganic powder. Therefore, a coating film formed from the composition exhibits high coating film strength, but a ratio of the amount of the binder included to the whole amount becomes excessively high. On that account, when this coating film is subjected to welding, organic matters in the binder component included in the coating film are gasified or carbonized to cause weld defects (pits, gas grooves, blowholes), and this sometimes leads to lowering of bond strength between welded portions of the coating films.

On the other hand, the case of pigment volume ratio (PVC) /critical pigment volume ratio (CPVC) >1. 5 shows a state in which the binder is not sufficiently filled among the pigments and voids are formed. In such a composition, the amount of the binder that connects the pigments with one another (or exists among the pigment particles) is insufficient, and a coating film formed from such a composition come to porous. That is to say, in this state, it tends to be difficult to obtain satisfactory coating film strength because of insufficient amount of the binder, though lowering of bond strength between welded portions of the dry coating films having weld defects can be reduced.

<u>Uses of aqueous coating composition</u>

The aqueous coating composition of the present invention is preferably a binder composition (aqueous binder composition) or a rust-preventive coating composition (aqueous rust-preventive coating composition).

The aqueous binder composition is preferably used as a coating agent used for surfaces of bases, such as mica plate, glass laminated sheet, glass sleeve, rubber, plastic and leather, a binder for asbestos, an anti-scattering curing agent or a surface reinforcing agent for asbestos-containing spray materials, an anti-scattering primary curing agent used in removal of asbestos-containing spray materials, a metal-based rust-preventive pigment or pollution inhibitor or surface protective agent, a stone material-based antifouling treatment agent or water repellant, a heat-resistant coating material, an additive therefor, or a binder or an additive for various coating materials.

The rust-preventive coating composition of the present invention is preferably a coating composition for primary rust prevention (aqueous coating composition for primary rust prevention) or a thick-coating type inorganic zinc coating composition (aqueous thick-coating type inorganic zinc coating composition).

The aqueous coating composition for primary rust prevention is used for the purpose of temporarily preventing rusting on the surface of steel used for automobiles, domestic electrical appliances and large steel structures (ships, bridges, plants, etc.) during manufacturing or construction, and specifically, it is preferably used as a wash primer, a non-zinc epoxy primer, an epoxy zinc-rich primer or an inorganic zinc primary rust-preventive coating composition.

The aqueous thick-coating type inorganic zinc coating composition is preferably used for cargo tanks and ballast tanks of ships such as chemical tankers and ships for exclusive use of methanol, and is particularly preferably used for ballast tanks required to have long-term resistance to corrosion by seawater.

<u>Preparation process for aqueous coating composition</u>

Such an aqueous coating composition of the present invention can be prepared by adding the binder (A), water (B), and if necessary, the aforesaid arbitrary components to a stirring/mixing container or the like and stirring and mixing them. In the stirring and mixing, a hydrolysis condensate obtained by purifying a preparation liquid obtained by the reaction of a specific silane compound may be added as the binder (A) to the stirring/mixing container or the like, or a

preparation liquid including a hydrolysis condensate may be added as the binder (A) to the stirring/mixing container or the like. For the stirring and mixing, a stirring/mixing device or a dispersing machine hitherto publicly known, such as an electric stirring machine or a sand mill, can be appropriately used.

Drying/curing method for aqueous coating composition (coating film-forming method)

A coating film (dry coating film) of the aqueous coating composition is usually formed by applying the aqueous coating composition to a surface of a base, e.g., an iron material such as steel material, iron material or stainless steel material, or an aluminummaterial, and then subj ecting the applied coating composition (wet coating film) to drying by heating or natural drying at room temperature to cure it.

In order to more efficiently evaporate the solvent, it is effective to systematize the aqueous coating composition together with an efficient heating device. Specifically, a combination with a tunnel type heating system using combustion gas, petroleum burner, heating by heating wire, induction heating or far infrared radiation heating device, a combination with a direct heating system using gas or petroleum burner, a combination with an infrared irradiation system or an induction heating system, etc. can be mentioned.

Rust-preventive coating film, base with coating film, etc.

The rust-preventive coating film of the present invention is a film formed by applying the aqueous rust-preventive coating composition to a base, e.g., an iron material such as steel material, iron material or stainless steel material, or an aluminum material (to form a wet coating film) and curing the applied composition (wet coating film). As the rust-preventive coating film, a primary rust-preventive coating film formed by curing an aqueous coating composition for primary rust prevention or a thick-coating type inorganic zinc rust-preventive coatingfilmformedby curing an aqueous thick-coating type inorganic zinc coating composition can be mentioned.

The steel structure with a coating film has, on a surface of a steel material, a rust-preventive coating film formed from the aqueous rust-preventive coating composition of the present invention. As the coating film of the steel structure with a coating film, a primary rust-preventive coating film formed from an aqueous coating composition for primary rust prevention or a thick-coating type inorganic zinc rust-preventive coating film formed form an aqueous thick-coating type inorganic zinc coating composition can be mentioned.

**Examples**

The present invention is further described with reference to the following examples, but it should be construed that the present invention is in no way limited to those examples. In the section of [Example], "%" denotes % by weight, unless otherwise noted.

[Example 1]

[Preparation of binder composition 1]

In a reaction container equipped with a stirrer, a water-cooled condenser, a dropping funnel, a thermometer and a heating cooling equipment, 400 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm) was placed and maintained at 30°C. To the sol, 40 g of $\gamma$-glycidoxypropyltrimethoxysilane and 3 g of methyltrichlorosilane were dropwise added as silane raw materials through a first dropping funnel and a second dropping funnel, respectively, at the same time over a period 1 hour.

After the dropwise addition was completed, the mixture was maintained at 50°C for about 1 hour, heated up to 70°C and aged for 2 hours to promote hydrolysis reaction and condensation reaction of the silane raw materials, whereby a hydrolysis condensate was obtained. pH of the liquid in which these reactions were occurring was 0.9 to 3.1.

Subsequently, the aqueous solution including the resulting hydrolysis condensate was subjected to vacuum distillation (40 to 15 kPa·s) to distill away methanol and a by-product (amount removed by distillation: 131 g), and the reaction product in the reaction container was cooled down to room temperature and subj ected to pressure filtration through a filter paper (JIS P3801 Grade 5A) to obtain 292 g of a slightly white opaque water-soluble resin liquid (binder composition 1).

[Evaluation of binder composition 1]

Properties of the binder composition 1 were evaluated in accordance with "Properties of binder composition"

in the later-described "Evaluation criteria". Further, a coating film (single) for evaluation which was a coating film formed from the binder composition 1 and a coating film (rust-preventive) for evaluation which was a coating film formed from a rust-preventive coating composition including the binder composition 1 were prepared in accordance with "Properties of binder composition coating film (single coating film properties) " and "Properties of rust-preventive coating film", respectively, and properties of each coating film for evaluation were evaluated.

Charts obtained by IR analysis, GPC analysis and $Si^{29}$NMR analysis of the binder composition 1 are shown in Fig. 1, Fig. 2 and Fig. 3, respectively.

As shown in Fig. 1, absorption derived from silica in the vicinity of 1100 $cm^{-1}$ is shown as a large peak in the IR chart. It is thought that a peak of organopolysiloxane (Si-O-Si group) has appeared in the vicinity of 1050 to 1120 $cm^{-1}$, but it is difficult to confirm it.

In the $Si^{29}$NMR chart of Fig. 2, it is confirmed that a peak (-98 ppm to -120 ppm) corresponding to absorption of silica and a peak (-50 ppm to -70 ppm) corresponding to siloxane bond (Si-O-Si group) of a hydrolysis condensate formed by hydrolysis reaction and condensation reaction of various silanes are separated fromeach other.

In the GPC chart obtained in the presence of alkoxysilane and chlorosilane, peaks of these silane compounds are shown in the minus region from the base line and at the positions of long retention time (not shorter than 12 minutes) because they have refractive indexes lower than that of tetrahydrofuran (eluate).

As shown in Fig. 3, however, it can be confirmed that a peak of the binder produced has appeared at the position of shorter retention time (not longer than 11 minutes). That is to say, from this peak, it can be confirmed that the silane raw materials underwent hydrolysis reaction and condensation reaction to form a substance of a higher molecular weight (presence of hydrolysis condensate).

From the above analyses, it has been understood that the silane raw materials underwent hydrolysis and dehydrocondensation to prepare organopolysiloxane (hydrolysis condensate) in Example 1.

[Example 2]

309 g of a transparent water-soluble resin liquid (binder composition 2) including a hydrolysis condensate was prepared in the same manner as in Example 1, except that 320 g of ion-exchanged water and 24 g of ethanol were added instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), and the silane raw materials were subjected to hydrolysis/condensation reaction under the conditions of pH of 1.5 to 6.5. The amount of a by-product and the like having been removed by vacuum distillation in the preparation process for the binder composition was 65 g.

Further, properties of the binder composition 2 were evaluated in the same manner as in Example 1, and the results obtained are set forth in Table 1.

An IR chart and a GPC chart of the binder composition (2) are shown in Fig. 4 and Fig. 5, respectively. In the IR chart of Fig. 4, a peak (1086 $cm^{-1}$) of Si-$OCH_3$ group derived from alkoxysilane used as a silane raw material is changed into a broad and large absorption peak in the vicinity of 1108 $cm^{-1}$ by virtue of hydrolysis reaction. Fromthis, it can be understood that organopolysiloxane (Si-O-Sigroup) was formed by hydrolysis/condensation reaction.

In the GPC chart of Fig. 5, peaks of alkoxysilane and chlorosilane that appear at the positions of long retention time (near 12 minutes) and in the minus region from the base line cannot be confirmed. Instead, a peak having appeared is shown at the position of shorter retention time (not longer than 11 minutes). That is to say, from the peak having appeared, it can be confirmed that the silane raw materials underwent hydrolysis reaction and condensation reaction to form a substance of a higher molecular weight (presence of hydrolysis condensate).

From the above analyses, it has been understood in Example 2 that the silane raw materials underwent hydrolysis and dehydrocondensation to prepare organopolysiloxane (hydrolysis condensate).

[Example 3]

381 g of a slightly white opaque water-soluble resin liquid (binder composition 3) including a hydrolysis condensate was prepared in the same manner as in Example 1, except that 3 g of methyltrichlorosilane was added singly as a silane raw material, 24 g of ethanol was added, and the silane raw material was subjected to hydrolysis/condensation reaction under the conditions of pH of 0.9 to 3.1. The amount of ethanol and the like having been removed by vacuum distillation in the preparation process for the binder composition was 38 g.

Further, properties of the binder composition 3 were evaluated in the same manner as in Example 1, and the results obtained are set forth in Table 1.

Charts obtained by IR analysis and GPC analysis are shown in Fig. 6 and Fig. 7, respectively. As shown in Fig. 6, absorption derived from silica in the vicinity of 1100 $cm^{-1}$ is shown as a large peak in the IR chart, and it can be understood that a specific sharp peak derived from a Si-$CH_3$ group having been retained even after the hydrolysis of

methyltrichlorosilane has appeared at 1260 $cm^{-1}$, though confirmation of this is difficult because a peak of organopolysiloxane (Si-O-Si group) and the above large peak overlap each other.

In the GPC chart shown in Fig. 7, peaks of alkoxysilane and chlorosilane that appear at the positions of long retention time (near 12 minutes) and in the minus region cannot be confirmed. Instead, a peak having appeared is shown at the position of shorter retention time (not longer than 11 minutes). That is to say, from this peak, it can be confirmed that the silane raw materials underwent hydrolysis reaction and condensation reaction to form a substance of a higher molecular weight (presence of hydrolysis condensate). From the above analyses, it has been understood that in Example 3, the silane raw materials underwent hydrolysis and dehydrocondensation to prepare organopolysiloxane (hydrolysis condensate).

[Comparative Example 1]

400 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm) including silicic anhydride was used as a binder composition (binder composition 1'). Further, properties of the binder composition 1' were evaluated in the same manner as in Example 1, and the results obtained are set forth in Table 1.

[Comparative Example 2]

398 g of a slightly white opaque water-soluble resin liquid (binder composition 2') including a hydrolysis condensate was prepared in the same manner as in Example 1, except that 40 g of γ-glycidoxypropyltrimethoxysilane was added singly as a silane raw material, 24 g of ethanol was added, and the silane raw material was subjected to hydrolysis/condensation reaction under the conditions of pH of 2.7 to 3.1. The amount of ethanol and the like having been removed by vacuum distillation in the preparation process for the binder composition was 55 g. Further, properties of the binder composition 2' were evaluated in the same manner as in Example 1, and the results obtained are set forth in Table 1.

[Table 1]

| | | | Ex. 1 | Ex. 2 | Ex. 3 | Comp. Ex. 1 | Comp. Ex. 2 |
|---|---|---|---|---|---|---|---|
| Raw materials | Water | Ion-exchanged water (g) | | 320 | | | |
| | Solvent | $C_2H_5OH$ (g) | | 24 | 24 | | 24 |
| | Metal oxide sol | Snow Tex O (g) | 400 | | 400 | 400 | 400 |
| | Silane raw materials | $CH_2(O)CHCH_2OC_3H_6Si(OCH_3)_3$ (g) | 4.0 | 40 | | | 40 |
| | | $Cl_3SiCH_3$ (g) | 3 | 3 | 3 | | |
| | Total (g) | | 443 | 387 | 427 | 400 | 464 |
| Removal by vacuum distillation | | | yes | yes | yes | no | yes |
| pH conditions of hydrolysis/condensation reaction of silane raw materials | | | 0.9-3.1 | 1.5-6.5 | 0.9-3.1 | - | 2.7-3.1 |
| Evaluation | Properties of binder composition | Yield (g) | 292 | 309 | 381 | 400 | 398 |
| | | Yield (%) | 65.9 | 79.8 | 89.2 | 100.0 | 85.8 |
| | | Nonvolatile content (%) | 38.3 | 10.7 | 24.3 | 20 | 28.2 |
| | | pH | 1.1 | 1.6 | 1.1 | 3.1 | 2.8 |
| | | Mean particle diameter of particles included in binder composition (nm) | 27 | - | 120 | 17 | 20 |
| | Properties of binder composition coating film | Film-forming properties | 5 | 4 | 5 | 1 | 4 |
| | | Water resistance | 5 | 3 | 3 | 1 | 1 |
| | Properties of rust-preventive coating film | Drying properties | 5 | 4 | 5 | 5 | 4 |
| | | Pencil hardness | 3H | 3B | 2B | < 6B | 6B |
| | | Nail scratch resistance | 5 | 5 | 4 | 1 | 1 |
| | | Water resistance | 3 | 3 | 3 | 1 | 1 |

Snow Tex O: silicic anhydride sol including silicic anhydride (water-dispersed colloidal silica) (silica content: 20% by weight, mean particle diameter: 20 nm, pH: 2-4), manufactured by Nissan chemical Industries, Ltd.

In Examples 1 to 3, a hydrolysis condensate was prepared by subjecting chlorosilane as a silane raw material or this silane compound and γ-glycidoxypropyltrimethoxysilane as silane raw materials to hydrolysis and dehydrocondensation under the acidic conditions of pH of 0.9 to 3.1 or 1.5 to 6.5 in the preparation of a binder composition, as described above. As shown in Table 1, the binder compositions in these examples were superior to the binder compositions of the comparative examples not only in single coating film properties (film-forming properties, water resistance) but also in drying properties (curing properties) and various rust-preventive coating film properties.

On the other hand, the results of Comparative Example 1 using the binder composition 1' (silicic anhydride sol) were inferior to the results of Examples 1 to 3 in any of single coating film properties and rust-preventive coating film properties, and besides, though a coating film was formed, strength of the coating film formed was extremely low and was on a level unsuitable for practical use.

In the case of the binder composition of Comparative Example 2, a hydrolysis condensate was prepared by subjecting only alkoxysilane to hydrolysis and dehydrocondensation without using chlorosilane as a silane raw material under the same acidic conditions. The binder composition 2' including this hydrolysis condensate suffered nothing by comparison with Examples 1 to 3 in film-forming properties and drying properties (curing properties), but it was conspicuously inferior to them in properties other than these properties (in water resistance, pencil hardness and nail scratch resistance).

[Example 4]

413 g of a slightly white opaque water-soluble resin liquid (binder composition 4) including a hydrolysis condensate was prepared in the same manner as in Example 1, except that 300 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 100 g of ion-exchanged water and 24 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), a mixture of 1 g of triethoxysilane and 40 g of γ-glycidoxypropyltrimethoxysilane, and 4 g of methyltrichlorosilane were added as silane raw materials through a first dropping funnel and a second dropping funnel, respectively, and these silane raw materials were subjected to hydrolysis/condensation reaction under the conditions of pH of 1.4 to 3.1. The amount of ethanol and the like having been removed by vacuum distillation in the preparation process for the binder composition was 54 g. Further, properties of the binder composition 4 were evaluated in the same manner as in Example 1, and the results obtained are set forth in Table 2.

[Example 5]

435 g of a slightly white opaque water-soluble resin liquid (binder composition 5) including a hydrolysis condensate was prepared in the same manner as in Example 1, except that 400 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm) and 24 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 8 g of a preparation product A obtained by mixing one equivalent of methyltriacetoxysilane with two equivalents of methyltrichlorosilane and subjecting them to reaction (hydrolysis/dehydrocondensation reaction) at room temperature for 1 day, 40 g of γ-glycidoxypropyltrimethoxysilane and 4 g of methyltriacetoxysilane were added as silane raw materials through a first dropping funnel, a second dropping funnel and a third dropping funnel, respectively, and these silane raw materials were subjected to hydrolysis/condensation reaction under the conditions of pH of 1.2 to 3. 1. The amount of ethanol, acetic acid and the like having been removed by vacuum distillation in the preparation process for the binder composition was 40 g. Further, properties of the binder composition 5 were evaluated in the same manner as in Example 1, and the results obtained are set forth in Table 2. The results obtained are set forth in Table 2.

[Example 6]

421 g of a slightly white opaque water-soluble resin liquid (binder composition 6) including a hydrolysis condensate was prepared in the same manner as in Example 1, except that 300 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 100 g of ion-exchanged water and 24 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 4 g of methyltris(methylethylketoxime)silane, 40 g of γ-glycidoxypropyltrimethoxysilane and 8 g of 1-trimethoxysilyl-2-trichlorosilylethane were added as silane raw materials through a first dropping funnel, a second dropping funnel and a third dropping funnel, respectively, and these silane raw materials were subjected to hydrolysis/condensation reaction under the conditions of pH of 2.4 to 3.1. The amount of ethanol, acetic acid and the like having been removed by vacuum distillation in the preparation process for the binder composition was 52 g. Further, properties of the binder composition 6 were evaluated in the same manner as in Example 1, and the results obtained are set forth in Table 2.

[Example 7]

382 g of a slightly white opaque water-soluble resin liquid (binder composition 7) including a hydrolysis condensate was prepared in the same manner as in Example 1, except that 400 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm) and 24 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 3 g of tetrachlorosilane was added singly as a silane raw material to the reaction container, and the silane raw material was subjected to hydrolysis/condensation reaction under the conditions of pH of 0.7 to 3.1. The amount of ethanol and the like having been removed by vacuum distillation in the preparation process for the binder composition was 41 g. Further, properties of the binder composition 7 were evaluated in the same manner as in Example 1, and the results obtained are set forth in Table 2.

[Example 8]

423 g of a white opaque water-soluble resin liquid (binder composition 8) including a hydrolysis condensate was prepared in the same manner as in Example 1, except that 400 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm) and 24 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 4 g of methyltrichlorosilane and a mixture of 40 g of γ-glycidoxypropyltrimethoxysilane and 8 g of methyltris(methylethylketoxime)silane were added as silane raw materials to the reaction container through a first dropping funnel and a second dropping funnel, respectively, and these silane raw materials were subjected to hydrolysis/condensation reaction under the conditions of pH of 2.9 to 3.5. The amount of ethanol and the like having been removed by vacuum distillation in the preparation process for the binder composition was 49 g. Further, properties of the binder composition 8 were evaluated in the same manner as in Example 1, and the results obtained are set forth in Table 2.

[Example 9]

410 g of a white opaque water-soluble resin liquid (binder composition 9) including a hydrolysis condensate was prepared in the same manner as in Example 1, except that 400 g of a silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 24 g of ethanol and 10 g of lithium silicate were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 4 g of methyltrichlorosilane and 40 g of γ-glycidoxypropyltrimethoxysilane were added as silane raw materials to the reaction container through a first dropping funnel and a second dropping funnel, respectively, and these silane raw materials were subjected to hydrolysis/condensation reaction under the conditions of pH of 2.2 to 3.1. The amount of ethanol and the like having been removed by vacuum distillation in the preparation process for the binder composition was 60 g. Further, properties of the binder composition 9 were evaluated in the same manner as in Example 1, and the results obtained are set forth in Table 2.

[Example 10]

296 g of a white opaque water-soluble resin liquid (binder composition 10) including a hydrolysis condensate was prepared in the same manner as in Example 1, except that 250 g of a titanium oxide sol (VP DispW2730X, manufactured by Nippon Aerosil Co., Ltd. , titanium oxide concentration based on 100% of sol: 30%, pH: 6.9) and 15 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 7.5 g of a preparation product A obtained by mixing one equivalent of methyltriacetoxysilane with two equivalents of methyltrichlorosilane and subj ecting them to reaction (hydrolysis/dehydrocondensation reaction) at room

temperature for 1 day, and a mixture of 25 g of γ-glycidoxypropyltrimethoxysilane and 5 g of Methyl Silicate 51 ("Ms 51" manufactured by Tama Chemicals, Ltd., main component: hydrolysis condensate of tetramethoxysilane ($CH_3O[Si(OCH_3)_2O]_nCH_3$, mean tetramer)) which was a hydrolyzate of tetramethoxysilane were added as silane raw materials to the reaction container through a first dropping funnel and a second dropping funnel, respectively, these silane raw materials were subjected to hydrolysis/condensation reaction under the conditions of pH of 1.3 to 7.3, and a product obtained by the hydrolysis/condensation reaction of the silane raw materials was not subjected to vacuum distillation. Further, properties of the binder composition 10 were evaluated in the same manner as in Example 1, and the results obtained are set forth in Table 2.

[Example 11]

322 g of a white opaque water-soluble resin liquid (binder composition B) including a hydrolysis condensate was prepared in the same manner as in Example 1, except that 250 g of an alumina sol (Aerodisp W630, manufactured by Nippon Aerosil Co., Ltd., alumina concentration based on 100% of sol: 30%, pH: 4) and 50 g of ion-exchanged water were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), 2.2 g of methyltrichlorosilane and 25 g of γ-glycidoxypropyltrimethoxysilane were added as silane raw materials to the reaction container through a first dropping funnel and a second dropping funnel, respectively, these silane raw materials were subjected to hydrolysis/condensation reaction under the conditions of pH of 1.8 to 4.0, and a product obtained by the hydrolysis/condensation reaction of the silane raw materials was not subjected to vacuum distillation. Further, properties of the binder composition 11 were evaluated in the same manner as in Example 1, and the results obtained are set forth in Table 2.

[Comparative Example 3]

402 g of a slightly white opaque water-soluble resin liquid (binder composition 3') including a hydrolysis condensate was prepared in the same manner as in Example 1, except that 400 g of an alkaline silicic anhydride sol (trade name: "Snow Tex 20", manufactured by Nissan Chemical Industries, Ltd., $SiO_2$ concentration based on 100% of sol: 20%, pH: 9.8, $Na_2O$ content in sol: not more than 400 ppm) and 24 g of ethanol were used instead of 400 g of the silicic anhydride sol (trade name: "Snow Tex O", manufactured by Nissan Chemical Industries, Ltd., $SiO_2$ concentration based on 100% of sol: 20%, pH: 2 to 4, $Na_2O$ content in sol: not more than 400 ppm), a mixture of 40 g of N-β (aminoethyl) γ-aminopropyltrimethoxysilane and 8 g of Methyl Silicate 51 ("Ms 51" manufactured by Tama Chemicals, Ltd., main component: hydrolysis condensate of tetramethoxysilane ($CH_3O\ [Si\ (OCH_3)_2O]_nCH_3$ (mean tetramer)) was added as a silane raw material to the reaction container, and the silane raw material was subjected to hydrolysis/condensation reaction under the conditions of pH of 9.8 to 11.8. The amount of ethanol and the like having been removed by vacuum distillation in the preparation process for the binder composition was 68 g. Further, properties of the binder composition 3' were evaluated in the same manner as in Example 1, and the results obtained are set forth in Table 2.

[Comparative Example 4]

In a reaction container equipped with a stirrer, a water-cooled condenser, a dropping funnel, a thermometer and a heating cooling equipment, 300 g of an alkaline silicic anhydride sol (trade name: "Snow Tex 20", manufactured by Nissan Chemical Industries, Ltd. , $SiO_2$ concentration based on 100% of sol: 20%, pH: 9.8, $Na_2O$ content in sol: not more than 400 ppm), 100 g of ion-exchanged water and 24 g of ethanol were placed and maintained at 30°C. To the container, a mixture of 1 g of triethoxysilane and 40 g of γ-glycidoxypropyltrimethoxysilane, and 4 of methyltrichlorosilane were dropwise added as silane raw materials through a first dropping funnel and a second dropping funnel, respectively, at the same time over a period 1 hour. pH of the reaction liquid was 7.5 to 9.9.

Several minutes after the dropwise addition of the raw material silanes, a gel-like white hydrolysis condensate was produced. After 20 minutes, the whole of the reaction liquid was thickened, and therefore, the addition was discontinued. Since the viscosity of the gel-like product was markedly high, the gel-like product could not be used for the evaluation of various properties as a binder composition.

[Table 2]

| | | | Ex.4 | Ex.5 | Ex.6 | Ex.7 | Ex.8 | Ex.9 | Ex.10 | Ex.11 | Comp. Ex.3 | Comp. Ex.4 |
|---|---|---|---|---|---|---|---|---|---|---|---|---|
| Raw materials | Water | Ion-exchanged water | 100 | | 100 | | | | | 50 | | 100 |
| | Solvent | $C_2H_5OH$ | 24 | 24 | 24 | 24 | 24 | 24 | 15 | | 24 | 24 |
| | Metal oxide sol | Snow Tex 0 | 300 | 400 | 300 | 400 | 400 | 400 | | | | |
| | | Snow Tex 20 | | | | | | | | | 400 | 300 |
| | | VP Disp W2730X | | | | | | | 250 | | | |
| | | Aerodisp W630 | | | | | | | | 250 | | |
| | Alkoxysilane | $CH_2(O)CHCH_2OC_3H_6Si(OCH_3)_3$ | 40 | 40 | 40 | | 40 | 40 | 25 | 25 | | 40 |
| | | $NH_2CH_2CH_2NHC_3H_6Si\ (OCH_3)_3$ | | | | | | | | | 40 | |
| | | Ms51 | | | | | | | 5 | | 8 | |
| | | $(C_2H_5O)_3Si\text{-}H$ | 1 | | | | | | | | | 1 |
| | Chlorosilanes | $Cl_3SiCH_3$ | 4 | | | | 4 | 4 | | 2.2 | | 4 |
| | | $SiCl_4$ | | | | 3 | | | | | | |
| | | Preparation product A | | 8 | | | | | 7.5 | | | |
| | | $(CH_3O)_3SiCH_2CH_2SiCl_3$ | | | 8 | | | | | | | |
| | Other silane compound and alkali silicate | $(CH_3(C_2H_5)C=N\text{-}O)_3SiCH_3$ | | | 4 | | 8 | | | | | |
| | | $(CH_3(C=O)\text{-}O)_3SiCH_3$ | | 4 | | | | | | | | |
| | | Lithium Silicate 75 | | | | | | 10 | | | | |
| Total (g) | | | 469 | 476 | 476 | 427 | 476 | 478 | 302.5 | 327.2 | 472 | 469 |
| Removal by vacuum distillation | | | yes | yes | yes | yes | yes | yes | no | no | yes | |
| pH conditions of hydrolysis/condensation reaction of silane raw materials | | | 1.4-3.1 | 1.2-3.1 | 2.4-3.1 | 0.7-3.1 | 2.9-3.5 | 2.2-3.1 | 1.3-7.3 | 1.8-4.0 | 9.8-11.8 | 7.5-9.9 |

(continued)

| | | | Ex.4 | Ex.5 | Ex.6 | Ex.7 | Ex.8 | Ex.9 | Ex.10 | Ex.11 | Comp. Ex.3 | Comp. Ex.4 |
|---|---|---|---|---|---|---|---|---|---|---|---|---|
| Evaluation | Properties of binder composition | Yield (g) | 413 | 435 | 421 | 382 | 423 | 410 | 296 | 322 | 402 | |
| | | Yield (%) | 88.1 | 91.4 | 88.4 | 89.5 | 88.9 | 85.8 | 97.9 | 98.4 | 85.2 | |
| | | Content of nonvolatile matters (%) | 24.3 | 31.4 | 23.9 | 22.2 | 28 | 28.8 | 36.6 | 36.2 | 28.9 | |
| | | Content of hydrolysis condensate (wt%) | 40.2 | 41.4 | 40.4 | 5.7 | 32.5 | 32.2 | 30.8 | 35.7 | 31.1 | |
| | | pH | 1.5 | 1.31 | 2.51 | 0.81 | 3.3 | 2.4 | 1.5 | 2.1 | 11.4 | |
| | | Mean particle diameter of particles included in binder composition (nm) | 35 | 33 | 31 | 33 | 31 | 23 | 75 | 166 | 26 | |
| | Properties of binder composition coating film | Film-forming properties | 5 | 5 | 5 | 5 | 5 | 5 | 5 | 5 | 5 | gelation during reaction |
| | | Water resistance | 3 | 3 | 4 | 3 | 5 | 5 | 3 | 4 | 3 | |

(continued)

| | | | Ex.4 | Ex.5 | Ex.6 | Ex.7 | Ex.8 | Ex.9 | Ex.10 | Ex.11 | Comp. Ex.3 | Comp. Ex.4 |
|---|---|---|---|---|---|---|---|---|---|---|---|---|
| | Properties of rust-preventive coating film | Binder content in coating material (%) | 10 | 10 | 10 | 10 | 9 | 9 | 10 | 12 | 10 | |
| | | Zinc dust content in coating material (%) | 39 | 37 | 39 | 38 | 36 | 37 | 38 | 39 | 40 | |
| | | Drying properties | 5 | 5 | 5 | 5 | 5 | 5 | 5 | 5 | 5 | |
| | | Pencil hardness | 3H | 3H | 2H | HB | 6H | 7H | 4H | 3H | 2B | |
| | | Nail scratch resistance | 5 | 5 | 5 | 4 | 5 | 5 | 5 | 4 | 3 | |
| | | Water resistance | 5 | 3 | 4 | 3 | 5 | 4 | 3 | 5 | 3 | |

*Content of hydrolysis condensate (wt%) = weight of hydrolysis condensate/(total weight of metal oxide in metal oxide sol and hydrolysis condensate)×100
*Snow Tex O: silicic anhydride sol including silicic anhydride (water-dispersed colloidal silica) (20%, mean particle diameter: 20 nm, pH: 2-4), manufactured by Nissan Chemical Industries, Ltd.
*Snow Tex 20: silicic anhydride sol including silicic anhydride (water-dispersed colloidal silica) (20%, mean particle diameter: 20 nm, pH: 9.5-10.0), manufactured by Nissan Chemical Industries, Ltd.
*Ms51: Methyl Silicate 51, manufactured by Tama Chemicals, Ltd.
*Preparation product A: preparation product obtained by mixing 1 equivalent of $(CH)_3(C=O)\text{-}O)_3SiCH_3$ with 2 equivalents of $Cl_3SiCH_3$ and reacting the mixture at room temperature for one day
*VP Disp W2730X: titanium oxide sol (30%), manufactured by Nippon Aerosil Co., Ltd.
*Aerodisp W630: alumina sol (30%), manufactured by Nippon Aerosil Co., Ltd.
*Lithium Silicate 75: lithium silicate aqueous solution ($LiO_2$: 1.3-1.5%), manufactured by Nippon Chemical Industrial Co., Ltd.

As shown in Table 2, the binder compositions of Examples 4 to 11 were prepared using raw material silane including a halogen-based silane compound under the conditions of pH of 0.4 to 8.0. On the other hand, the binder composition of Comparative Example 3 was prepared using only an alkoxysilane compound under the alkaline conditions of pH of 9.8 to 11.8. In Comparative Examples 4, trichlorosilane was added as a silane raw material together with alkoxysilane under the alkaline conditions of pH of 9.9, but when about 1/3 of the amount of this compound was added (under alkaline conditions of pH of 7.5 to 9.9), a gel-like product having extremely high viscosity was formed, and before addition of the whole amount, the liquid entirely became gel-like. On that account, the gel-like product could not be even used for each evaluation.

According to the property results of the examples and the comparative examples in Table 2, good results were obtained in any of single coating film properties and rust-preventive coating film properties in the examples. In Comparative Example 3, however, equivalent results were obtained in film-forming properties and drying properties (curing properties), but in other properties, particularly in pencil hardness, a conspicuously inferior result is obtained.

It has been confirmed that in any of the cases using, as raw material silane, chlorosilane only (Example 7), a combination of chlorosilane and alkoxysilane (Example 4), a combination of chlorosilane, alkoxysilane and an oxime-based silane compound (Examples 5, 6 and 8) and a combination of chlorosilane and alkoxysilane in the presence of lithium silicate (Example 9), good results were obtained in various properties.

It has been also confirmed that even if silica particles as the silicic anhydride sol had different mean particle diameters (Examples 4 to 9), or even if a titanium oxide sol or an alumina sol was used as a metal oxide sol instead of the silicic anhydride sol (Examples 10 and 11), good results were obtained in various properties.

[Examples 12 to 25, Comparative Examples 5 to 7]

Using the binder compositions prepared in Examples 1 to 11 and Comparative Examples 1 to 3, primary rust-preventive coating compositions were prepared on the basis of the formulations shown in Table 3. Properties of the primary rust-preventive coating compositions prepared were evaluated in accordance with the later-described "Evaluation of properties of primary rust-preventive coating composition", and the results obtained are set forth in Table 3 (Tables 3(1) and 3(2)).

Regarding the primary rust-preventive coating compositions prepared using the binder compositions of Examples 13, 19 and 20 and Comparative Example 7, weldability test and cutting property test were carried out on the basis of the test conditions of the later-described "Weldability test" and "Cutting property test". The results of the weldability test and the cutting property test are set forth in Table 4 and Table 5, respectively.

[Table 3-1]

| | | | Ex.12 | Ex.13 | Ex.14 | Ex.15 | Ex.16 | Ex.17 | Ex.18 | Ex.19 |
|---|---|---|---|---|---|---|---|---|---|---|
| Coating material formulation of primary rust-preventive coating composition | Binder composition | Number | binder composition 1 | | | binder composition 2 | binder composition 3 | binder composition 4 | | |
| | | Nonvolatile content (%) | 25.3 | 25.3 | 25.3 | 10.8 | 24.3 | 24.3 | 24.3 | 24.3 |
| | | Composition dry specific gravity | 1.69 | 1.69 | 1.69 | 0.98 | 2.12 | 1.56 | 1.56 | 1.56 |
| | | Content of hydrolysis condensate (wt%) *1 | 32.4 | 32.4 | 32.4 | ∞ | 13.6 | 40.2 | 40.2 | 40.2 |
| | | pH | 1.5 | 1.5 | 1.5 | 1.4 | 1.1 | 1.5 | 1.5 | 1.5 |
| | | Amount (g) | 30.0 | 30.0 | 30.0 | 35.0 | 30.0 | 35.0 | 35.0 | 35.0 |
| | Bentone LT (g) | | 0.2 | 0.2 | 0.2 | 0.2 | 0.2 | | | |
| | BYK-420 (g) | | | | | | | 0.16 | 0.16 | 0.16 |
| | BYK-024 (g) | | 0.02 | 0.02 | 0.02 | 0.02 | 0.02 | 0.02 | 0.02 | 0.02 |
| | Isopropyl alcohol (g) | | 5 | 5 | 5 | 1.5 | 5 | 4 | 4 | 4 |
| | n-Butyl alcohol (g) | | | | | | | | | |
| | Potassium feldspar (g) | | 23 | 23 | 23 | 23 | 23 | 23 | 23 | 23 |
| | Zinc dust (g) | | 45 | 45 | 45 | 45 | 45 | 50 | 50 | 50 |
| | Zinc oxide (g) | | 4 | 3 | 2 | | | | | |
| | Molybdenum trioxide (g) | | 0.13 | 0.13 | 0.13 | 0.03 | 0.06 | 0.06 | 0.03 | 0 |
| | | Total (g) | 107.35 | 106.35 | 105.35 | 104.75 | 103.28 | 112.24 | 112.21 | 112.18 |

(continued)

| | | | Ex.12 | Ex.13 | Ex.14 | Ex.15 | Ex.16 | Ex.17 | Ex.18 | Ex.19 |
|---|---|---|---|---|---|---|---|---|---|---|
| Properties of primary rust-preventive coating composition | pH | | 7.3 | 6.8 | 6.6 | 7.1 | 7.1 | 7.4 | 7.3 | 7.3 |
| | Content of nonvolatile matters (%) *2 | | 70.7 | 74.2 | 74.0 | 68.8 | 73.2 | 72.7 | 72.7 | 72.7 |
| | Zinc dust/nonvolatile matters (%) | | 59.3 | 57.0 | 57.7 | 62.5 | 59.5 | 61.3 | 61.3 | 61.3 |
| | Pigment volume concentration (PVC) | | 77.2 | 77.8 | 77.6 | 79.7 | 81.5 | 74.5 | 74.5 | 74.5 |
| | Critical pigment volume concentration (CPVC) | | 65.9 | 70.5 | 69.0 | 65.9 | 65.9 | 66.2 | 66.2 | 66.2 |
| | PVC/CPVC | | 1.17 | 1.10 | 1.12 | 1.21 | 1.24 | 1.12 | 1.12 | 1.12 |
| | Pot life (23°C, after 1 day) | Sedimentation prevention properties | 5 | 5 | 5 | 5 | 5 | 5 | 5 | 5 |
| | | Redispersibility | 5 | 5 | 5 | 5 | 5 | 5 | 5 | 5 |
| Properties of primary rust-preventive coating film | Tack free time (min) (20°C) | | 20 | 20 | 20 | 21 | 22 | 20 | 21 | 18 |
| | Mean film thickness of primary rust-preventive coating film (μm) | | 14.8 | 14.8 | 14.7 | 14.2 | 14.7 | 14.8 | 14.8 | 14.6 |
| | Pencil hardness | | 3H | 2H | 2H | 3B | 2B | 3H | 4H | 3H |
| | Adhesion properties | Adhesive strength | 3.9 | 3.2 | 4.0 | 2.4 | 2.6 | 4.2 | 4.4 | 4.1 |
| | | State of adhesion | 5 | 5 | 5 | 5 | 5 | 5 | 5 | 5 |
| | Rust prevention properties (after 2 months) | Rusting | 8 | 10 | 7 | 9 | 7 | 9 | 9 | 10 |
| | | White rust | 9 | 9 | 8 | 7 | 10 | 10 | 8 | 7 |
| Properties of topcoating film | Mean film thickness of topcoating film (μm) | | 310 | 310 | 310 | 310 | 310 | 310 | 310 | 310 |
| | Adhesion properties | Adhesive strength ($MP_{a.s}$) | 3.4 | 3.3 | 3.5 | 2.3 | 2.4 | 3.0 | 3.1 | 3.3 |
| | | State of adhesion | 5 | 5 | 5 | 4 | 4 | 5 | 5 | 5 |

[Table 3-2]

| | | | Ex.20 | Ex.21 | Ex.22 | Ex.23 | Ex.24 | Ex.25 | Comp. Ex.5 | Comp. Ex.6 | Comp. Ex.7 |
|---|---|---|---|---|---|---|---|---|---|---|---|
| Coating material formulation of primary rust-preventive coating composition | Binder composition | Number | binder composition 5 | binder composition 8 | binder composition 9 | binder composition 10 | binder composition 1 | binder composition 11 | binder composition 1' | binder composition 2' | binder composition 3' |
| | | Nonvolatile content (%) | 31.4 | 28.0 | 28.8 | 36.6 | 25.3 | 36.2 | 20.0 | 28.2 | 28.9 |
| | | Composition dry specific gravity | 1.54 | 1.69 | 1.70 | 2.94 | 1.69 | 1.90 | 2.60 | 1.76 | 1.72 |
| | | Content of hydrolysis condensate (wt%) | 41.4 | 32.5 | 32.2 | 30.8 | 32.4 | 37.5 | 0 | 28.7 | 31.1 |
| | | pH | 1.3 | 3.3 | 2.4 | 1.5 | 1.5 | 2.1 | 3.1 | 2.8 | 11.4 |
| | | Amount (g) | 25.0 | 34.0 | 33.0 | 20.0 | 30.0 | 30.0 | 25.0 | 25.0 | 25.0 |
| | Bentone LT (g) | | 0.2 | 0.2 | 0.2 | 0.2 | | 0.2 | 0.2 | 0.2 | 0.2 |
| | Bentone EW (g) | | | | | | 0.2 | | | | |
| | BYK-420 (g) | | | | | | | | | | |
| | BYK-024 (g) | | 0.02 | 0.02 | 0.02 | 0.02 | 0.02 | 0.02 | 0.02 | 0.02 | 0.02 |
| | Scorine SW (g) | | | | | | 0.10 | | | | |
| | Isopropyl alcohol (g) | | 3 | 4 | 4 | | | | 5 | 5 | 5 |
| | n-Butyl alcohol (g) | | 2 | 1 | 1 | 5 | | 3 | | | |
| | Potassium feldspar (g) | | 23 | 23 | 23 | 23 | 23 | 23 | 23 | 23 | 23 |
| | Zinc dust (g) | | 45 | 50 | 45 | 45 | 45 | 45 | 45 | 45 | 45 |
| | Zinc oxide (g) | | | | 4 | | 4 | | | | |
| | Molybdenum trioxide (g) | | 0.03 | 0.08 | 0.26 | 0.03 | 0.13 | 0.03 | 0.03 | 0.03 | 0.03 |
| | Total (g) | | 98.25 | 112.30 | 110.48 | 93.25 | 102.45 | 100.75 | 98.25 | 98.25 | 98.25 |

(continued)

| | | | Ex.20 | Ex.21 | Ex.22 | Ex.23 | Ex.24 | Ex.25 | Comp. Ex.5 | Comp. Ex.6 | Comp. Ex.7 |
|---|---|---|---|---|---|---|---|---|---|---|---|
| Properties of primary rust-preventive coating composition | pH | | 6.7 | 7.6 | 6.6 | 7.1 | 7.1 | 6.5 | 7.2 | 7.2 | 10.8 |
| | Content of nonvolatile matters (%) *2 | | 77.5 | 73.7 | 70.6 | 81.0 | 70.9 | 78.5 | 74.6 | 76.6 | 76.8 |
| | Zinc dust/nonvolatile matters (%) | | 59.1 | 60.4 | 57.7 | 59.5 | 59.3 | 56.9 | 61.4 | 59.8 | 59.6 |
| | Pigment volume concentration (PVC) | | 74.9 | 73.8 | 74.0 | 85.9 | 77.2 | 72.7 | 88.8 | 79.1 | 78.3 |
| | Critical pigment volume concentration (CPVC) | | 65.9 | 66.2 | 71.8 | 65.9 | 65.9 | 65.9 | 65.9 | 65.9 | 65.9 |
| | PVC/CPVC | | 1.14 | 1.12 | 1.03 | 1.30 | 1.17 | 1.10 | 1.35 | 1.20 | 1.19 |
| | Pot life (23°C, after 1 day) | Sedimentation prevention properties | 5 | 5 | 5 | 5 | 5 | 5 | 5 | 5 | 5 |
| | | Redispersibility | 5 | 5 | 5 | 5 | 5 | 5 | 5 | 5 | 5 |
| Properties of primary rust-preventive coating film | Tack free time (min) (20°C) | | 21 | 18 | 18 | 20 | 20 | 21 | 42 | 18 | 19 |
| | Mean film thickness of primary rust-preventive coating film (μm) | | 14.8 | 15.1 | 14.8 | 14.5 | 15.0 | 12.0 | 14.3 | 14.5 | 14.8 |
| | Pencil hardness | | 3H | 3H | 4H | H | 3H | HB | < 6B | 6B | 5B |
| | Adhesion properties | Adhesive strength | 3.8 | 3.9 | 3.0 | 2.3 | 4.1 | 2.2 | 0.0 | 0.8 | 1.4 |
| | | State of adhesion | 5 | 5 | 5 | 4 | 5 | 4 | 1 | 2 | 3 |
| | Rust prevention properties (after 2 months) | Rusting | 10 | 10 | 10 | 8 | 9 | 8 | 1 | 1 | 1 |
| | | White rust | 9 | 6 | 7 | 8 | 9 | 8 | 1 | 2 | 4 |

(continued)

| | | | Ex.20 | Ex.21 | Ex.22 | Ex.23 | Ex.24 | Ex.25 | Comp. Ex.5 | Comp. Ex.6 | Comp. Ex.7 |
|---|---|---|---|---|---|---|---|---|---|---|---|
| Properties of topcoating film | Mean film thickness of topcoating film (μm) | | 310 | 310 | 310 | 310 | 310 | 310 | 310 | 310 | 310 |
| | Adhesion properties | Adhesive strength ($MP_{a.s}$) | 2.2 | 3.0 | 4.1 | 2.7 | 3.5 | 2.1 | - | 0.4 | 1.3 |
| | | State of adhesion | 3 | 5 | 5 | 4 | 5 | 4 | - | 1 | 2 |

*Zinc dust: rust-preventive pigment (trade name "Zinc Dust F-2000" manufactured by Honjo Chemical Corporation)
*Potassium feldspar: mineral powder (trade name "Ceramics Powder OF-T", manufactured by Kinsei Matec Co., Ltd.)
*Zinc oxide: zinc compound powder (trade name "Zinc Oxide Grade 3", manufactured by Hakusui Tech Co., Ltd.)
*Molybdenum trioxide: white rust inhibitor (manufactured by Nippon Inorganic Colour & Chemical Co., Ltd.)
*Bentone LT: clay-based suspending agent, manufactured by Inabata Fine Tech Co., Ltd.)
*Bentone EW: clay-based suspending agent, manufactured by Inabata Fine Tech Co., Ltd.)
*BYK-420: rheology control agent (nonvolatile content: 53%) (manufactured by BYK Japan K.K.)
*BYK-024: rheology control agent (nonvolatile content: 52%) (manufactured by BYK Japan K.K.)
*Scorine SW: surface conditioner (dialkylsulfosuccinic acid ester salt) (manufactured by Shin-Nakamura Chemical Co., Ltd.)
*1: Content of hydrolysis condensate (wt%) = weight of hydrolysis condensate/(total weight of metal oxide in metal oxide sol and hydrolysis condensate)×100
*2: 1.5 g (Al) of the primary rust-preventive coating composition was held under the conditions of 108°C for 3 hours to remove volatile matters. Then, the amount (A2) of the nonvolatile matters remaining was measured to determine a content (A2/A1×100 (%)) of the nonvolatile matters included in the primary rust-preventive coating composition.

In the case where a silicic acid sol was used as a binder composition (Comparative Example 5), in the case where the binder composition 2' prepared without using chlorosilane was used (Comparative Example 6) and in the case where the binder composition 3' prepared by the hydrolysis/condensation reaction of the silane compound under the alkaline conditions was used (Comparative Example 7), not only insufficient results in pencil hardness of the primary rust-preventive coating film and adhesion properties of the primary rust-preventive coating film and the topcoating filmbut also extremely inferior results in rust prevention properties (rusting, white rust) of the primary rust-preventive coating film were observed.

On the other hand, when these properties of Examples 12 to 25 were compared with those of Comparative Examples 5 to 7, the examples exhibited better results than the comparative examples.

[Table 4]

<table>
<tr><th colspan="3"></th><th>Ex. 13</th><th>Ex. 19</th><th>Ex. 20</th><th>Comp. Ex. 7</th></tr>
<tr><td rowspan="3">Coatingmaterial properties</td><td colspan="2">Pigment volume concentration (PVC)</td><td>78.3</td><td>78.3</td><td>73.4</td><td>63.9</td></tr>
<tr><td colspan="2">Critical pigment volume concentration (CPVC)</td><td>66.3</td><td>66.3</td><td>66.3</td><td>69.9</td></tr>
<tr><td colspan="2">PVC/CPVC</td><td>1.18</td><td>1.18</td><td>1.11</td><td>0.91</td></tr>
<tr><td rowspan="6">Welding speed: 600 mm/min</td><td colspan="2">Mean film thickness (μm)</td><td>15.6</td><td>14.8</td><td>15.8</td><td>15.8</td></tr>
<tr><td rowspan="2">First layer side bead</td><td>Pits (number of pits)</td><td>0</td><td>0</td><td>0</td><td>1</td></tr>
<tr><td>Gas groove (mm)</td><td>0</td><td>0</td><td>0</td><td>3</td></tr>
<tr><td rowspan="3">Last layer side bead</td><td>Pits (number of pits)</td><td>0</td><td>1</td><td>0</td><td>5</td></tr>
<tr><td>Gas groove (mm)</td><td>1</td><td>0</td><td>0</td><td>9</td></tr>
<tr><td>Blowhole occurrence ratio (%)</td><td>0.52</td><td>0.45</td><td>0.42</td><td>4.7</td></tr>
<tr><td rowspan="6">Welding speed: 800 mm/min</td><td colspan="2">Mean film thickness (μm)</td><td>15.7</td><td>16.1</td><td>15.1</td><td>16.2</td></tr>
<tr><td rowspan="2">First layer side bead</td><td>Pits (number of pits)</td><td>0</td><td>0</td><td>0</td><td>2</td></tr>
<tr><td>Gas groove (mm)</td><td>0</td><td>0</td><td>0</td><td>7</td></tr>
<tr><td rowspan="3">Last layer side bead</td><td>Pits (number of pits)</td><td>0</td><td>0</td><td>0</td><td>5</td></tr>
<tr><td>Gas groove (mm)</td><td>5</td><td>3</td><td>0</td><td>22</td></tr>
<tr><td>Blowhole occurrence ratio (%)</td><td>0.62</td><td>0.55</td><td>0.53</td><td>5.1</td></tr>
</table>

By reference to the results of the weldability test in Table 4, it can be seen that in the case where the binder composition 3' prepared under the alkaline conditions was used and the value of pigment volume ratio (PVC)/critical pigment volume ratio (CPVC) was set to be less than 1 (Comparative Example 7), a large number of pits occurred, the length of a gas groove was long, and the blowhole occurrence ratio was very high at welding speeds of 600 mm/min and 800 mm/min, and thus, many defects took place in the welding process.

On the other hand, in the case where the binder compositions 1, 4 and 5 were used as the bonder compositions and the value of pigment volume ratio (PVC)/critical pigment volume ratio (CPVC) was set to be not less than 1 (Examples 13, 19 and 20), the number of pits was prominently small, the length of a gas groove was conspicuously short and the blowhole occurrence ratio was as good as not more than 1% at both of welding speeds of 600 mm/min and 800 mm/min.

[Table 5]

<table>
<tr><th colspan="2"></th><th>Ex. 13</th><th>Ex. 19</th><th>Ex. 20</th><th>Comp. Ex. 7</th></tr>
<tr><td colspan="2">Mean film thickness (μm)</td><td>15</td><td>16</td><td>15</td><td>15</td></tr>
<tr><td rowspan="3">Cutting speed</td><td>450 mm/min.</td><td>WES-first grade</td><td>WES-first grade</td><td>WES-first grade</td><td>WES-third grade</td></tr>
<tr><td>500 mm/min.</td><td>WES-first grade</td><td>WES-first grade</td><td>WES-first grade</td><td>WES-third grade</td></tr>
<tr><td>550 mm/min.</td><td>WES-first grade</td><td>WES-first grade</td><td>WES-second grade</td><td>frameout</td></tr>
</table>

By reference to the cutting property test in Table 5, it can be seen that the cutting properties in Comparative Example 7 were on the "level of WES-third grade" (cutting speed: 450 mm/min, 500 mm/min), and flameout took place at a cutting speed of 550 mm/min.

On the other hand, in Examples 13, 19 and 20, the cutting properties were on the "level of WES-first grade" at any cutting speed, and thus, remarkably favorable results were obtained.

[Examples 26 to 30]

The binder composition 5 prepared in Example 5 and various components shown in Table 6 were blended by a paint shaker to prepare aqueous thick-coating type inorganic zinc coating compositions. Properties of the aqueous thick-coating type inorganic zinc coating compositions prepared were evaluated in accordance with the measurement/evaluation conditions described in the later-described "Evaluation of properties of aqueous thick-coating type inorganic zinc coating composition". The results obtained are set forth in Table 6.

[Table 6]

| | | | Ex.26 | Ex.27 | Ex.28 | Ex.29 | Ex.30 |
|---|---|---|---|---|---|---|---|
| Coating material formulation | Water-dispersible resin (Ex. 5) | | 3.7 | 5.6 | 5.6 | 5.6 | 5.6 |
| | JSR_0589 | | 1.0 | 1.0 | 1.0 | 1.0 | 1.0 |
| | Larvik Superfine 25 | | 16.0 | 16.0 | 16.0 | 16.0 | 16.0 |
| | Unisper PG K-10 | | 4.0 | 4.0 | 3.2 | 3.6 | 3.6 |
| | Mica Powder #325 | | | | 0.8 | 0.4 | 0.2 |
| | TTK Talc | | | | | | 0.2 |
| | Diluent water | | 0.8 | | | | |
| | Disperbyk-194 | | 0.2 | 0.2 | 0.2 | 0.2 | 0.2 |
| | BYK-420 | | 0.1 | 0.1 | 0.04 | 0.05 | 0.05 |
| | SN Defoamer 777 | | | | 0.03 | 0.04 | 0.04 |
| | CoatOSil 7608 | | | | 0.03 | 0.03 | 0.03 |
| | Butyl carbitol/texanol (1:1) | | | | 0.02 | 0.02 | 0.02 |
| | Total | | 25.80 | 26.90 | 26.92 | 26.94 | 26.94 |
| Coating material properties | pH | | 6.3 | 6.3 | 6.2 | 6.2 | 6.2 |
| Coating material properties, 1 week drying | Density ($g/cm^3$) | Coating material | 2.86 | 2.71 | 2.71 | 2.71 | 2.71 |
| | | Coating film | 4.50 | 4.35 | 4.35 | 4.35 | 4.35 |
| | Nonvolatile content (%) | NV (wt%) | 83.9 | 82.3 | 82.3 | 82.3 | 82.3 |
| | Pigment volume concentration (%) | PVC (%) | 79.1 | 74.8 | 74.8 | 74.8 | 74.8 |
| | Dry coating film thickness ($\mu m$) | | 130-150 | 115-130 | 170-180 | 165-185 | 170-175 |
| | Pencil hardness | | B | H | B | B | B |
| | Rubbing properties (10-20 reciprocations) | Water | 3 | 4 | 3 | 4 | 3 |
| | | MEK | 3 | 4 | 4 | 5 | 4 |

(continued)

| | | | Ex.26 | Ex.27 | Ex.28 | Ex.29 | Ex.30 |
|---|---|---|---|---|---|---|---|
| Mild steel plate, 1 week drying | Coating film appearance | Crack | 5 | 5 | 5 | 5 | 5 |
| | Inside of coating film | Foaming | 5 | 5 | 5 | 5 | 5 |
| | Adhesion properties | Cross-cut peel test | 3 | 4 | 5 | 4 | 2 |
| | | Knife cut | 5 | 5 | 5 | 5 | 5 |
| Sandblasted steel plate, 1 week drying | Coating film appearance | Crack | 4 | 5 | 4 | 5 | 5 |
| | Inside of coating film | Foaming | 5 | 5 | 5 | 5 | 5 |
| | Adhesion properties | Cross-cut peel test | 4 | 4 | 5 | 5 | 5 |
| | | Knife cut | 5 | 5 | 5 | 5 | 5 |
| JSR_0589: SB latex (nonvolatile content: 50%)<br>Larvik Superfine 25: zinc dust<br>Unisper PG K-10: potassium feldspar<br>Mica Powder #325: mica<br>TTK Talc: talc<br>Diluent water: ion-exchanged water<br>Disperbyk-194: wetting dispersing agent (nonvolatile content: 53%)<br>BYK-420: rheology control agent (nonvolatile content: 52%)<br>SN Defoamer 777: defoaming agent<br>CoatOSil 7608: surface conditioner<br>Butyl carbitol/texanol (1:1): co-solvent | | | | | | | |

As shown in Table 6, properties of the aqueous thick-coating type inorganic zinc coating compositions of Example 26 to 30 suffered nothing by comparison with solvent-based thick-coating type inorganic zinc coating compositions that are the mainstream coating compositions at present.

<Evaluation method, evaluation criteria>

Evaluation of binder composition

(I) Properties of binder composition

(1) IR measurement conditions

Device: Spectrum One manufactured by Perkin Elmer Inc.
Sample preparation method: KBR method
Standard substance: polystyrene
Dehydration method: A binder composition was placed in an egg plant type flask, and while adding a small amount of methanol dividedly several times, azeotropic distillation was carried out by the use of a rotary evaporator to remove water. The ultimate vacuum pressure in this operation was 2. 8 kPa·S, and by lowering the flask temperature to not higher than 30 °C, a viscous transparent liquid (IR measurement sample) was prepared.

(2) GPC measurement conditions

Device: HLC-8120GPC manufactured by Tosoh Corporation
Column: Super H2000 + H4000 manufactured by Tosoh Corporation, 6 mm (inner diameter), 15 cm (each length)
Eluate: tetrahydrofuran (THF)
Flow rate: 0.500 ml/min
Detector: RI
Temperature of column constant temperature bath: 40°C
Standard Substance: polystyrene
Sample preparation method: To a small amount of the IR measurement sample prepared in the IR measurement was added tetrahydrofran to precipitate silica. Then, a small amount of calcium chloride was further added to perform dehydration, and the resulting solution was filtered through a membrane filter to remove silica precipitated and calcium chloride, whereby a GPC measurement sample was obtained.

(3) NMR measurement conditions

Device: ADVANCE III manufactured by Bruker Corporation
Probe: 10 mmø, probe for exclusive use of Si
Eluate: $D_2O$
Measured nucleus: $Si^{29}$
Measurement conditions: 59.2 degrees pulse, repeating time: 1.3 sec, cumulative number: 1024, measuring time: 10 hours and 19 minutes

(4) Measurement of mean particle diameter

In a given cell (volume: 15 ml), 3.5 ml of ion-exchanged water was placed, then several drops of a binder composition were added as a sample and dispersed in the ion-exchanged water to prepare a test liquid, and a mean particle diameter of particles included in the binder composition was measured.

Device: Photal FPAR-1000 manufactured by Otsuka Electronics Co., Ltd.
Measuring method: dynamic light scattering method
Solvent: water
Temperature: 22°C

(5) Measurement of pH

pH of a binder composition obtained was measured under the following conditions.

Device: pH meter HM-30R manufactured by DKK-TOA Corporation
Measuring method: glass electrode
Solvent: water
Temperature: room temperature

(6) Content of nonvolatile matters

1.5 g (A1) of a binder composition obtained was held under the conditions of 108°C for 3 hours to remove volatile matters. Subsequently, the amount (A2) of nonvolatile matters remaining was measured, and a content of the nonvolatile matters in the binder composition (A2/A1×100 (%)) was determined.

(7) Evaluation of storage stability

50 g of a binder composition obtained was placed in a 50 ml glass bottle, then the glass bottle was set in a constant temperature dryer under the conditions of 50°C, and the binder composition in the glass bottle was visually observed until the binder composition gelled.

(II) Properties of binder composition coating film (properties of single coating film)

A binder composition was diluted with ion-exchanged water so that the concentration of nonvolatile matters would become 15% by weight. Subsequently, the binder composition having been controlled in the nonvolatile matter concentration was uniformly applied with an applicator to a cold rolled steel plate having been subjected to surface roughening treatment by sandpaper of #80, and the composition was cured at room temperature for one day to prepare a coating film (single) for evaluation.

Using the resulting coating film (single) for evaluation, properties were evaluated in accordance with the evaluation criteria. The value of a mean film thickness of the coating film (single) for evaluation was calculated from measured values of film thickness at the arbitrary positions on the coating film surface. The mean film thickness of each of the coating films (single) for evaluation of the examples and the comparative examples was in the range of 14 to 16 $\mu$m.

(1) Film-forming properties

Uniformity of the coating film (single) for evaluation and the degree of nail scratch strength were evaluated.

[Evaluation criteria]

| Uniformity | Nail scratch strength | |
|---|---|---|
| uniformly cured | not scratched at all | 5 |
| uniformly cured | slightly scratched | 4 |
| striped pattern in part | slightly scratched or peeled | 3 |
| striped pattern but cured | easily scratched or peeled | 2 |
| Insufficiently cured | broken into powder | 1 |

(2) Water resistance

A coating film surface of the coating film (single) for evaluation was lightly rubbed with waste paper having been wetted with water, and the degree of damage on the coating film surface was evaluated on the basis of the following 5 ranks.

[Evaluation criteria]

| | |
|---|---|
| There is no damage. | 5 |
| The film surface exhibits slight opaqueness. | 4 |
| The film surface becomes a little opaque. | 3 |
| A base of the cold rolled steel plate is partially seen. | 2 |
| The coating film is completely removed. | 1 |

(III) Properties of rust-preventive coating film

A binder composition, potassium feldspar, zinc dust as a rust-preventive pigment and ion-exchanged water were mixed on the basis of the following test formulation to prepare an aqueous rust-preventive coating composition. Here, the content of nonvolatile matters in the binder composition included in the rust-preventive coating composition had been controlled to 10% by weight based on 100% by weight of the rust-preventive coating composition.

The rust-preventive coating composition obtained was uniformly applied with an applicator to a cold rolled steel plate (JIS G3141 SPCC-SB, 150 mm × 70 mm × 0.8 mm) having been subjected to surface roughening treatment by sandpaper of #80, to prepare a coating film (rust-preventive (uncured)) for evaluation, and the uncured coating film, i.e., rust-preventive coating film (uncured) for evaluation, was cured at room temperature for one day to prepare a coating film (rust-preventive) for evaluation. The value of a mean film thickness of the coating film (rust-preventive) for evaluation was calculated from measured values of film thickness at the arbitrary positions on the coating film surface. The mean

film thickness of each of the coating films (rust-preventive) for evaluation of the examples and the comparative examples was in the range of 14 to 16 μm.

Aqueous rust-preventive coating composition (part(s) by weight)

| | |
|---|---|
| Binder composition (nonvolatile matter) | 10 |
| Potassium feldspar | 18 |
| Zinc dust | 36 |
| Ion-exchanged water | Residue |
| Total | 100 |

Using the resulting coating film (rust-preventive) for evaluation, properties were evaluated in accordance with the evaluation criteria. In the evaluation of drying properties, not the coating film (rust-preventive) for evaluation but the coating film (rust-preventive (uncured)) for evaluation was used.

(1) Drying properties (curing properties)

While lightly pressing down a coating film surface of the coating film (rust-preventive (cured)) for evaluation with a finger, the state of sticking was observed. The time elapsedbefore the tack disappeared and the film was completely dried was evaluated on the basis of the following 5 ranks.

[Evaluation criteria]

| | |
|---|---|
| Within 5 minutes | 5 |
| Within 7 minutes | 4 |
| Within 10 minutes | 3 |
| Within 15 minutes | 2 |
| More than 15 minutes | 1 |

(2) Water resistance

A coating film surface of the coating film (rust-preventive) for evaluation was lightly rubbed with waste paper having been wetted with water, and the degree of damage on the coating film surface was evaluated on the basis of the following 5 ranks.

[Evaluation criteria]

| | |
|---|---|
| There is no damage. | 5 |
| The film surface exhibits slight opaqueness. | 4 |
| The film surface becomes a little opaque. | 3 |
| A base of the cold rolled steel plate is partially seen. | 2 |
| The rust-preventive coating film is completely removed. | 1 |

(3) Nail scratch resistance

A coating film surface of the coating film (rust-preventive) for evaluation was lightly scratched with nail, and the degree of a scratch mark made on the coating film surface was evaluated on the basis of the following 5 ranks.

[Evaluation criteria]

| | |
|---|---|
| There is no scratch mark. | 5 |
| A slight scratch mark remains. | 4 |
| A scratch mark apparently remains. | 3 |
| A scratch mark is made so that a base of the cold rolled steel plate may be partially seen. | 2 |
| The whole of a base of the cold rolled steel plate is seen. | 1 |

(4) Pencil hardness

A coating film surface of the coating film (rust-preventive) for evaluation was scratched with a lead of a pencil in accordance with JIS K5600 8.4.2 Pencil scratch value (hand scratch) measuring method, and a pencil hardness (6B to 9H) that left no scratch mark on the coating film was recorded.

Evaluation of properties of primary rust-preventive coating composition

(I) Properties of primary rust-preventive coating composition

(1) Pot life

A 1 liter-volume can, which a primary rust-preventive coating composition was included in, was sealed and allowed to stand still in a constant temperature room at 23°C for one day. Thereafter, the can was opened, and sedimentation of a pigment in the primary rust-preventive coating composition was visually observed and evaluated on the basis of the following evaluation criteria. Further, after stirring of the pigment having been sedimented (sediment), the dispersibility (redispersibility) was visually observed and evaluated on the basis of the following evaluation criteria.

[Evaluation criteria]

[Table 7]

| Sedimentation properties | | Redispersibility | |
|---|---|---|---|
| 5 | There is no sedimentation, and the composition is in a good state. | 5 | After redispersing, there is neither sediment of pigment nor a lump of dispersed pigment, and the composition is in a good state. |
| 4 | The pigment is slightly sedimented. | 4 | There is a slight lump of redispersed pigment. |
| 3 | The pigment is partially sedimented. | 3 | There is a lump of redispersed pigment. |
| 2 | There is soft sediment. | 2 | By lightly stirring sediment, the sediment is redispersed. |
| 1 | There is hard sediment. | 1 | There is sediment, and the sediment is not redispersed by light stirring. |

(II) Properties of primary rust-preventive coating film

(1) Tack free time

A sandblasted plate (JIS G 3101, SS400, size: 150 mm × 70 mm × 2.3 mm) having been heated in advance at 45°C was used as a base, and the sandblasted surface of the base was coated with a primary rust-preventive coating composition by the use of an air spray gun so that the mean film thickness would become 15 μm. Subsequently, the base coated with the composition was allowed to stand in a constant temperature room of a temperature of 23°C and a relative humidity of 50% for one minute in accordance with the standard of JIS K5600 1-6 to form a partially cured primary rust-preventive coating film, whereby a test plate was prepared. The value of a mean film thickness of the primary rust-preventive coating film was calculated from measured values of film thickness at the arbitrary positions on the coating film surface. The mean film thickness of each of the rust-preventive coating films of the examples and the comparative examples was in the range of 14 to 16 μm.

While pressing down a coating film surface of the test plate with a thumb in the vertical direction to the coating film surface, the test plate was rotated by about 90 degrees, and a force was applied so as to destroy the coating film. When the coating filmwas destroyed, the test plate was allowed to stand in a constant temperature bath for one minute under the above conditions again to promote curing, and this operation was repeated while changing the position at which the coating film was pressed down. The time before the base became out of sight was measured, and the measured time was regarded as a tack free time.

(2) Pencil hardness of primary rust-preventive coating film

A surface of a mild steel plate (size: 150 mm × 70 mm × 2.3 mm) having been heated in advance at 45 °C was coated with a primary rust-preventive coating composition by the use of an air spray gun so that the mean film thickness would become 15 μm. Subsequently, this plate was allowed to stand in a constant temperature room of a temperature of 23°C and a relative humidity of 50% for 7 days to form a topcoating film, whereby a test plate was prepared. The value of a mean film thickness of the topcoating film was calculated from measured values of film thickness at the arbitrary positions on the coating film surface. The mean film thickness of each of the topcoating films of the examples and the comparative examples was in the range of 14 to 16 μm.

The test plate prepared was subjected to the pencil scratch value (hand scratch) measuring method defined by JIS 5400, 8.4.2 to evaluate a hardness of the coating film.

(3) Adhesion properties of primary rust-preventive coating film

A sandblasted plate (JIS G 3101, SS400, size: 150 mm × 70 mm × 2.3 mm) having been heated in advance at 45°C was used as a base, and the sandblasted surface of the base was coated with a primary rust-preventive coating composition by the use of an air spray gun so that the mean film thickness would become 15 μm. Subsequently, this plate was allowed to stand in a constant temperature room of a temperature of 23°C and a relative humidity of 50% for one week to form a primary rust-preventive coating film, whereby a test plate was prepared.

To a surface of the primary rust-preventive coating film of the test plate, a bottom surface of a cylindrical mild steel jig having a diameter of 16 mm and a length of 20 mm was bonded with an epoxy adhesive, and they were allowed to stand for 24 hours. Thereafter, a head of the jig was pulled in the normal direction to the primary rust-preventive coating film surface by a pull gauge (manufactured by Motofuj i Co. , Ltd.) to peel the jig from the topcoating film surface, whereby an adhesive strength (cohesive failure and/or force required for interfacial peeling) was measured.

Further, a ratio (cohesive failure area ratio (%)) of an area of the primary rust-preventive coating film having suffered cohesive failure to an area (100%) of the peel surface, and a ratio (interfacial peeling area ratio (%)) of an area of interfacial peeling between the base and the primary rust-preventive coating film to an area (100%) of the peel surface were visually measured, and the state of adhesion of the primary rust-preventive coating film was evaluated on the basis of the following criteria.

[Evaluation criteria]

5: The cohesive failure area ratio of the primary rust-preventive coating film is 100%.
4: The cohesive failure area ratio of the topcoating film is 80 to 99%, and the interfacial peeling area ratio is 1 to 20%.
3: The cohesive failure area ratio of the topcoating film is 50 to 79%, and the interfacial peeling area ratio is 21 to 50%.
2: The cohesive failure area ratio of the topcoating film is 20 to 49%, and the interfacial peeling area ratio is 51 to 80%.
1: The cohesive failure area ratio of the topcoating film is 0 to 19%, and the interfacial peeling area ratio is 81 to 100%.

(4) Rust prevention properties (rusting, white rust) of primary rust-preventive coating film

A sandblasted surface of a sandblasted plate (JIS G 3101, SS400, size: 150 mm × 70 mm × 2.3 mm) having been heated in advance at 45°C was coated with a primary rust-preventive coating composition by the use of an air spray gun so that the mean film thickness would become 15 μm.

Subsequently, this plate was dried in a constant temperature room of a temperature of 23°C and a relative humidity of 50% for one week in accordance with the standard of JIS K5600 1-6 to prepare a test plate. The value of a mean film thickness of the coating film of the test plate was calculated from measured values of film thickness at the arbitrary positions on the coating film surface. The mean film thickness of each of the coating films of the examples and the comparative examples was in the range of 14 to 16 μm.

Subsequently, this test plate was set on an outdoor exposure stand (in the site of Otake Research Center of

Chugoku Marine Paints, Ltd.) and allowed to stand for 2 months. Here, the test plate was fixed in such a manner that the coated surface of the test plate faced south and that the test plate was inclined at 45 degrees to the horizontal plane.

After the test plate was allowed to stand for 2 months, a ratio (%) of an area of the test plate surface having suffered rusting to an area of the whole surface of the test plate and a ratio (%) of an area of the test plate surface on which white rust had been formed to an area of the whole surface of the test plate were measured to evaluate the state of rusting and the occurrence of white rust. The evaluation criteria are as follows.

[Evaluation criteria for the state of rusting (ASTM D610)]

10: Rusting is not observed, or the rusting area ratio is not more than 0.01%.
9: Rusting is observed extremely slightly, or the rusting area ratio is more than 0.01% but not more than 0.03%.
8: Rusting is observed slightly, or the rusting area ratio is more than 0.03% but not more than 0.1%.
7: The rusting area ratio is more than 0.1% but not more than 0.3%.
6: Spot rusting is observed apparently, or the rusting area ratio is more than 0.3% but not more than 1%.
5: The rusting area ratio is more than 1% but not more than 3%.
4: The rusting area ratio is more than 3% but not more than 10%.
3: The rusting area ratio is more than 10% but not more than 1/6 (16%).
2: The rusting area ratio is more than 1/6 (16%) but not more than 1/3 (33%).
1: The rusting area ratio is more than 1/3 (33%) but not more than 1/2 (50%).
0: The rusting area ratio is more than about 1/2 (50%) and up to 100%.

[Evaluation criteria for occurrence of white rust]

10: White rust is not observed, or the white rust area ratio is not more than 0.01%.
9: White rust is observed extremely slightly, or the white rust area ratio is more than 0.01% but not more than 0.03%.
8 : White rust is observed slightly, or the white rust area ratio is more than 0.03% but not more than 0.1%.
7: The white rust area ratio is more than 0.1% but not more than 0.3%.
6: White rust spots are observed apparently, or the white rust area ratio is more than 0.3% but not more than 1%.
5: The white rust area ratio is more than 1% but not more than 3%.
4: The white rust area ratio is more than 3% but not more than 10%.
3: The white rust area ratio is more than 10% but not more than 1/6 (16%).
2: The white rust area ratio is more than 1/6 (16%) but not more than 1/3 (33%).
1: The white rust area ratio is more than 1/3 (33%) but not more than 1/2 (50%).
0: The white rust area ratio is more than about 1/2 (50%) and up to 100%.

(III) Properties of topcoating film

(1) Adhesion properties of topcoating film

A sandblasted surface of a sandblasted plate (JIS G 3101, SS400, size: 150 mm × 70 mm × 2.3 mm) having been heated in advance at 45°C was coated with a primary rust-preventive coating composition by the use of an air spray gun so that the mean film thickness would become 15 μm. Subsequently, this plate was allowed to stand in a constant temperature room of a temperature of 23°C and a relative humidity of 50% for one week to form a primary rust-preventive coating film. Onto this primary rust-preventive coating film, a high-solid epoxy coatingmaterial (tradename: Nova2000, manufacturedbyChugokuMarine Paints, Ltd.) was applied by a spray, and then allowed to stand for one week to form a cured coating film (topcoating film).

The value of each mean film thickness of the primary rust-preventive coating film and the topcoating film was calculated from measured values of film thickness at the arbitrary positions on each coating film surface. The mean film thickness of each of the rust-preventive coating films of the examples and the comparative examples was in the range of 14 to 16 μm, and the mean film thickness of each of the topcoating films of the examples and the comparative examples was 310 μm.

To a surface of the topcoating film, a bottom surface of a cylindrical mild steel jig having a diameter of 16 mm and a length of 20 mm was bonded with an epoxy adhesive, and they were allowed to stand for 24 hours. Thereafter, a head of the jig was pulled in the vertical direction to the topcoating film surface by a pull gauge (manufactured by

Motofuji Co., Ltd.) to peel the jig from the topcoating film surface, whereby an adhesive strength (cohesive failure and/or force required for interfacial peeling) was measured.

Further, a ratio (cohesive failure area ratio (%)) of an area of the topcoating film having suffered cohesive failure to an area (100%) of the peel surface, and a ratio (interfacial peeling area ratio (%)) of an area of interfacial peeling between the topcoating film and the primary rust-preventive coating film to an area (100%) of the peel surface were visually measured, and the state of adhesion of the topcoating film was evaluated on the basis of the following criteria.

[Evaluation criteria]

5: The cohesive failure area ratio of the topcoating film is 100%.
4: The cohesive failure area ratio of the topcoating film is 80 to 99%, and the interfacial peeling area ratio is 1 to 20%.
3: The cohesive failure area ratio of the topcoating film is 50 to 79%, and the interfacial peeling area ratio is 21 to 50%.
2: The cohesive failure area ratio of the topcoating film is 20 to 49%, and the interfacial peeling area ratio is 51 to 80%.
1: The cohesive failure area ratio of the topcoating film is 0 to 19%, and the interfacial peeling area ratio is 81 to 100%.

<u>(2) Weldability test</u>

Surfaces of two sandblasted plates (JIS G 3101, SS400, size of lower plate: 600 mm × 100 mm × 12 mm, size of upper plate: 600 mm × 50 mm × 12 mm) having been heated in advance at 45°C were coated with a primary rust-preventive coating composition by the use of an air spray gun so that the mean film thickness would become 15 μm. Subsequently, these plates were dried in a constant temperature room of a temperature of 23 °C and a relative humidity of 50% for one week in accordance with JIS K5600 1-6 to form primary rust-preventive coating films, whereby such an upper plate and a lower plate as shown in Fig. 8 (a) were prepared. In Fig. 8(a), black portions indicate coated areas. The value of a mean film thickness of each primary rust-preventive coating film was calculated from measured values of film thickness at the arbitrary positions on the coating film surface. The mean film thickness of each of the primary rust-preventive coating films of the examples and the comparative examples was in the range of 14 to 16 μm.

Subsequently, by means of carbonic acid gas automatic arc welding, the upper plate and the lower plate were welded at the both layers (first layer side, last layer side) simultaneously while maintaining a given torch angle and a given torch shift, as shown in Fig. 8(b). The welding conditions are set forth in Table 8.

Subsequently, weldability was evaluated in the following manner.

First, the number of pits (pit(s)) formed in the region of a length of 500 mm of the welded portion, except the region of each length of 50 mm of the welding start portion and the welding end portion including the tack weld portion before welding, and a length (mm) of a gas groove were confirmed. Further, a laser notch (V-shaped cut) was made on the weldline on the first layer side, and the last layer side welded portion was fractured by a press along the weldline. Then, the total area of blowholes occurring on the fractured surface (width of blowhole × length thereof × number of blowholes) was divided by an evaluation area to determine a blowhole occurrence ratio (%).

[Table 8]

| Weldability test conditions | |
|---|---|
| Welding method | twin-single method |
| Welding speed (mm/min) | 600 |
| Current (A) | 320 |
| Voltage (V) | 32 |
| Welding wire * | MX Z-200, φ 1.2 mm |
| Torch angle | 45°, forward tilt 5° |
| Torch shit | 100 mm |
| Wire extension | 25 mm |
| Route gap | 0 |
| *: manufactured by Kobe Steel, Ltd. | |

(3) Cutting property test

A sandblasted surface of a sandblasted plate (JIS G 3101, SS400, size: 300 mm × 600 mm × 12 mm) having been heated in advance at 45°C was coated with a primary rust-preventive coating composition by the use of an air spray gun so that the mean film thickness would become 15 μm. Subsequently, this plate was dried in a constant temperature constant humidity room of a temperature of 23 °C and a relative humidity of 50% for seven days in accordance with JIS K5600 1-6 to prepare a test plate. This test plate was cut under the cutting conditions described in Table 9, and the resulting cut surface was evaluated on the basis of the Quality Standard for Gas Cut Surface WES2801 (1980) of the Japan Welding Engineering Society. The value of a mean film thickness of the coating film of the test plate was calculated from measured values of film thickness at the arbitrary positions on the coating film surface. The mean film thickness of each of the coating films of the examples and the comparative examples was in the range of 14 to 16 μm.

[Table 9]

| Cutting property test conditions | |
|---|---|
| | Applicable conditions |
| Groove | I groove |
| Preheating gas | LPG |
| Oxygen pressure | 7 kgf/cm$^2$ |
| Type of cutting tip | 10.2 divergent cutting tip, manufactured by Koike Sanso Kogyo Co., Ltd. |
| Cutting tip/steel plate distance | 12 mm |
| Cutting speed | 450, 500, 550 mm/min (cutting at intervals of 50 mm) |

Evaluation of properties of aqueous thick-coating type inorganic zinc coating composition

(I) Properties of aqueous thick-coating type inorganic zinc coating composition

(1) Coating material density

A metal pycnometer (volume: 100 ml) was charged with 100 ml of an aqueous thick-coating type inorganic zinc coating composition, and a mass of the pycnometer charged with the coating composition was measured. Subsequently, a coating material density (g/ml) was calculated from the following calculation formula.

[Math. 1]

Coating material density (g/ml) = (mass (g) of pycnometer charged with coating composition − mass (g) of empty pycnometer)/100 (ml)

(2) Content of nonvolatile matters

1.5 g (A1 (g)) of an aqueous thick-coating type inorganic zinc coating composition was held for 3 hours under the conditions of 108°C to remove volatile matters. Subsequently, the amount (A2 (g)) of nonvolatile matters remaining was measured, and a content (%) of the nonvolatile matters included in the aqueous thick-coating type inorganic zinc coating composition was calculated from the following formula.

$$\text{Content of nonvolatile matters (\%)} = A2/A1 \times 100$$

(II) Evaluation of properties of thick-coating type inorganic zinc coating film

(1) Coating film density

From the true specific gravity and the amount of each solid matter (nonvolatile matter) (pigment, resin or the like), a volume of each solid matter was calculated. Subsequently, a coating film density (g/ml) was calculated from the following formula.

[Math. 2]

$$\text{Coating film density (g/ml)} = \sum(\text{amount of solid matter}) / \sum(\text{amount of solid matter/true specific gravity of solid matter})$$

(2) Properties of thick-coating type inorganic zinc coating film

A surface of a mild steel plate (size: 150 mm × 70 mm × 2.3 mm) having been heated in advance at 45°C was coated with an aqueous thick-coating type inorganic zinc coating composition by the use of an air spray gun so that the mean film thickness would become 150 μm. Subsequently, this plate was allowed to stand in a constant temperature room of a temperature of 23°C and a relative humidity of 50% for 7 days to form a thick-coating type inorganic zinc coating film, whereby a test plate A was prepared.

Further, a sandblasted surface of a sandblasted plate (JIS G 3101, SS400, size: 150 mm × 70 mm × 2.3 mm) having been heated in advance at 45 °C was coated with an aqueous thick-coating type inorganic zinc coating composition by the use of an air spray gun so that the mean film thickness would become 15 μm. Subsequently, this plate was allowed to stand in a constant temperature room of a temperature of 23°C and a relative humidity of 50% for 7 days to form a thick-coating type inorganic zinc coating film, whereby a test plate B was prepared.

The test plates A and B prepared were subj ected to the following various evaluation. The value of each mean film thickness of the thick-coating type inorganic zinc coating films of the test plate A and the test plate B was calculated from measured values of film thickness at the arbitrary positions on each coating film surface. The mean film thickness of each of the thick-coating type inorganic zinc coating films of the examples and the comparative examples was in the range of 110 to 190 μm.

(2-1) Appearance properties (presence or absence of cracks)

Cracks formed on the thick-coating type inorganic zinc coating film surfaces of the test plate A and the test plate B were observed, and the appearance was evaluated on the basis of the following evaluation criteria.

[Evaluation criteria]

5: no cracks
4: less than 2 cracks each having a length of not more than 2 mm
3: less than 3 cracks each having a length of 2 to 3 mm
2: less than 3 cracks each having a length of 3 to 10 mm
1: not less than 3 cracks each having a length of more than 10 mm

(2-2) Foaming properties (inside of coating film)

The thick-coating type inorganic zinc coating films of the test plate A and the test plate B were each cut with a knife, and the number of bubbles seen on each cut surface was visually observed while comparing each cut surface with a boundary sample, and evaluation was carried out on the basis of the following criteria.

The bubbles observed are those derived from a gas included during the preparation of the coating material, blending components and a gas generated by the reaction of the blending components with a solvent.

[Evaluation criteria]

5: No bubble is observed, or very few bubbles are observed.
4: Few bubbles are observed.
3: Considerable bubbles are observed.
2. A large number of bubbles are observed.
1: Almost all the surface is covered with bubbles.

(2-3) Adhesion properties (cross-cut peel test)

The thick-coating type inorganic zinc coating films of the test plate A and the test plate B were each cut with a cutting tool at intervals of 4 mm in accordance with the adhesion property test (cross-cut method) defined by JIS K5600-5-6 to form a lattice, whereby 25 squares of each coating film were prepared.

Subsequently, an adhesive surface of a transparent pressure-sensitive adhesive tape was placed on the lattice so as to be parallel with a pair of squares, and the transparent pressure-sensitive adhesive tape was allowed to surely adhere to the coating film surface by rubbing the tape with a finger. After the lapse of 5 minutes, the transparent pressure-sensitive adhesive tape was surely pulled apart from the coating film surface in 0.5 second to 1 second in the direction of 60° to the coating film surface, and then the number of squares (number of residual squares) of the coating film remaining in the lattice was counted, followed by evaluation on the basis of the following criteria.

[Evaluation criteria]

5: The number of residual squares is 24 or more.
4: The number of residual squares is 20 to 23.
3: The number of residual squares is 15 to 19.
2: The number of residual squares is 10 to 14.
1: The number of residual squares is 9 or less.

(2-4) Adhesion properties (knife cut test)

A knife was set on each of the thick-coating type inorganic zinc coating films of the test plate A and the test plate B in such a manner that an edge of the knife came into vertical contact with the coating film, and using a certain point as a cardinal point, 4 cuts each having a length of 1.5 cm (cuts in the vertical direction) were made at an angle of 30° to 50°, followed by observation of a degree of peeling of the coating film. Immediately after that, the edge of the knife was made almost even, and cuts each having a width of 1 mm to 3 mm (cuts in the horizontal direction) were made along the previous cuts, followed by observation of a degree of peeling of the coating film.

[Evaluation criteria]

5: Even by the cuts in any of the vertical and the horizontal directions, the coating film has nothing unusual and is adhering.
4: Owing to the horizontal cuts, peeling is observed in the vicinity of the cardinal point of the cuts.
3: Owing to the horizontal cuts, peeling is observed in the portions along the cuts.
2: Owing to the vertical cuts, peeling is observed in the vicinity of the cardinal point of the cuts.
1: Owing to the vertical cuts, peeling is observed.

(2-5) Rubbing properties

Tissue paper soaked with water or methyl ethyl ketone (MEK) was moved back and forth on the thick-coating type inorganic zinc coating film surface of the test plate A in the range of several centimeters, and a degree of migration of a pigment to the tissue paper from the coating film (dissolution or breakage of coating film) was observed, followed by evaluation of rubbing properties on the basis of the following evaluation criteria.

[Evaluation criteria]

5: Even by rubbing the coating film surface 20 times or more, exposure of a base and migration of a pigment are not confirmed at all.

4: By rubbing the coating film surface 20 times, migration of a pigment is slightly confirmed though exposure of a base cannot be confirmed.

3: By rubbing the coating film surface 20 times, migration of a pigment is a little confirmed though exposure of a base is not confirmed.

2: By rubbing the coating film surface 20 times, partial exposure of a base is confirmed together with migration of a pigment.

1: By rubbing the coating film surface 19 times or less, migration of a pigment is conspicuous, and further, such dissolution or breakage of the coating film as causes exposure of a base is confirmed.

## Claims

**1.** Aqueous coating composition comprising a binder (A) and water (B) ;
the said binder (A) comprising a hydrolysis condensate obtained by subjecting a silane raw material (a) comprising a silane compound (a1) represented by the following general formula (I) to hydrolysis reaction and condensation reaction under the conditions of pH of 0.4 to 8.0;

$$R^{1a}SiR^{2a}R^{3a}\text{- }(Y_m\text{-}SiR^{4a}R^{5a})_p\text{-}R^{6a} \qquad (I)$$

wherein $R^{1a}$ to $R^{6a}$ are each independently a hydrogen atom, a halogen atom, an alkyl group of 1 to 10 carbon atoms, an alkenyl group of 2 to 5 carbon atoms, an aryl group of 6 to 12 carbon atoms, Z-$R^{7a}$-(Z is a halogen atom, a hydroxyl group, an epoxy group, an acryloxy group, a methacryloxy group or a polyoxyalkylene group represented by $R^aO\text{-}(R^bO)_c\text{-}$ ($R^a$ is a hydrogen atom or an alkyl group of 1 to 10 carbon atoms, $R^b$ is an alkylene group of 2 to 4 carbon atoms, and c is an integer of 1 to 15), and $R^{7a}$ is an alkylene group of 1 to 10 carbon atoms), or -$OR^{8a}$ ($R^{8a}$ is a hydrogen atom, an alkyl group of 1 to 10 carbon atoms or an alkenyl group of 1 to 10 carbon atoms),
at least one of $R^{1a}$ to $R^{6a}$ is a halogen atom,
Y is an oxygen atom or an alkylene group of 1 to 10 carbon atoms,
m is 0 or 1, and
p is an integer of not less than 0,
wherein the said silane raw material (a) comprises a silane compound (a2) represented by the following general formula (II) in addition to the silane compound (a1);

$$R^{1b}SiR^{2b}R^{3b}\text{- }(Y'_{m'}\text{-}SiR^{4b}R^{5b})_{p'}\text{-}R^{6b} \qquad (II)$$

wherein $R^{1b}$ to $R^{6b}$ are each independently a hydrogen atom, an alkyl group of 1 to 10 carbon atoms, an alkenyl group of 2 to 5 carbon atoms, an aryl group of 6 to 12 carbon atoms, Z-$R^{7b}$- (Z is a hydroxyl group, an epoxy group, an acryloxy group, a methacryloxy group or a polyoxyalkylene group represented by $R^{a'}O\text{-}(R^{b'}O)_{c'}\text{-}$($R^{a'}$ is a hydrogen atom or an alkyl group of 1 to 10 carbon atoms, $R^{b'}$ is an alkylene group of 2 to 4 carbon atoms, and c' is an integer of 1 to 15), and $R^{7b}$ is an alkylene group of 1 to 10 carbon atoms), -$OR^{8b}$ ($R^{8b}$ is an alkyl group of 1 to 10 carbon atoms or an alkenyl group of 1 to 10 carbon atoms), a hydroxyl group or an acyl group,
at least one of $R^{1b}$ to $R^{6b}$ is a hydroxyl group, a -$OR^{8b}$ group ($R^{8b}$ is a alkyl group of 1 to 10 carbon atoms), Z-$R^{7b}$- (Z is an epoxy group, and $R^{7b}$ is an alkylene group of 1 to 10 carbon atoms), or an acyl group,
Y' is an oxygen atom or an alkylene group of 1 to 10 carbon atoms,
m' is 0 or 1, and
p' is an integer of not less than 0, and
wherein the water (B) is blended in an amount of 100 to 10,000 parts by weight based on 100 parts by weight of the binder (A).

2. The aqueous coating composition as claimed in claim 1, wherein the said binder (A) comprises a hydrolysis condensate and a metal oxide represented by the following chemical formula (III), the said hydrolysis condensate obtained by subjecting the silane raw material (a) to hydrolysis reaction and condensation reaction in the presence of a metal oxide sol (C) comprising the metal oxide;

$$M_pO_r \qquad (III)$$

wherein M is Si, Al or Ti, and p and r are each independently an integer of 1 to 3.

3. The aqueous coating composition as claimed in claim 1 or 2, which further comprises a pigment, and a ratio ((PVC) / (CPVC)) of a pigment volume concentration (PVC) to a critical pigment volume concentration (CPVC) in the aqueous coating composition is higher than 1.

4. The aqueous coating composition as claimed in any one of claims 1 to 3, which further comprises a rust-preventive pigment (D).

5. The aqueous coating composition as claimed in claim 4, wherein the said rust-preventive pigment (D) comprises zinc powder and/or zinc alloy powder having a mean particle diameter of 2 to 20 $\mu$m.

6. The aqueous coating composition as claimed in any one of claims 1 to 5, which further comprises metallic molybdenum and/or a molybdenum compound as a white rust inhibiter (E).

7. Use of the aqueous coating composition as claimed in any one of claims 1 to 3 as a binder composition.

8. Use of the aqueous coating composition as claimed in any one of claims 4 to 6 as a rust-preventive coating composition.

9. The use as claimed in claim 8, which is for primary rust prevention.

10. The use as claimed in claim 8, which is as a thick-coating type inorganic zinc coating composition.

11. A primary rust prevention coating method for a steel material, comprising applying the coating composition as claimed in any one of claims 4 to 6 to a surface of a steel material and then curing the applied coating composition to form a primary rust-preventive coating film.

12. A rust prevention coating method for a steel material, comprising applying the coating composition as claimed in any one of claims 4 to 6 to a surface of a steel material and then curing the applied coating composition to form a thick-coating type inorganic zinc rust-preventive coating film.

13. A steel structure having, on a surface of a steel material, a primary rust-preventive coating film formed from the coating composition as claimed in any one of claims 4 to 6.

14. A steel structure having, on a surface of a steel material, a thick-coating type inorganic zinc rust-preventive coating film formed from the coating composition as claimed in any one of claims 4 to 6.

**Patentansprüche**

1. Wässrige Beschichtungszusammensetzung umfassend ein Bindemittel (A) und Wasser (B), wobei das Bindemittel (A) ein Hydrolysekondensat umfasst, das erhältlich ist, indem ein Silan-Rohmaterial (a), das eine durch die folgende allgemeine Formel (I) dargestellte Silanverbindung (a1) umfasst, einer Hydrolysereaktion und Kondensationsreaktion unter den Bedingungen eines pH-Werts von 0,4 bis 8,0 unterzogen wird;

$$R^{1a}SiR^{2a}R^{3a}\text{-}(Y_m\text{-}SiR^{4a}R^{5a})_p\text{-}R^{6a} \qquad (I)$$

worin $R^{1a}$ bis $R^{6a}$ jeweils unabhängig voneinander ein Wasserstoffatom, ein Halogenatom, eine Alkylgruppe mit 1 bis 10 Kohlenstoffatomen, eine Alkenylgruppe mit 2 bis 5 Kohlenstoffatomen, eine Arylgruppe mit 6 bis 12 Kohlenstoffatomen, Z-$R^{7a}$- (Z ist ein Halogenatom, eine Hydroxylgruppe, eine Epoxygruppe, eine Acryloxygruppe, eine

Methacryloxygruppe oder eine Polyoxyalkylengruppe dargestellt durch $R^aO-(R^bO)_c-$ ($R^a$ ist ein Wasserstoffatom oder eine Alkylgruppe mit 1 bis 10 Kohlenstoffatomen, $R^b$ ist eine Alkylengruppe mit 2 bis 4 Kohlenstoffatomen und c ist eine ganze Zahl von 1 bis 15), und $R^{7a}$ ist eine Alkylengruppe mit 1 bis 10 Kohlenstoffatomen) oder $-OR^{8a}$ sind ($R^{8a}$ ist ein Wasserstoffatom, eine Alkylgruppe mit 1 bis 10 Kohlenstoffatomen oder eine Alkenylgruppe mit 1 bis 10 Kohlenstoffatomen),
mindestens eines von $R^{1a}$ bis $R^{6a}$ ein Halogenatom ist,
Y ein Sauerstoffatom oder eine Alkylengruppe mit 1 bis 10 Kohlenstoffatomen ist,
m 0 oder 1 ist, und
p eine ganze Zahl von nicht weniger als 0 ist,
worin das Silan-Rohmaterial (a) zusätzlich zu der Silanverbindung (a1) die durch die folgende allgemeine Formel (II) dargestellte Silanverbindung (a2) umfasst;

$$R^{1b}SiR^{2b}R^{3b}-(Y'_{m'}-SiR^{4b}R^{5b})_{p'}-R^{6b} \qquad (II)$$

worin $R^{1b}$ bis $R^{6b}$ jeweils unabhängig voneinander ein Wasserstoffatom, eine Alkylgruppe mit 1 bis 10 Kohlenstoffatomen, eine Alkenylgruppe mit 2 bis 5 Kohlenstoffatomen, eine Arylgruppe mit 6 bis 12 Kohlenstoffatomen, $Z-R^{7b}-$ (Z ist eine Hydroxylgruppe, eine Epoxygruppe, eine Acryloxygruppe, eine Methacryloxygruppe oder eine Polyoxyalkylengruppe, dargestellt durch $R^{a'}O-(R^{b'}O)_{c'}-$ ($R^{a'}$ ist ein Wasserstoffatom oder eine Alkylgruppe mit 1 bis 10 Kohlenstoffatomen, $R^{b'}$ ist eine Alkylengruppe mit 2 bis 4 Kohlenstoffatomen und c' ist eine ganze Zahl von 1 bis 15), und $R^{7b}$ ist eine Alkylengruppe mit 1 bis 10 Kohlenstoffatomen), $-OR^{8b}$ ($R^{8b}$ ist eine Alkylgruppe mit 1 bis 10 Kohlenstoffatomen oder eine Alkenylgruppe mit 1 bis 10 Kohlenstoffatomen), eine Hydroxylgruppe oder eine Acylgruppe sind,
mindestens eines von $R^{1b}$ bis $R^{6b}$ eine Hydroxylgruppe, eine $-OR^{8b}$-Gruppe ($R^{8b}$ ist eine Alkylgruppe mit 1 bis 10 Kohlenstoffatomen), $Z-R^{7b}-$ (Z ist eine Epoxygruppe, und $R^{7b}$ ist eine Alkylengruppe mit 1 bis 10 Kohlenstoffatomen) oder eine Acylgruppe ist,
Y' ein Sauerstoffatom oder eine Alkylengruppe mit 1 bis 10 Kohlenstoffatomen ist,
m' 0 oder 1 ist, und
p' eine ganze Zahl von nicht weniger als 0 ist und
worin das Wasser (B) in einer Menge von 100 bis 10.000 Gewichtsteilen bezogen auf 100 Gewichtsteile des Bindemittels (A) beigemengt ist.

**2.** Wässrige Beschichtungszusammensetzung gemäß Anspruch 1, worin das Bindemittel (A) ein Hydrolysekondensat und eine durch die folgende chemische Formel (III) dargestelltes Metalloxid umfasst, das Hydrolysekondensat erhalten wird, indem das Silanrohmaterial (a) einer Hydrolysereaktion und Kondensationsreaktion in Gegenwart eines Metalloxidsols (C) umfassend das Metalloxid unterzogen wird,

$$M_pO_r \qquad (III)$$

worin M Si, Al oder Ti ist und p und r jeweils unabhängig voneinander eine ganze Zahl von 1 bis 3 sind.

**3.** Wässrige Beschichtungszusammensetzung gemäß Anspruch 1 oder 2, die ferner ein Pigment umfasst, und ein Verhältnis ((PVC)/(CPVC)) einer Pigment-Volumen-Konzentration (PVC) zu einer kritischen Pigment-Volumen-Konzentration (CPVC) in der wässrigen Beschichtungszusammensetzung höher als 1 ist.

**4.** Wässrige Beschichtungszusammensetzung gemäß irgendeinem der Ansprüche 1 bis 3, die ferner ein Rostschutzpigment (D) umfasst.

**5.** Wässrige Beschichtungszusammensetzung gemäß Anspruch 4, wobei das Rostschutzpigment (D) Zinkpulver und/oder Zinklegierungspulver mit einem mittleren Partikeldurchmesser von 2 bis 20 $\mu$m umfasst.

**6.** Wässrige Beschichtungszusammensetzung gemäß irgendeinem der Ansprüche 1 bis 5, die ferner metallisches Molybdän und/oder eine Molybdänverbindung als weißen Rosthemmer (E) umfasst.

**7.** Verwendung der wässrigen Beschichtungszusammensetzung gemäß irgendeinem der Ansprüche 1 bis 3 als Bindemittelzusammensetzung.

**8.** Verwendung der wässrigen Beschichtungszusammensetzung gemäß irgendeinem der Ansprüche 4 bis 6 als Rostschutzbeschichtungszusammensetzung.

**9.** Verwendung gemäß Anspruch 8 zum Grundrostschutz.

**10.** Verwendung gemäß Anspruch 8, die für eine anorganische Dickschicht-Zink-Beschichtungszusammensetzung ist.

**11.** Grundrostschutzbeschichtungsverfahren für ein Stahlmaterial, umfassend das Auftragen der Beschichtungszusammensetzung gemäß irgendeinem der Ansprüche 4 bis 6 auf eine Oberfläche eines Stahlmaterials und das anschließende Härten der aufgetragenen Beschichtungszusammensetzung zur Bildung eines Grundrostschutzbeschichtungsfilms.

**12.** Rostschutzbeschichtungsverfahren für ein Stahlmaterial, umfassend das Auftragen der Beschichtungszusammensetzung gemäß irgendeinem der Ansprüche 4 bis 6 auf eine Oberfläche eines Stahlmaterials und das anschließende Härten der aufgetragenen Beschichtungszusammensetzung zur Bildung eines anorganischen Dickschicht-Zink-Rostschutzbeschichtungsfilms.

**13.** Stahlstruktur, die auf einer Oberfläche eines Stahlmaterials einen Grundrostschutzbeschichtungsfilm gebildet aus der Beschichtungszusammensetzung gemäß irgendeinem der Ansprüche 4 bis 6 aufweist.

**14.** Stahlstruktur, die auf einer Oberfläche eines Stahlmaterials einen anorganischen Dickschicht-Zink-Rostschutzbeschichtungsfilm gebildet aus der Beschichtungszusammensetzung gemäß irgendeinem der Ansprüche 4 bis 6 aufweist.

**Revendications**

**1.** Composition aqueuse de revêtement comprenant un liant (A) et de l'eau (B) ;
ledit liant (A) comprenant un condensat d'hydrolyse obtenu en soumettant une matière première silane (a) comprenant un composé silane (a1) représenté par la formule générale (I) suivante à une réaction d'hydrolyse et une réaction de condensation dans les conditions de pH de 0,4 à 8,0 ;

$$R^{1a}SiR^{2a}R^{3a}\text{-}\ (Y_m\text{-}SiR^{4a}R^{5a})_p\text{-}R^{6a} \qquad (I)$$

dans laquelle $R^{1a}$ à $R^{6a}$ sont chacun indépendamment un atome d'hydrogène, un atome d'halogène, un groupe alkyle de 1 à 10 atomes de carbone, un groupe alcényle de 2 à 5 atomes de carbone, un groupe aryle de 6 à 12 atomes de carbone, Z-$R^{7a}$- (Z est un atome d'halogène, un groupe hydroxyle, un groupe époxy, un groupe acryloxy, un groupe méthacryloxy ou un groupe polyoxyalkylène représenté par $R^aO\text{-}(R^bO)_c\text{-}$ ($R^a$ est un atome d'hydrogène ou un groupe alkyle de 1 à 10 atomes de carbone, $R^b$ est un groupe alkylène de 2 à 4 atomes de carbone, et c est un nombre entier de 1 à 15), et $R^{7a}$ est un groupe alkylène de 1 à 10 atomes de carbone), ou -$OR^{8a}$ ($R^{8a}$ est un atome d'hydrogène, un groupe alkyle de 1 à 10 atomes de carbone ou un groupe alcényle de 1 à 10 atomes de carbone),
au moins l'un de $R^{1a}$ à $R^{6a}$ est un atome d'halogène,
Y est un atome d'oxygène ou un groupe alkylène de 1 à 10 atomes de carbone,
m vaut 0 ou 1, et
p est un nombre entier non inférieur à 0.
dans laquelle ladite matière première silane (a) comprend un composé silane (a2) représenté par la formule générale (II) suivante en plus du composé silane (a1) ;

$$R^{1b}SiR^{2b}R^{3b}\text{-}\ (Y'_{m'}\text{-}\ SiR^{4b}R^{5b})_{p'}\text{-}\ R^{6b} \qquad (II)$$

dans laquelle $R^{1b}$ à $R^{6b}$ sont chacun indépendamment un atome d'hydrogène, un groupe alkyle de 1 à 10 atomes de carbone, un groupe alcényle de 2 à 5 atomes de carbone, un groupe aryle de 6 à 12 atomes de carbone, Z-$R^{7b}$- (Z est un groupe hydroxyle, un groupe époxy, un groupe acryloxy, un groupe méthacryloxy ou un groupe polyoxyalkylène représenté par $R^{a'}O\text{-}\ (R^{b'}O)_{c'}\text{-}$ ($R^{a'}$ est un atome d'hydrogène ou un groupe alkyle de 1 à 10 atomes de carbone, $R^{b'}$ est un groupe alkylène de 2 à 4 atomes de carbone, et c' est un nombre entier de 1 à 15), et $R^{7b}$ est un groupe alkylène de 1 à 10 atomes de carbone), -$OR^{8b}$ ($R^{8b}$ est un groupe alkyle de 1 à 10 atomes de carbone ou un groupe alcényle de 1 à 10 atomes de carbone), un groupe hydroxyle ou un groupe acyle,
au moins l'un de $R^{1b}$ à $R^{6b}$ est un groupe hydroxyle, un groupe -$OR^{8b}$ ($R^{8b}$ est un groupe alkyle de 1 à 10 atomes de carbone), Z-$R^{7b}$- (Z est un groupe époxy, et $R^{7b}$ est un groupe alkylène de 1 à 10 atomes de carbone), ou un groupe acyle, Y' est un atome d'oxygène ou un groupe alkylène de 1 à 10 atomes de carbone,

m' vaut 0 ou 1, et
p' est un nombre entier non inférieur à 0, et
dans laquelle l'eau (B) est mélangée dans une quantité de 100 à 10 000 parties en poids par rapport à 100 parties en poids du liant (A).

2. Composition de revêtement aqueuse selon la revendication 1, dans laquelle ledit liant (A) comprend un condensat d'hydrolyse et un oxyde métallique représenté par la formule chimique (III) suivante, ledit condensat d'hydrolyse obtenu en soumettant la matière première silane (a) à une réaction d'hydrolyse et une réaction de condensation en présence d'un sol d'oxyde métallique (C) comprenant l'oxyde métallique ;

$$M_pO_r \qquad (III)$$

dans laquelle M est Si, Al ou Ti, et p et r sont chacun indépendamment un nombre entier de 1 à 3.

3. Composition de revêtement aqueuse selon la revendication 1 ou 2, qui comprend en outre un pigment, et un rapport ((PVC)/(CPVC)) d'une concentration en volume de pigment (PVC) à une concentration en volume critique de pigment (CPVC) dans la composition de revêtement aqueuse est supérieur à 1.

4. Composition de revêtement aqueuse selon l'une quelconque des revendications 1 à 3, qui comprend en outre un pigment antirouille (D).

5. Composition de revêtement aqueuse selon la revendication 4, dans laquelle ledit pigment antirouille (D) comprend de la poudre de zinc et/ou de la poudre d'alliage de zinc ayant un diamètre moyen de particule de 2 à 20 $\mu$m.

6. Composition de revêtement aqueuse selon l'une quelconque des revendications 1 à 5, qui comprend en outre du molybdène métallique et/ou un composé de molybdène comme inhibiteur de la rouille blanche (E).

7. Utilisation de la composition de revêtement aqueuse selon l'une quelconque des revendications 1 à 3, comme composition de liant.

8. Utilisation de la composition de revêtement aqueuse selon l'une quelconque des revendications 4 à 6, comme composition de revêtement antirouille.

9. Utilisation selon la revendication 8, qui est destinée à la prévention de rouille primaire.

10. Utilisation selon la revendication 8, qui est en tant que composition de revêtement de zinc minéral de type revêtement épais.

11. Procédé de revêtement de protection antirouille primaire pour un matériau en acier, comprenant l'application de la composition de revêtement selon l'une quelconque des revendications 4 à 6 à une surface d'un matériau en acier et ensuite le durcissement de la composition de revêtement appliquée pour former un film de revêtement antirouille primaire.

12. Procédé de revêtement de protection antirouille pour un matériau en acier, comprenant l'application de la composition de revêtement selon l'une quelconque des revendications 4 à 6 à une surface d'un matériau en acier et ensuite le durcissement de la composition de revêtement appliquée pour former un film de revêtement antirouille de zinc minéral de type revêtement épais.

13. Structure en acier ayant, sur une surface d'un matériau en acier, un film de revêtement antirouille primaire formé à partir de la composition de revêtement selon l'une quelconque des revendications 4 à 6.

14. Structure en acier ayant, sur une surface d'un matériau en acier, un film de revêtement antirouille de zinc minéral de type revêtement épais formé à partir de la composition de revêtement selon l'une quelconque des revendications 4 à 6.

[Figure 1]

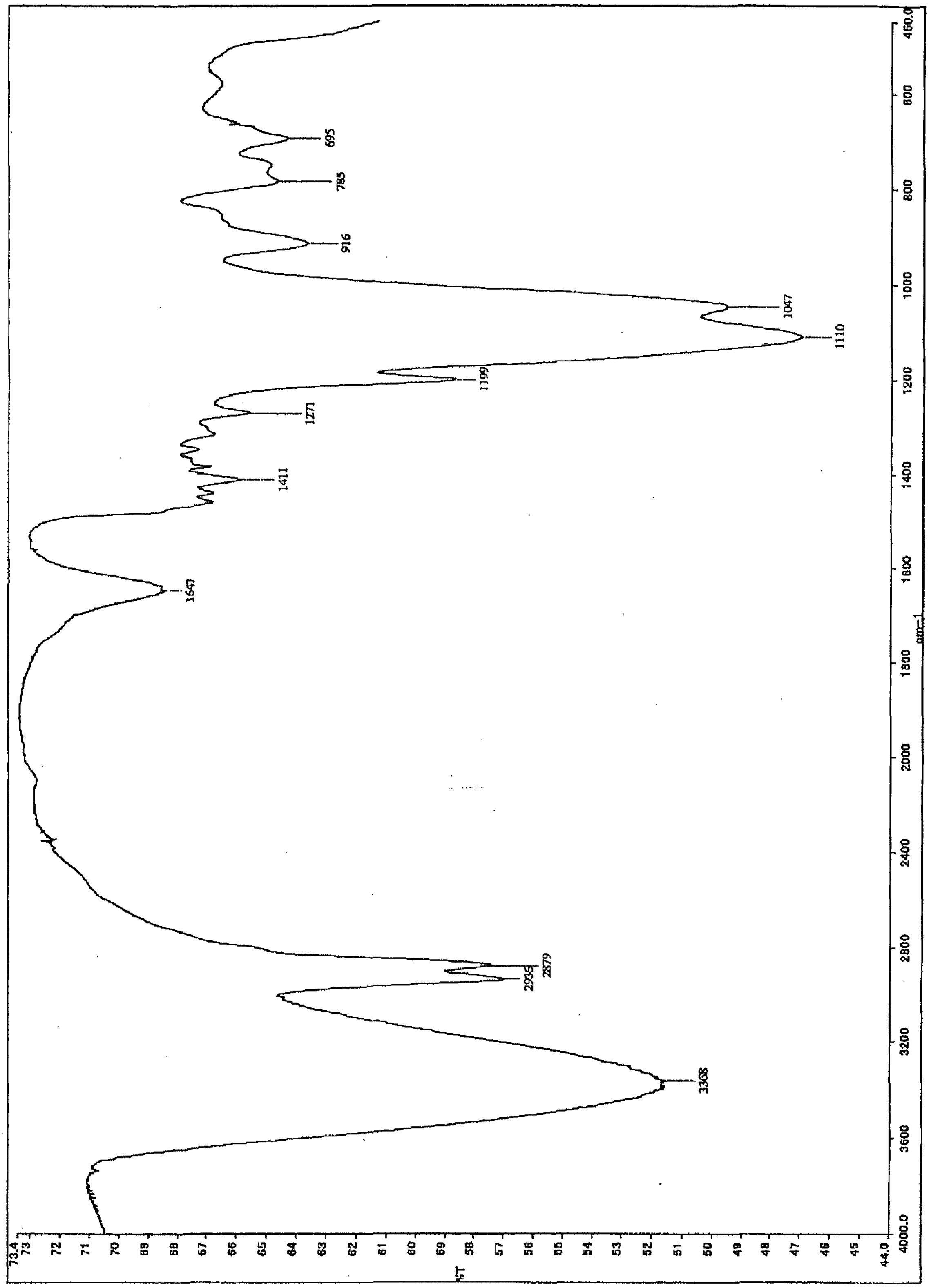

[Figure 2]

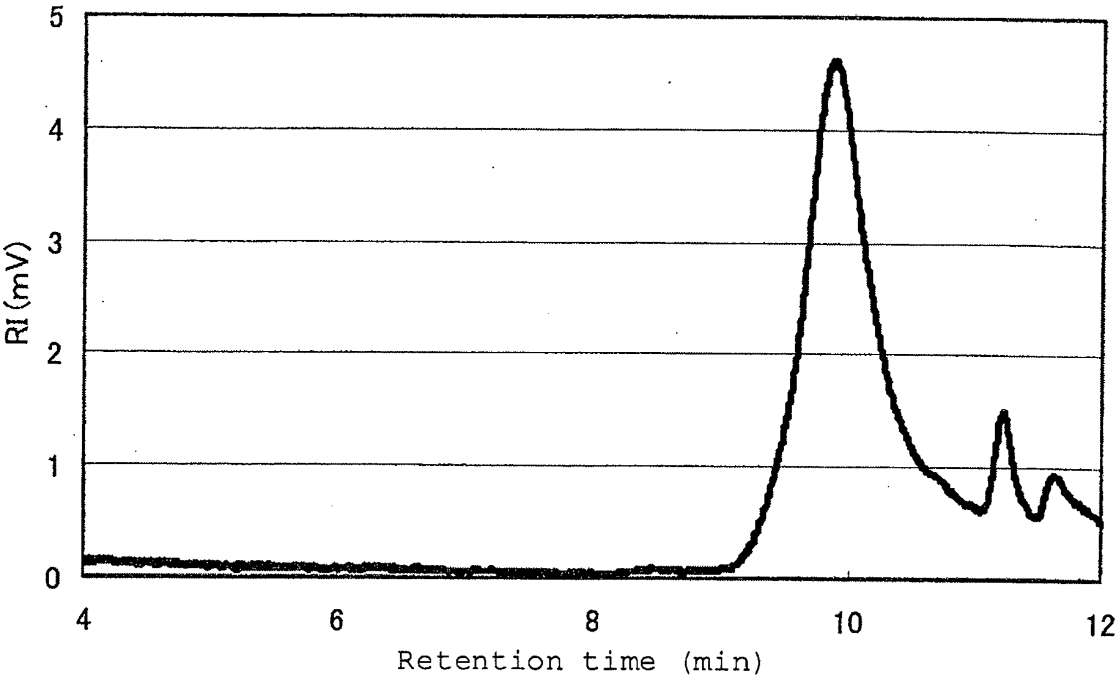

[Figure 3]

Si29 NMR

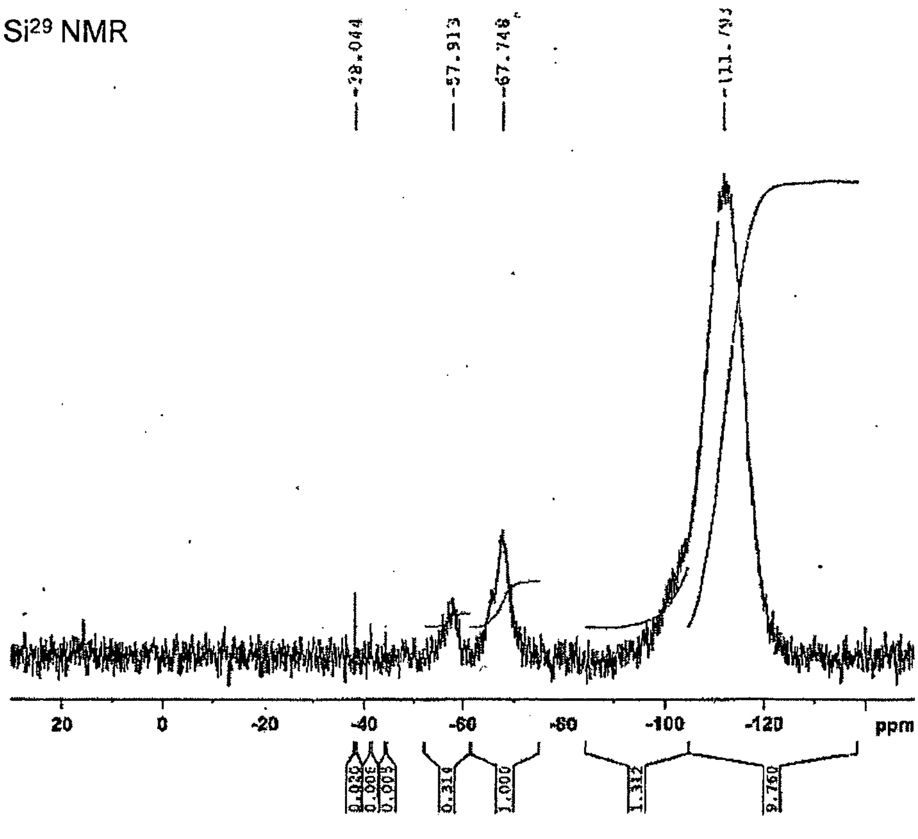

[Figure 4]

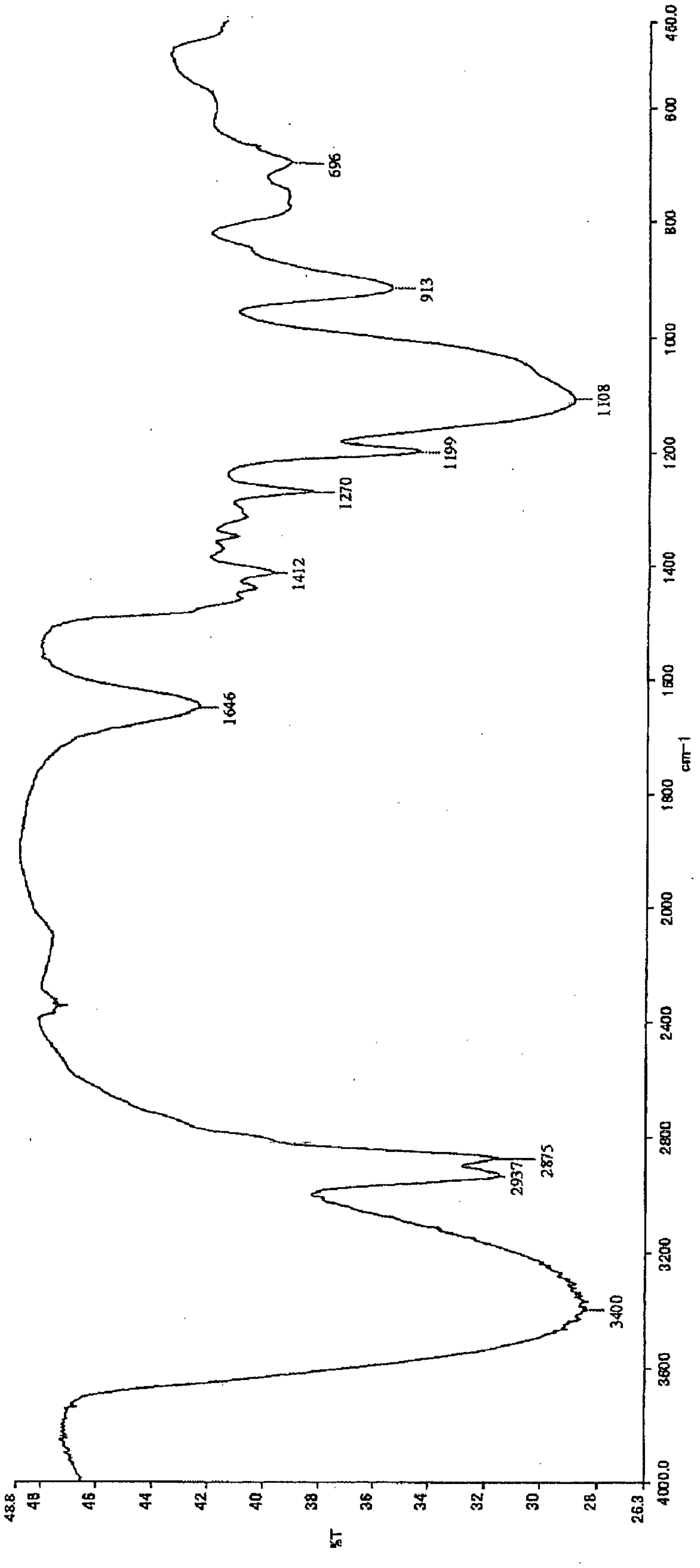
%T
cm-1
3400
2937
2875
1646
1412
1270
1199
1108
913
596
4000.0
3600
3200
2800
2400
2000
1800
1600
1400
1200
1000
800
600
450.0
48.8
48
46
44
42
40
38
36
34
32
30
28
26.3

[Figure 5]

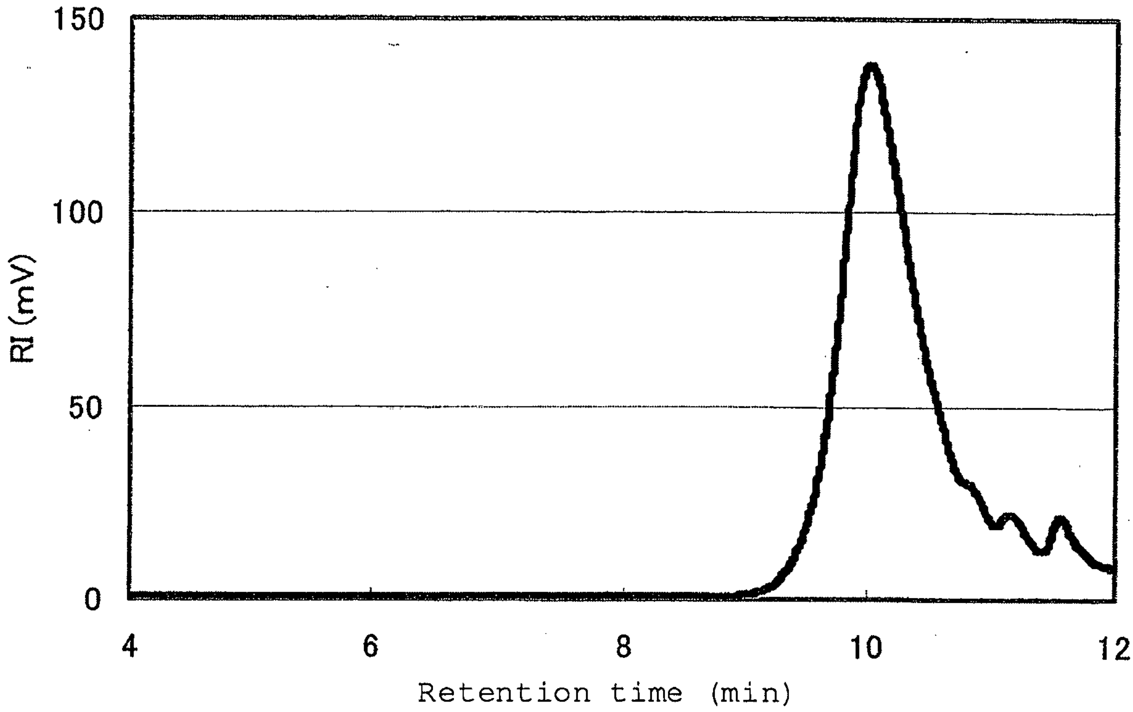

[Figure 6]

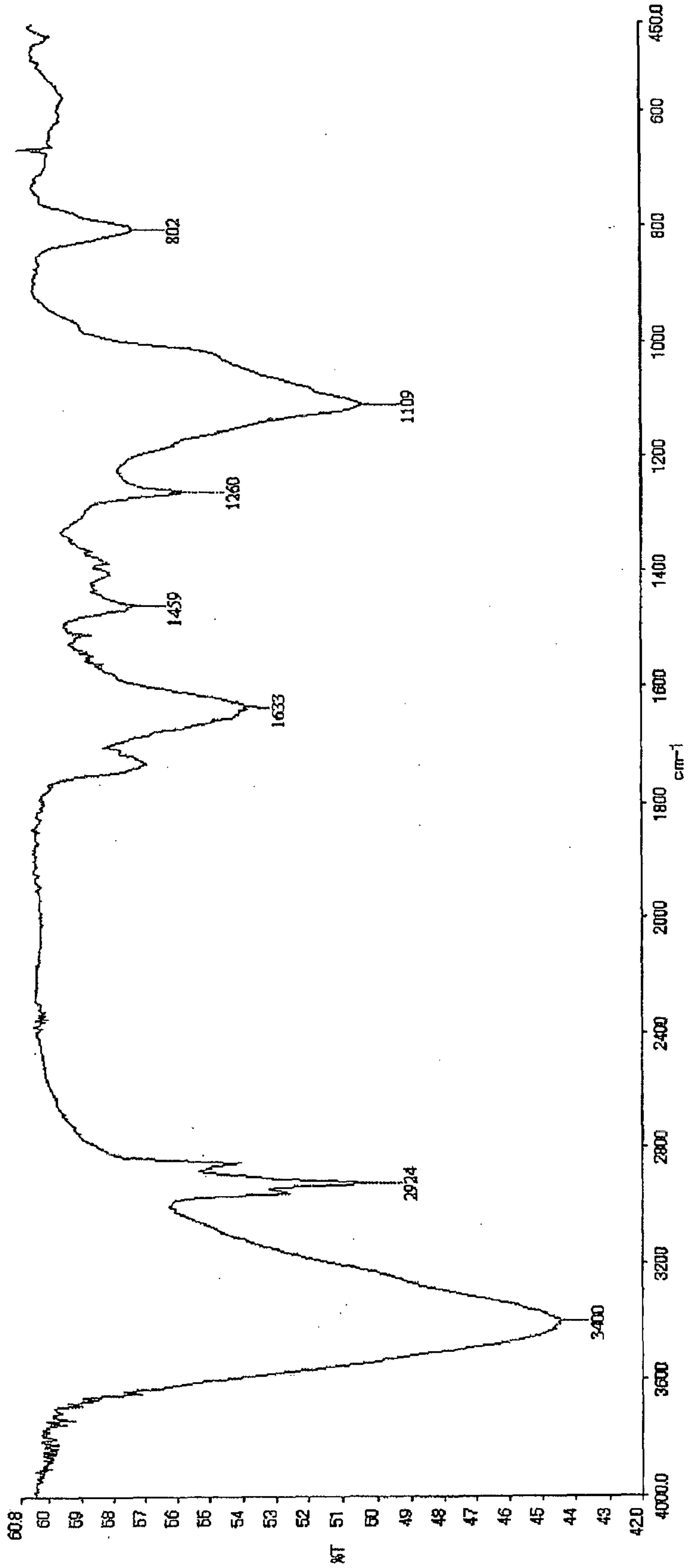

[Figure 7]

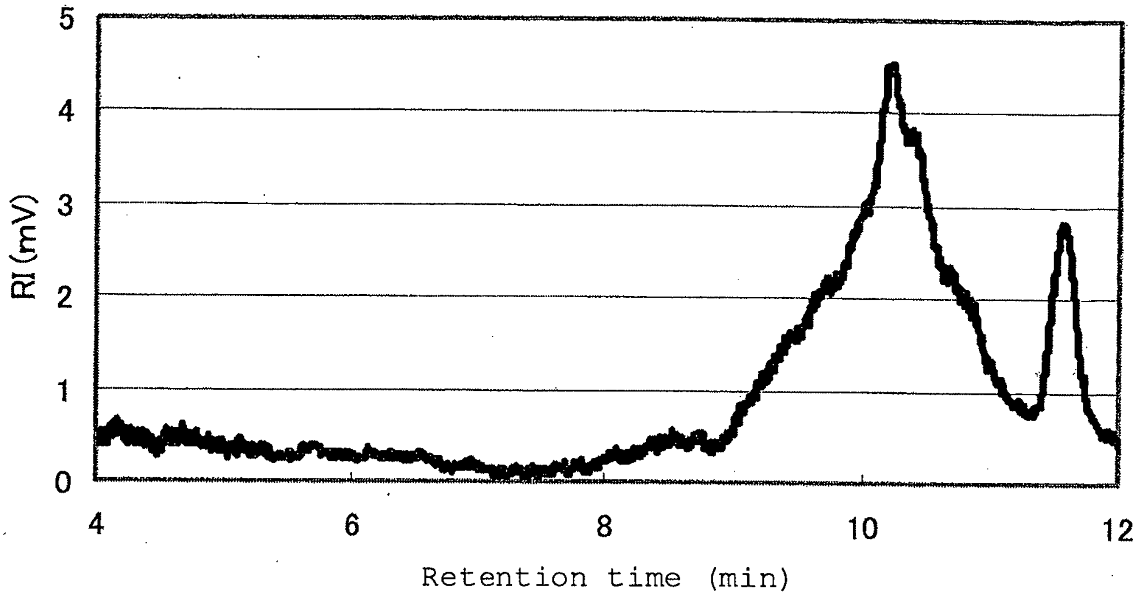

[Figure 8]

(a)

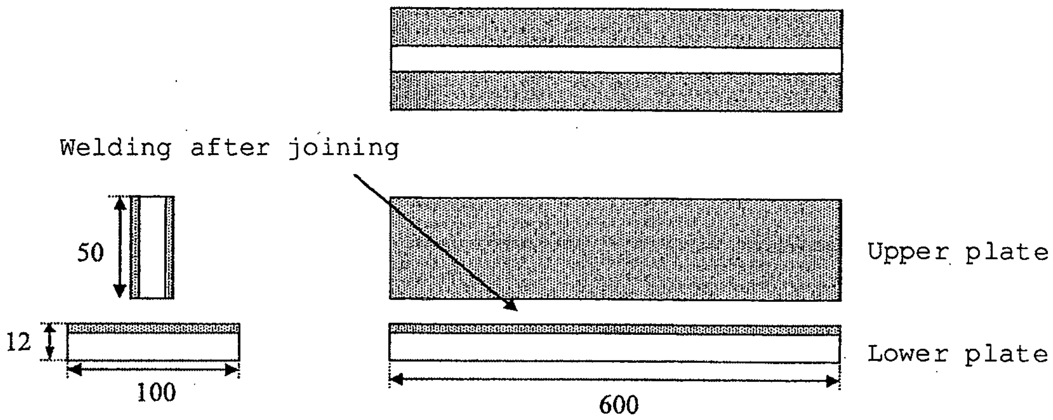
Welding after joining
50
12
100
600
Upper plate
Lower plate

(b)

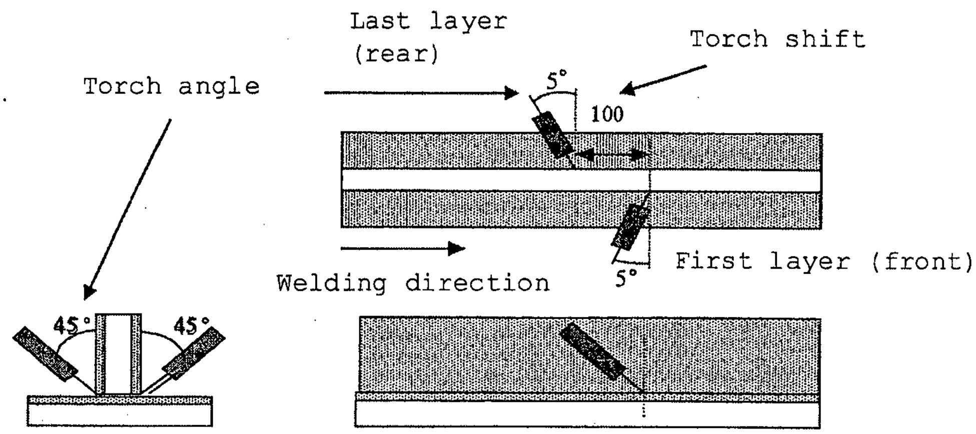
Last layer
(rear)
Torch shift
Torch angle
5°
100
First layer (front)
Welding direction
5°
45°
45°

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002121485 A
- JP 2000144020 A
- JP 2002105401 A
- JP 2008528741 A
- WO 2008003695 A
- JP 2008150537 A
- JP 56029904 B
- WO 2008128932 A
- JP 2005510584 B
- JP H06240207 B
- JP 2005510584 A